(19) Europäisches Patentamt
European Patent Office
Office européen des brevets

(11) **EP 2 162 706 B1**

(12) **EUROPÄISCHE PATENTSCHRIFT**

(45) Veröffentlichungstag und Bekanntmachung des Hinweises auf die Patenterteilung:
**31.12.2014   Patentblatt 2015/01**

(51) Int Cl.:
***G01F 1/32*** *(2006.01)*        ***G01N 9/26*** *(2006.01)*

(21) Anmeldenummer: **08774485.0**

(22) Anmeldetag: **27.06.2008**

(86) Internationale Anmeldenummer:
**PCT/EP2008/058326**

(87) Internationale Veröffentlichungsnummer:
**WO 2009/003966 (08.01.2009 Gazette 2009/02)**

(54) **MESSSYSTEM FÜR EIN IN EINER PROZESSLEITUNG STRÖMENDES MEDIUM**

MEASURING SYSTEM FOR A MEDIUM FLOWING IN A PROCESS LINE

SYSTEME DE MESURE POUR UN FLUIDE S'ECOULANT DANS UNE CONDUITE DE PROCESSUS

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **30.06.2007   DE 102007030690**

(43) Veröffentlichungstag der Anmeldung:
**17.03.2010   Patentblatt 2010/11**

(73) Patentinhaber: **Endress+Hauser Flowtec AG**
**4153 Reinach (CH)**

(72) Erfinder: **HÖCKER, Rainer**
**79761 Waldshut (DE)**

(74) Vertreter: **Andres, Angelika Maria**
**Endress+Hauser (Deutschland) AG+Co. KG**
**PatServe**
**Colmarer Strasse 6**
**79576 Weil am Rhein (DE)**

(56) Entgegenhaltungen:
**EP-A- 0 666 468          WO-A-99/09388**
**WO-A-2004/023081      WO-A-2004/038344**
**US-A1- 2006 025 955**

**Beschreibung**

Die Erfindung betrifft ein Meßsystem zum Messen einer Dichte eines in einer Prozeßleitung strömenden, entlang einer gedachten Strömungsachse des Meßsystems hinsichtlich eines thermodynamischen Zustandes veränderlichen, insb. zumindest anteilig kompressiblen, Mediums mittels eines Temperatursensors, eines Drucksensors sowie einer mit Temperatur- und Drucksensor jeweils zumindest zeitweise kommunizierende Meßelektronik, die zumindest zeitweise wenigstens einen Dichte-Meßwert erzeugt, der eine lokale Dichte des strömenden Mediums möglichst genau repräsentiert.

Zur Erfassung von prozeßbeschreibenden Meßgrößen strömender Medien, wie der thermodynamischen Zustandsgröße Dichte oder davon abgeleiteten Meßgrößen, und zur Erzeugung von die selbige Meßgröße entsprechend repräsentierenden Meßwerte werden in der industriellen Prozeß-Meßtechnik, insb. auch Im Zusammenhang mit der Automatisierung chemischer oder verfahrenstechnischer Prozesse, prozeßnah installierte Meßsysteme verwendet, die oftmals mittels zweier oder mehrerer miteinander kommunizierenden, jeweils direkt an oder in einer von Medium durchströmten Prozeßleitung angebrachten eigenständiger Feldmeßgeräten gebildet sind. Die zu erfassenden Meßgrößen können neben der Dichte beispielsweise auch andere, insb. sensorisch erfaßbar und insoweit direkt meßbare, thermodynamischen Zustandsgrößen wie z.B. Druck oder Temperatur, direkt oder indirekt meßbare Strömungsparameter, wie z.B. eine Strömungsgeschwindigkeit, ein Volumendurchfluß oder ein Massendurchfluß, oder andere komplexe Transportgrößen, wie z.B. ein Wärmefluß, wie auch weitere mediumsspezifische Meßgrößen, wie z.B. eine Viskosität, von einem zumindest anteilig flüssigen, pulver-, oder gasförmigen Medium sein, das in einer, beispielsweise als Rohrleitung ausgebildeten, Prozeßleitung entsprechend geführt wird.

So ist beispielsweise in der EP-A 666 468 ein Meßsystem zum Messen einer Dichte eines in einer Prozeßleitung strömenden Mediums gezeigt, welches Meßsystem umfaßt:

- einen an einer Temperaturmeßstelle plazierten, primär auf eine lokale Temperatur von vorbei strömendem Medium reagierenden Temperatursensor, der ausgestaltet ist, wenigstens ein von der lokalen Temperatur des zu messenden Mediums beeinflußtes Temperaturmeßsignal zu liefern,
- einen an einer Druckmeßstelle plazierten, primär auf einen lokalen Druck von vorbei strömendem Medium reagierenden Drucksensor, der ausgestaltet ist, wenigstens ein vom lokalen Druck im zu messenden Medium beeinflußtes Druckmeßsignal zu liefern,
- einen an einer Strömungsmeßstelle plazierten, primär auf eine Strömungsgeschwindigkeit des zu messenden Mediums reagierenden Strömungssensor, der ausgestaltet ist, wenigstens ein von der Strömungsgeschwindigkeit beeinflußtes Strömungsmeßsignal zu liefern, sowie
- eine mit dem Temperatursensor, dem Drucksensor sowie dem Strömungssensor jeweils kommunizierende Meßelektronik, die ausgestaltet ist, die Dichte indirekt zu messen, nämlich unter Verwendung sowohl des Temperaturmeßsignals als auch des Druckmeßsignals wie auch des Strömungsmeßsignals einen Dichte-Meßwert zu erzeugen, der eine Dichte des strömenden Medium repräsentiert.

Besonders für die indirekte - im folgenden daher auch als virtuell bezeichnete - Messung der Dichte, basierend auf mittels entsprechender Sensoren generierten Druck- und Temperatur-Meßsignalen, wie auch allfällig davon abgeleiten Meßgrößen, beispielsweise dem Massendurchfluß oder dem Volumendurchfluß, haben sich zahlreiche industrielle Standards etabliert, die eine weitgehend genormte, insoweit vergleichbare Berechnung empfehlen, insb. auch unter Verwendung direkt erfaßter und insoweit real gemessener Temperaturen und/oder Drücke, und die je nach Anwendungsbereich und Medium ihre Anwendung finden. Als Beispiele für solche Standards seien exemplarisch der Industrie-Standard "IAWPS Industrial Formulation 1997 for the Thermodynamic Properties of Water and Steam", International Association for the Properties of Water and Steam (IAWPS-IF97), "A.G.A. Manual for the Determination of Supercompressibility Factors for Natural Gas - PAR Research Project NX-19", Amercian Gas Association (AGA-NX19, Library of Congress No. 63-23358), der Internationale Standard ISO 12213:2006, Part 1 - 3 "Natural gas - Calculation of compressin factor", wie auch die darin zitierten A.G.A. Compressibility Factors for Natural Gas and Other Related Hydrocarbon Gases", Amercian Gas Association Transmission Measurement Committee Report No. 8 (AGA-8) und "High Accuracy Compressibility Factor Calculation for Natural Gases and Similar Mixtures by Use of a Truncated Viral Equation", GERG Technical Monograph TM2 1998 & Fortschritt-Berichte VDI, Series 6, No. 231 1989 (SGERG-88) genannt.

Oftmals dient die Ermittlung der Dichte weiterführend auch dazu, einen eher direkt gemessenen Massendurchfluß in einen - insoweit indirekt oder virtuell gemessenen - Volumendurchfluß umzurechnen oder umgekehrt. Zum direkten Messen der dafür als primäre Meßgröße dienenden Strömungsparametern, beispielsweise also einer lokalen Strömungsgeschwindigkeit, eines lokalen Volumendurchfluß bzw. eines lokalen Massendurchfluß, weisen Meßsysteme der in Rede stehenden Art wenigstens einen entsprechenden Strömungssensor auf, der - zumindest überwiegend auf einen primär zu erfassenden Strömungsparameter des strömenden Mediums oder auch Änderungen derselben reagierend - im Betrieb wenigstens ein von der primär erfaßten Meßgröße entsprechend beeinflußtes und diese möglichst genau repräsentierendes, insb. elektrisches, Meßsignal liefert. Der wenigstens eine Strömungssensor kann dabei als das Medium zumindest anteilig berührend, beispielsweise darin eintauchend, oder von außen durch die Wandung der Prozeßleitung oder eine Membran hindurch messend ausgebildet sein. Üblicherweise wird der Strömungssensor dabei mittels eines zumeist sehr komplexen Durchflußaufnehmers bereitgestellt, der unmittelbar in die Medium führende Prozeßleitung bzw. in einen Bypass entsprechend eingesetzt ist.

Marktgängige Durchflußaufnehmer sind üblicherweise als vorkonfektionierte und vorab kalibrierte Baueinheit mit einem in den Verlauf der jeweiligen Prozeßleitung einsetzbaren Trägerrohr sowie wenigstens einem daran entsprechende vormontierten physikalisch-elektrische Geberelement realisiert, welches letztlich, gegebenenfalls im Zusammenspiel mit dem Trägerrohr selbst und/oder weiteren, insb. passiv-invasiven Komponenten des Durchflußaufnehmers, wie z.B. in die Strömung hineinragende Strömungshindernisse, und/oder aktiven Komponenten des Durchflußaufnehmers, wie z.B. außen am Trägerrohr plazierte, Magnetfeld erzeugende Spulenanordnung oder Schall generierende Wandler, den wenigstens einen das Meßsignal liefernden Strömungssensor. Als in der industriellen Meßtechnik weit verbreitet sind im besonderen magnetisch-induktive Durchflußaufnehmer, die Laufzeit von in strömendes Medium eingekoppelten Ultraschallwellen auswertende Durchflußaufnehmer, Wirbel-Durchflußaufnehmer, insb. Vortex-Durchflußaufnehmer, Durchflußaufnehmer mit schwingendem Meßrohr, Druckdifferenzen auswertenden Durchflußaufnehmer oder thermische Durchflußmeßaufnehmer zu nennen. Der prinzipielle Aufbau und die Funktionsweise von magnetisch-induktiven Durchflußaufnehmern ist z.B. in der EP-A 1 039 269, US-A 60 31 740, US-A 55 40 103, US-A 53 51 554, US-A 45 63 904 oder solcher Ultraschall- Durchflußaufnehmern z.B. in der US-B 63 97 683, der US-B 63 30 831, der US-B 62 93 156, der US-B 61 89 389, der US-A 55 31 124, der US-A 54 63 905, der US-A 51 31 279, der US-A 47 87 252 hinlänglich beschrieben. Da auch die anderen der oben erwähnten, in industriellen Durchflußmeßaufnehmern üblicherweise umgesetzten Meßprinzipien dem Fachmann ebenfalls hinreichend bekannt sind, kann an dieser Stelle auf eine weitere Erläuterung dieser wie auch anderer in der industriellen Meßtechnik etablierten, mittels Durchflußmeßaufnehmer realisierter Meßprinzipien ohne weiteres verzichtet werden.

Bei Strömungsparameter erfassenden industriellen Meßsystemen handelt es sich oftmals um solche, bei denen wenigstens eine der tatsächliche Meßsignale liefernde - im folgenden daher als real bezeichnete - Meßstellen mittels eines kompakten In-Line-Meßgerät mit einem Durchflußaufnehmer der vorgenannten Art gebildet ist. Weiterführende Beispiele für derartige, dem Fachmann an und für sich bekannte, insb. mittels kompakter In-line-Meßgeräte mit einem Durchflußaufnehmer gebildete, Meßsysteme sind zudem u.a. in der EP-A 605 944, EP-A 984 248, EP-A 1 767 908, GB-A 21 42 725, US-A 43 08 754, US-A 44 20 983, US-A 44 68 971, US-A 45 24 610, US-A 47 16 770, US-A 47 68 384, US-A 50 52 229, US-A 50 52 230, US-A 51 31 279, US-A 52 31 884, US-A 53 59 881, US-A 54 58 005, US-A 54 69 748, US-A 56 87 100, US-A 57 96 011, US-A 58 08 209, US-A 60 03 384, US-A 60 53 054, US-A 60 06 609, US-B 63 52 000, US-B 63 97 683, US-B 65 13 393, US-B 66 44 132, US-B 66 51 513, US-B 66 51 512, US-B 68 80 410, US-B 69 10 387, US-B 69 38 496, US-B 69 88 418, US-B 70 07 556, US-B 70 10 366, US-A 2002/0096208, US-A 2004/0255695, US-A 2005/0092101, US-A 2006/0266127, WO-A 88/02 476, WO-A 88/02 853, WO-A 95/08758, WO-A 95/16 897, WO-A 97/25595, WO-A 97/46851, WO-A 98/43051, WO-A 00/36 379, WO-A 00/14 485, WO-A 01/02816, WO-A 02/086 426, WO-A 04/023081 oder WO-A 04/081500, WO-A 05/095902 wie auch in den eigenen, nicht vorveröffentlichten Anmeldungen DE 102006034296.8 und 102006047815.0 detailiert beschrieben.

Zur Weiterverarbeitung oder Auswertung von im Meßsystem erzeugten Meßsignalen weist dieses ferner wenigstens eine entsprechende Meßelektronik auf. Die mit dem jeweiligen Meßaufnehmer, insb. auch dem wenigstens einen Geberelement, in geeigneter Weise kommunizierende Meßelektronik erzeugt im Betrieb unter Verwendung des wenigstens einen Meßsignals wiederholt wenigstens einen die Meßgröße momentan repräsentierenden Meßwert, beispielsweise also einen Massendurchfluß-Meßwert, Volumendurchfluß-Meßwert, einen Dichte-Meßwert, einen Viskositäts-Meßwert, einen Druck-Meßwert, einen Temperatur-Meßwert oder dergleichen. Die Meßwerte, insb. der indirekt oder auch virtuell gemessene Dichte-Meßwert, werden dabei oftmals mittels hoch komplexer Berechnungen nach einem der erwähnten Industriestandards ermittelt, beispielsweise "AGA 4", "AGA 8", "AGA-NX19", "IAWPS-IF97", "SGERG-88" oder dergleichen.

Zur Aufnahme der Meßelektronik umfassen solche Meßsysteme zumeist ein entsprechendes Elektronik-Gehäuse, das, wie z.B. in der US-A 63 97 683 oder der WO-A 00/36 379 vorgeschlagen, vom Meßaufnehmer entfernt angeordnet und mit diesem nur über eine flexible Leitung verbunden sein kann. Alternativ oder in Ergänzung dazu kann das Elektronik-Gehäuse aber auch, wie z.B. auch in der EP-A 903 651 oder der EP-A 1 008 836 gezeigt, unter Bildung eines kompakten In-Line-Meßgeräts - beispielsweise eines Coriolis-Massedurchfluß-/Dichte-Meßgeräts, eines Ultraschall-Durchflußmeßgeräts, eines Vortex-Durchflußmeßgeräts, eines thermischen Durchflußmeßgeräts, eines magnetisch-induktiven Durchflußmeßgerät oder dergleichen - direkt am Meßaufnehmer oder einem den Meßaufnehmer separat einhausenden Meßaufnehmer-Gehäuse angeordnet sein. In letzterem Fall dient das Elektronik-Gehäuse, wie beispielsweise in der EP-A 984 248, der US-A 47 16 770 oder der US-A 63 52 000 gezeigt, oftmals auch dazu, einige mechanische Komponenten des Meßaufnehmers mit aufzunehmen, wie z.B. sich unter mechanischer Einwirkung betriebsmäßig verformende membran-, stab-, hülsen- oder rohrförmige Deformation- oder Vibrationskörper, vgl. hierzu auch die eingangs erwähnte US-B 63 52 000.

Bei Meßsystemen der beschriebenen Art ist die jeweilige Meßelektronik üblicherweise über entsprechende elektrische Leitungen und/oder drahtlos per Funk mit einem von der Meßelektronik zumeist räumlich entfernt angeordneten und zumeist auch räumlich verteilten übergeordneten elektronischen Datenverarbeitungssystem elektrisch verbunden, an das die vom jeweiligen Meßsystem erzeugten Meßwerte mittels eines diese entsprechend tragenden Meßwertesignals zeitnah weitergegeben werden. Meßsystem der beschriebenen Art sind zudem üblicherweise mittels eines innerhalb des übergeordneten Datenverarbeitungssystems vorgesehen - leitungsgebundenen und/oder funkbasierten - Datenübertragungsnetzwerks miteinander und/oder mit entsprechenden elektronischen Prozeß-Steuerungen verbunden, beispielsweise vor Ort installierte Speicherprogrammierbare Steuerungen (SPS) oder in einer entfernten Leitwarte installierte Prozeß-Leitrechnern, wohin die mittels des Meßsystems erzeugten und in geeigneter Weise digitalisierten und entsprechend codierten Meßwerte weitergesendet werden. Mittels Prozeß-Leitrechner können, unter Verwendung entsprechend installierter Softwarekomponenten, die übertragenen Meßwerte weiterverarbeitet und als entsprechende Meßergebnisse z.B. auf Monitoren visualisiert und/oder in Steuersignale für andere als Stellgeräte ausgebildete Feldgeräte, wie z.B. Magnet-Ventile, Elektro-Motoren etc., umgewandelt werden. Dementsprechend dient das Datenverarbeitungssystem üblicherweise auch dazu, das von der Meßelektronik gelieferte Meßwertesignal entsprechend den Anforderungen nachgelagerter Datenübertragungsnetzwerke zu konditionieren, beispielsweise geeignet zu digitalisieren und gegebenenfalls in ein entsprechendes Telegramm umzusetzen, und/oder vor Ort auszuwerten. Dafür sind in solchen Datenverarbeitungssystemen mit den jeweiligen Verbindungsleitungen elektrisch gekoppelte Auswerteschaltungen vorgesehen, die die von der jeweiligen Meßelektronik empfangenen Meßwerte vor- und/oder weiterverarbeiten sowie, falls erforderliche, geeignet konvertieren. Zur Datenübertragung dienen in solchen industriellen Datenverarbeitungssystemen zumindest abschnittsweise, insb. serielle, Feldbusse, wie z.B. FOUNDATION FIELDBUS, CAN, CAN-OPEN RACKBUS-RS 485, PROFIBUS etc., oder beispielsweise auch Netzwerke auf Basis des ETHERNET-Standards sowie die entsprechenden, zumeist anwendungsübergreifend standardisierten Übertragungs-Protokolle.

Üblicherweise kann neben einer solchen Prozeßvisualisierung, -überwachung und -steuerung mittels Leitrechner zudem auch eine Fernbedienung, -parametrierung und/oder -überwachung der angeschlossenen Meßsystems realisiert werden. Dementsprechend erlauben Meßelektroniken moderner Feldmeßgeräte neben der eigentlichen Meßwertübertragung auch die Übertragung von verschiedenen, im Meßsystem verwendeten Einstellungs- und/oder Betriebsparmeter, wie z.B. Kalibrierdaten, Meßwertbereiche oder auch feldgerätintern ermittelte Diagnosewerte. Dem Rechnung tragend können über vorgenannte, zumeist hinsichtlich der Übertragungsphysik und/oder der Übertragungslogik hybride Datenübertragungsnetzwerke dem Meßsystem zugewiesene Betriebsdaten zumeist ebenfalls versendet werden.

Neben den für die Verarbeitung und Konvertierung der von den jeweils angeschlossenen Meßelektroniken gelieferten Meßwerte erforderlichen Auswerteschaltungen weisen übergeordnete Datenverarbeitungssysteme der beschriebene Art zumeist auch der Versorgung der angeschlossenen Meßelektroniken und insowiet auch des jeweiligen Meßsystems mit elektrischer Energie dienende elektrische Versorgungsschaltungen auf, die eine entsprechende, ggf. direkt vom angeschlossenen Feldbus gespeiste, Versorgungsspannung für die jeweilige Meßgerät-Elektronik bereitstellen und die daran angeschlossenen elektrische Leitungen sowie die jeweiligen Meßelektroniken durchfließende elektrische Ströme treiben. Eine Versorgungsschaltung kann dabei beispielsweise genau einer Meßelektronik jeweils zugeordnet und zusammen mit der dem jeweiligen Meßgerät zugeordneten Auswerteschaltung - beispielsweise zu einem entsprechenden Feldbusadapter vereint - in einem gemeinsamen, z.B. als Hutschienen-Modul ausgebildeten, Gehäuse untergebracht sein. Es ist aber durchaus auch üblich, solche übergeordneten Auswerteschaltungen und Versorgungsschaltungen jeweils in separaten, ggf. voneinander räumlich entfernten Gehäusen unterzubringen und über externe Leitungen miteinander entsprechend zu verdrahten.

Bei industriellen Meßsystemen der in Rede stehenden Art handelt es sich oftmals insoweit um räumlich verteilte Meßsysteme, als an entlang einer durch die Prozeßleitung definierte Strömungsachse des Meßsystems voneinander beabstandeten realen Meßstellen jeweils mehrere Meßgrößen von gleicher und/oder verschiedener Art lokal sensorisch erfaßt und der gemeinsamen Meßelektronik inform entsprechender elektrischer Meßsignale leitungsgebunden, beispielsweise auch im sogenannten HART®-MULTIDROP-Verfahren oder auch im sogenannten Burst-Mode-Verfahren, und/oder drahtlos, insb. per Funk und/oder optisch, zugeführt werden, gegebenenfalls auch codiert in ein Digitalsignal oder in ein digital übertragenes Telegramm. Für den vorbeschriebenen Fall, daß solch ein Meßsystem mittels eines Durchflußaufnehmers gebildet ist, können so beispielsweise zusätzlich zu der wenigstens einen praktisch direkt erfaßten, als primäre Meßgröße dienenden Strömungsparameter, beispielsweise dem Volumendurchfluß, unter Verwendung auch weiter entfernt erfaßter Meßgrößen, beispielsweise einer entfernten lokalen Temperatur oder einem entfernten lokalen Druck im Medium, auch abgeleitete sekundäre Meßgrößen, wie z.B. ein Massendurchfluß und/oder eine Dichte, mittels derselben Meßelektronik zumindest indirekt ermittelt und insoweit zumindest virtuell gemessen werden.

Experimentelle Untersuchungen an verteilten Meßsystemen der in Rede stehenden Art, beispielsweise solchen, die - wie u.a. auch in US-B 66 51 512 gezeigt - mittels direkt gemessenem Volumendurchfluß sowie virtuell gemessener Dichte einen Massedurchfluß als indirekte Meßgröße ermitteln, haben ergeben, daß, insb. auch trotz der Verwendung intern wie extern nachweislich sehr präzise ermittelter Meßgrößen, in den für das jeweilige Kaliber der Prozeßleitung üblichen Meßbereichen erhebliche Fehler im Ergebnis einer im obigen Sinne virtuellen Messung auftreten können, die durchaus im Bereich von etwa 5% der tatsächlichen Meßgröße oder sogar darüber liegen können. Dies im besonderen auch bei der Ermittlung der Meßgrößen, wie z.B. dem Volumendurchfluß, der Temperatur oder dem Druck, als real gemessene Zwischengröße und/oder der Dichte als virtuell gemessene Zwischengröße, gemäß den in vorgenannten Industriestandards empfohlenen Meß- und Berechnungsverfahren.

Weiterführende Vergleichsuntersuchungen haben dabei ferner gezeigt, daß vorgenannte Meßfehler u.a. eine gewisse Abhängigkeit von der momentanen Reynolds-Zahl der Strömung wie auch vom momentanen thermodynamischen Zustand des Mediums aufweisen können. Allerdings hat es sich in diesem Zusammenhang auch gezeigt, daß in zahlreichen industriellen Anwendungen, insb. solche mit kompressiblen und/oder zumindest 2-phasigen Medien, die Reynolds-Zahl bzw. der thermodynamische Zustand des Mediums nicht nur zeitlich sondern in hohem Maße auch räumlich veränderlich sein kann, vornehmlich in Richtung der Strömungsachse des Meßsystems. Neben Anwendungen mit zumindest anteilig kompressiblen Medien, zeigen zudem besonders auch solche Anwendungen eine erhebliche Querempfindlichkeit auf räumliche Varianzen der Reynolds-Zahl oder des thermodynamischen Zustands, bei denen die Messung zumindest einer der Meßgrößen an einer Meßstelle erfolgt - real oder virtuell - , an der die Prozeßleitung ein von wenigstens einer der jeweils anderen - realen oder virtuellen - Meßstellen abweichendes Kaliber aufweist. Dies ist z.B. bei der Verwendung von den Leitungsquerschnitt reduzierenden Strömungskonditionieren - wie z.B. als sogenannte Reducer dienende Düsen - gegeben, die gelegentlich im Einlaufbereich von Durchflußmeßaufnehmern Verwendung finden, oder auch bei der Verwendung von den Leitungsquerschnitt vergrößernden Strömungskonditionieren - sogenannten Diffusoren - im Auslaufbereich von Durchflußmeßaufnehmern. Meßsysteme mit solchen Reducern und/oder Diffusoren sind beispielsweise in der GB-A 21 42 725, US-A 58 08 209, US-A 2005/0092101, US-B 68 80 410, US-B 66 44 132, US-A 60 53 054, US-B 66 44 132, US-A 50 52 229 oder der US-B 65 13 393 beschrieben und werden beispielsweise zur Verbesserung der Meßgenauigkeit von Durchflußmeßaufnehmern verwendet. Es ist hierbei ferner ermittelt worden, daß vorgenannte, auf der Verwendung von Reducern und/oder Diffusoren basierende Querempfindlichkeiten für Kaliberverhältnisse zwischen etwa 0,6 und 0,7 erheblich sind, während deren Einfluß für Kaliberverhältnisse mit extremen Durchmessersprüngen von kleiner als 0,2 durchaus vernachlässigbar ist.

Ein weiterer Anwendungsfall mit einer für die angestrebte Meßgenauigkeit signifikanten Empfindlichkeit auf die vorgenannten Varianzen ist des weiteren auch durch solche Meßsysteme gegeben, die für die Durchflußmessung schwerer Gase, wie etwa Kohlendioxid oder auch Phosgen bzw. langkettige Kohlenstoffverbindungen, mit einem Molekulargewicht von über 30 g/mol vorgesehen sind.

Die vorbeschriebene räumliche Varianz der Reynolds-Zahl wiederum kann nunmehr dazu führen, daß praktisch jede der vorgenannten, voneinander beabstandeten realen Meßstellen des verteilten Meßsystems im Betrieb eine lokale Reynoldszahl aufweist, die von den lokalen Reynoldszahlen der jeweils anderen der mitgenutzten Meßstellen in erheblichem Maße abweicht. Gleichermaßen würde auch besagte Varianz des thermodynamischen Zustands dazu führen, daß voneinander beabstandete Meßstellen des verteilten Meßsystems im Betrieb voneinander verschiedene thermodynamische Zustände aufweisen können. In Anbetracht dessen wäre also jede der verteilt gemessenen Meßgrößen eigentlich mit der jeweils zugehörige lokale Reynoldszahl und/oder dem jeweils zugehörigen lokalen thermodynamischen Zustands entsprechend zu relativieren, was in Ermangelung der dafür erforderlichen Information, nämlich die jeweils anderen, jedoch entfernt gemessen Zustandsgrößen, nicht ohne weiteres möglich ist. Würde beispielsweise die Dichte und/oder der Massendurchfluß basierend auf den gemessenen Zustandsgrößen Druck und Temperatur ohne Berücksichtigung der Varianz von Reynoldszahl bzw. thermodynamischem Zustand berechnet, ergäbe sich ein zusätzlicher Meßfehler, der im wesentlichen eine quadratische Abhängigkeit von der Strömungsgeschwindigkeit aufweist. Dementsprechend ist für die vorgenannte Konfiguration bei Strömungsgeschwindigkeiten von deutlich weniger als 10 m/s für die derzeit angestrebten Meßgenauigkeiten von etwa 0.1 % bis 0.5% praktisch nicht mehr signifikant.

Ausgehend von den zuvor beschriebenen Nachteilen von Meßsystemen der beschriebenen Art, insb. solchen die einen Massendurchfluß oder einen Volumendurchfluß ermitteln, besteht eine Aufgabe der Erfindung darin, die Meßgenauigkeit für solche sekundären Meßgrößen zu erhöhen, die unter Verwendung räumlich verteilt erfaßter thermodynamischer Zustandsgrößen, wie Druck und/oder Temperatur, ermittelt werden.

Zur Lösung der Aufgabe besteht die Erfindung in einem Meßsystem gemäß Anspruch 1.

Nach einer ersten Ausgestaltung der Erfindung ist vorgesehen, daß die Meßelektronik zumindest zeitweise mit dem Strömungssensor kommuniziert und wobei die Meßelektronik unter Verwendung zumindest des Strömungsmeßsignals einen, insb. digitalen, Volumendurchfluß-Meßwert ermittelt, der eine Volumendurchflußrate des strömenden Mediums momentan repräsentiert. Nach einer Weiterbildung dieser Ausgestaltung der Erfindung ermittelt die Meßelektronik unter Verwendung zumindest des Dichte-Meßwert und des Volumendurchfluß-Meßwert einen, insb. digitalen, Massedurchfluß-Meßwert, der eine Massendurchflußrate des strömenden Mediums momentan repräsentiert.

Nach einer zweiten Ausgestaltung der Erfindung ist vorgesehen, daß die Meßelektronik basierenden auf dem Temperaturmeßsignal wiederkehrend einen, insb. digitalen, Temperatur-Meßwert generiert, der eine lokale Temperatur des Mediums, insb. die Temperatur des Mediums an der Temperaturmeßstelle, momentan repräsentiert.

Nach einer dritten Ausgestaltung der Erfindung ist vorgesehen, daß die Meßelektronik basierenden auf dem Druckrmeßsignal wiederkehrend einen, insb. digitalen, Druck-Meßwert generiert, der einen im Medium, insb. an der Druckmeßstelle, herrschenden Druck momentan repräsentiert.

Nach einer vierten Ausgestaltung der Erfindung ist vorgesehen, daß das Medium an der virtuellen Dichtemeßstelle einen thermodynamischen Zustand aufweist, der einem thermodynamischen Zustand des Mediums an der Geschwindigkeitsmeßstelle entspricht.

Nach einer fünften Ausgestaltung der Erfindung ist vorgesehen, daß die virtuelle Dichtemeßstelle und die Strömungsmeßstelle einander zumindest teilweise überlappen, insb. koinzident sind.

Nach einer sechsten Ausgestaltung der Erfindung ist vorgesehen, daß die Temperaturmeßstelle und die Strömungsmeßstelle einander zumindest teilweise überlappen, insb. koinzident sind.

Nach einer siebenten Ausgestaltung der Erfindung ist vorgesehen, daß die Druckmeßstelle und die Strömungsmeßstelle einander zumindest teilweise überlappen.

Nach einer achten Ausgestaltung der Erfindung ist vorgesehen, daß der Dichte-Meßwert, eine örtliche Dichte des Mediums im Bereich des Strömungssensors repräsentiert.

Nach einer neunten Ausgestaltung der Erfindung ist vorgesehen, daß die Meßelektronik zumindest zeitweise mit dem Strömungssensor kommuniziert, und wobei die Meßelektronik unter Verwendung zumindest des Strömungsmeßsignals einen, insb. digitalen, Geschwindigkeits-Meßwert ermittelt, der die Strömungsgeschwindigkeit des strömenden Mediums momentan repräsentiert.

Nach einer zehnten Ausgestaltung der Erfindung ist vorgesehen, daß die Meßelektronik einen, insb. nichtflüchtigen, Datenspeicher aufweist, der wenigstens einen lediglich das aktuell zu messenden Medium spezifizierenden Meßsystemparameter, insb. eine spezifische Wärmekapazität, $c_p$, des aktuell zu messenden Mediums, eine molare Masse, $n$, des Mediums und/oder die durch den molekularen Aufbau des Mediums bestimmte Anzahl, $f$, von Schwingungsfreiheitsgraden der Atome bzw. Moleküle des Mediums, zumindest zeitweise vorhält.

Nach einer elften Ausgestaltung der Erfindung ist vorgesehen, daß die Meßelektronik den Dichte-Meßwert unter Verwendung des zumindest einen lediglich das aktuell zu messenden Medium spezifizierenden Meßsystemparameters ermittelt.

Nach einer zwölften Ausgestaltung der Erfindung ist vorgesehen, daß die Meßelektronik einen, insb. nichtflüchtigen, Datenspeicher aufweist, der wenigstens einen sowohl das aktuell mittels des Meßsystems zu messenden Medium als auch eine momentane Einbausituation des Meßsystems spezifizierenden Meßsystemparameter zumindest zeitweise vorhält, wobei die Einbausituation durch die Anordnung von Druck-, Temperatur- und Dichtemeßstelle relativ zueinander sowie jeweils durch Form und Größe der Prozeßleitung im Bereich der Druck-, Dichteund/oder Temperaturmeßstelle mitbestimmt ist. Nach einer Weiterbildung dieser Ausgestaltung der Erfindung ermittelt die Meßelektronik den Dichte-Meßwert unter Verwendung des wenigstens einen sowohl das aktuell mittels des Meßsystems zu messenden Medium als auch eine momentane Einbausituation des Meßsystems spezifizierenden Meßsystemparameter.

Nach einer dreizehnten Ausgestaltung der Erfindung ist vorgesehen, daß die Meßelektronik einen, insb. nichtflüchtigen, Datenspeicher aufweist, der wenigstens einen das aktuell zu messenden Medium spezifizierenden Meßsystemparameter erster Art, insb. eine spezifische Wärmekapazität des aktuell zu messenden Mediums, eine molare Masse des Mediums und/oder die Anzahl von Freiheitsgraden des Mediums, und der wenigstens einen sowohl das aktuell zu messenden Medium als auch eine momentane Einbausituation des Meßsystems spezifizierenden Meßsystemparameter zweiter Art zumindest zeitweise vorhält, wobei die Einbausituation durch die Anordnung von Druck-, Temperatur- und Dichtemeßstelle relativ zueinander sowie jeweils durch Form und Größe der Prozeßleitung im Bereich der Druck-, Dichteund/oder Temperaturmeßstelle mitbestimmt ist, und wobei die Meßelektronik den Dichte-Meßwert unter Verwendung zumindest des Meßsystemparameters erster Art und des Meßsystemparameters zweiter Art ermittelt.

Nach einer vierzehnten Ausgestaltung der Erfindung ist vorgesehen, daß die Meßelektronik zumindest zeitweise, insb. extern des Meßsystems und/oder zeitnah ermittelte, numerische Parameterwerte für wenigstens einen zu messendes Medium und/oder eine momentane Einbausituation des Meßsystems spezifizierenden Meßsystemparameter, insb. eine Wärmekapazität, $c_P$, für zu messendes Medium, empfängt, der eine vorab ermittelte und/oder von der Dichte-Meßstelle entfernt gemessene spezifische Wärmekapazität, $c_p$, des zu messenden Mediums repräsentiert.

Nach einer fünfzehnten Ausgestaltung der Erfindung ist vorgesehen, daß die Meßelektronik zumindest zeitweise, insb. leitungsgebunden und/oder per Funk, mit einem übergeordneten elektronischen Datenverarbeitungssystem kommuniziert, insb. via Feldbus. Nach einer Weiterbildung dieser Ausgestaltung der Erfindung ist ferner vorgesehn, daß die Meßelektronik den Dichte-Meßwert an das Datenverarbeitungssystem sendet und/oder wobei die Meßelektronik zumindest zeitweise numerische Parameterwerte für das zu aktuell messende Medium, insb. dessen thermodynamischen Eigenschaften und/oder dessen chemische Zusammensetzung, spezifizierende Meßsystemparameter, insb. eine spezifische Wärmekapazität, $c_p$, des aktuell zu messenden Mediums, eine molare Masse, n, des aktuell zu messenden Mediums und/oder die Anzahl, f, von Schwingungsfreiheitsgraden der Atome bzw. Moleküle des aktuell zu messenden Mediums, vom Datenverarbeitungssystem empfängt und/oder daß die Meßelektronik mittels eines, insb. seriellen, Feldbusses mit dem übergeordneten elektronischen Datenverarbeitungssystem verbunden ist.

Nach einer Ausgestaltung der Erfindung ist vorgesehen, daß die Meßelektronik im Betrieb zumindest zeitweise eine spezifische Wärmekapazität, $c_p$, des aktuell zu messenden Mediums ermittelt, nümlich basierend auf der Vorschrift:

$$c_P = \left(1 + \frac{f}{2}\right) \cdot \frac{R}{n},$$

worin n einer molaren Masse, R der absoluten Gaskonstante mit R = 8.3143 J / (K mol) und f einer durch den molekularen Aufbau des Mediums bestimmten Anzahl von Schwingungsfreiheitsgraden von dessen Atomen bzw. Molekülen entsprechen.

Nach einer siebzehnten Ausgestaltung der Erfindung ist vorgesehen, daß die Meßelektronik basierend auf dem Temperaturrmeßsignal wiederkehrend einen, insb. digitalen, Temperatur-Meßwert generiert, der eine lokale Temperatur des Mediums, insb. die Temperatur des Mediums an der Temperaturmeßstelle, momentan repräsentiert.

Nach einer achtzehnten Ausgestaltung der Erfindung ist vorgesehen, daß die Meßelektronik basierend auf dem Druckrmeßsignal wiederkehrend einen, insb. digitalen, Druck-Meßwert generiert, der einen im Medium, insb. an der Druckmeßstelle, herrschenden Druck momentan repräsentiert.

Nach einer neunzehnten Ausgestaltung der Erfindung ist vorgesehen, daß die Meßelektronik mittels eines, insb. seriellen, Feldbusses und/oder drahtlos per Funk mit dem Strömungssensor kommuniziert.

Nach einer zwanzigsten Ausgestaltung der Erfindung ist vorgesehen, daß die Meßelektronik den Dichte-Meßwert auch unter Verwendung wenigstens eines, insb. digital gespeicherten, numerischen Kompensationsfaktors erzeugt, der mit einer, insb. vorab und/oder im Betrieb ermittelten, entlang der Strömungsachse des Meßsystems auftretenden Ortsveränderlichkeit wenigstens einer thermodynamischen Zustandsgröße des Mediums, insb. einer Temperatur, einem Druck oder einer Dichte, und/oder der mit einer, insb. vorab und/oder im Betrieb ermittelten, entlang der Strömungsachse des Meßsystems auftretenden Ortsveränderlichkeit der Reynoldszahl des strömenden Mediums korrespondiert.

Diese Ausgestaltung der Erfindung weiterbildend ist ferner vorgesehen,

daß der wenigstens eine Kompensationsfaktor unter Berücksichtigung des tatsächlich zu messenden Mediums, insb. dessen Zusammensetzung und/oder dessen thermodynamischen Eigenschaften, ermittelt wird, insb. während einer Kalibrierung des Meßsystems mit bekanntem Referenzmedium und/oder während der Inbetriebnahme des Meßsystems vor Ort; und/oder

daß die Meßelektronik den wenigstens einen Kompensationsfaktor während der Inbetriebnahme des Meßsystems zumindest einmal ermittelt;

und/oder

daß die Meßelektronik den Kompensationsfaktor während des Betriebs des Meßsystems wiederkehrend ermittelt, insb. einhergehend mit einer Änderung wenigstens einer chemischen Eigenschaft des zu messenden Mediums oder mit einer Auswechselung desselben durch ein anderes;

und/oder

daß die Meßelektronik den wenigstens einen Kompensationsfaktor anhand einer vorgegebenen, insb. im Dialog mit dem Anwender und/oder extern der Meßelektronik ermittelten, spezifischen Wärmekapazität, $c_p$, des aktuellen Mediums ermittelt; und/oder

daß die Meßelektronik einen den wenigstens einen Kompensationsfaktor vorhaltenden, insb. als Tabellenspeicher ausgebildeten und/oder nicht-flüchtigen, Datenspeicher umfaßt; und/oder

daß der Datenspeicher eine Vielzahl von vorab für verschiedene Medien und/oder für verschiedene Einbausituationen ermittelten Kompensationsfaktoren vorhält; und/oder

daß die Meßelektronik den wenigstens einen Kompensationsfaktor unter Berücksichtigung des aktuellen Mediums sowie der aktuellen Einbausituation aus der Vielzahl von im Datenspeicher vorgehaltenen Kompensationsfaktoren auswählt.

Diese Ausgestaltung der Erfindung weiterbildend ist ferner vorgesehen,

daß die Meßelektronik im Betrieb einen, insb. digitalen, Geschwindigkeits-Meßwert ermittelt, der die Strömungsgeschwindigkeit des strömenden Mediums momentan repräsentiert, und daß die Meßelektronik den Dichte-Korrekturwert unter Verwendung des Geschwindigkeits-Meßwert sowie des Temperaturmeßwerts ermittelt;

und/oder

daß die Meßelektronik den Dichte-Korrekturwert im Betrieb wiederkehrend mit wenigstens einem vorgegebenen Referenzwert vergleicht; und/oder

daß die Meßelektronik basierend auf einem Vergleich von Dichte-Korrekturwert und Referenzwert eine momentane Abweichung der Dichte-Korrekturwerts vom Referenzwert quantitativ signalisiert und/oder zeitweise einen Alarm generiert, der eine unerwünschte, insb. unzulässig hohe, Diskrepanz zwischen Dichte-Korrekturwerts und zugehörigem Referenzwert signalisiert.

Nach einer ein undzwanzigsten Ausgestaltung der Erfindung ist vorgesehen, daß die Meßelektronik basierend auf dem Druckmeßsignal sowie dem Temperaturmeßsignal einen provisorischen Dichte-Meßwert, insb. gemäß einem der Industrie-Standards AGA 8, AGA NX-19, SGERG-88 IAWPS-IF97, ISO 12213:2006, ermittelt, der eine Dichte repräsentiert, die das strömende Medium an der virtuellen Dichtemeßstelle lediglich scheinbar aufweist.

Diese Ausgestaltung der Erfindung weiterbildend ist ferner vorgesehen,

daß die Meßelektronik im Betrieb wiederkehrend einen Dichtefehler ermittelt, der mit einer, insb. relativen, Abweichung von provisorischem Dichte-Meßwert und Dichte-Meßwert korrespondiert, insb. auch inform eines numerischen Dichtefehler-Werts ausgibt; und/oder

daß die Meßelektronik einen momentanen Dichtefehler, der mit einer, insb. relativen, Abweichung von provisorischem Dichte-Meßwert und Dichte-Meßwert korrespondiert, inform eines numerischen Dichtefehler-Werts ausgibt und/oder mit wenigstens einem vorgegebenen Referenzwert vergleicht und basierend auf diesem Vergleich zeitweise einen Alarm generiert, der eine unerwünschte, insb. unzulässig hohe, Diskrepanz zwischen provisorischem Dichte-Meßwert und Dichte-Meßwert signalisiert.

Nach einer zwei undzwanzigsten Ausgestaltung der Erfindung ist vorgesehen, daß der wenigstens eine Strömungssensor mittels wenigstens eines piezoelektrischen und/oder mittels wenigstens eines piezoresistiven Elements gebildet ist.

Nach einer dreiundzwanzigsten Ausgestaltung der Erfindung ist vorgesehen, daß der wenigstens eine Strömungssensor mittels wenigstens eines elektrischen, insb. zumindest zeitweise von einem Heizstrom durchflossenen, Widerstandselements gebildet ist.

Nach einer viersundzwanzigsten Ausgestaltung der Erfindung ist vorgesehen, daß der wenigstens eine Strömungssensor mittels wenigstens einer, insb. strömendes Medium berührend, elektrische Potentiale abgreifenden Meßelektrode gebildet ist.

Nach einer fünfundzwanzigsten Ausgestaltung der Erfindung ist vorgesehen, daß der wenigstens eine Strömungssensor mittels wenigstens eines auf Veränderungen des Strömungsparameters reagierenden Meßkondensators gebildet ist.

Nach einer sechsundzwanzigsten Ausgestaltung der Erfindung ist vorgesehen, daß der wenigstens eine Strömungssensor im Betrieb unter Einwirkung des im Meßsystem strömenden Mediums wiederholt mechanischen Verformungen unterworfen ist.

Nach einer siebenundzwanzigsten Ausgestaltung der Erfindung ist vorgesehen, daß der wenigstens eine Strömungssensor im Betrieb unter Einwirkung des im Meßrohr strömenden Mediums wiederholt relativ zu einer statischen Ruhelage bewegt ist.

Nach einer achtundzwanzigsten Ausgestaltung der Erfindung ist vorgesehen, daß der wenigstens eine Strömungssensor mittels wenigstens eines in den Verlauf der Prozeßleitung eingesetzten, im Betrieb zumindest zeitweise vibrierenden Meßrohrs sowie wenigstens eines Vibrationen des Meßrohrs, insb. elektrodynamsich oder opto-elektronisch, erfassenden Schwingungssensors gebildet ist.

Nach einer neunundzwanzigsten Ausgestaltung der Erfindung ist vorgesehen, daß der wenigstens eine Strömungssensor mittels wenigstens eines einen Querschnitt der Prozeßleitung verengenden Strömungshindernisses, insb. einer Blende oder einer Düse, sowie mittels wenigstens eines Differenzdrucksensors - der anteilig mittels des an der Druckmeßstelle plazierten Drucksensors gebildet sein kann -gebildet ist, der eine über dem Strömungshindernis auftretende Druckdifferenz erfaßt und ein diese repräsentierendes Druckdifferenzmeßsignal liefert.

Nach einer dreißigsten Ausgestaltung der Erfindung ist vorgesehen, daß das Meßsystem wenigstens einen in ein Lumen der Prozeßleitung hineinragenden, in das Medium eintauchenden Staukörper umfaßt; und/oder daß der wenigstens eine, insb. zumindest anteilig in ein Lumen der Prozeßleitung hineinragende, Strömungssensor stromabwärts wenigstens eines in ein Lumen der Prozeßleitung hineinragenden, in das Medium eintauchenden Staukörpers angeordnet ist.

Nach einer einunddreißigsten Ausgestaltung der Erfindung ist vorgesehen, daß die Meßelektronik mittels eines, insb. seriellen, Feldbusses und/oder drahtlos per Funk mit dem Temperatursensor kommuniziert.

Nach einer zweiunddreißigsten Ausgestaltung der Erfindung ist vorgesehen, daß die Meßelektronik mittels eines, insb. seriellen, Feldbusses und/oder drahtlos per Funk mit dem Drucksensor kommuniziert.

Nach einer dreiunddreißigsten Ausgestaltung der Erfindung ist vorgesehen, daß sich das Medium an der Dichtemeßstelle in einem thermodynamischen Zustand befindet, der sich zumindest zeitweise hinsichtlich wenigstens einer lokalen thermodynamischen Zustandsgröße, insb. einer Temperatur und/oder einem Druck und/oder einer Dichte, von einem thermodynamischen Zustand des Mediums an der Temperaturmeßstelle und/oder von einem thermodynamischen Zustand des Mediums an der Druckmeßstelle signifikant, insb. in einem für eine angestrebte Meßgenauigkeit des Meßsystems erheblichen Maße, unterscheidet.

Nach einer vierunddreißigsten Ausgestaltung der Erfindung ist vorgesehen, daß das strömende Medium eine Reynoldszahl aufweist, die größer als 1000 ist.

Nach einer fünfunddreißigsten Ausgestaltung der Erfindung ist vorgesehen, daß das Medium kompressibel ist, insb. eine Kompressibilität $\kappa = - 1/V \cdot dV/dp$ aufweist, die größer als $10^{-6}$ bar$^{-1}$, und/oder zumindest anteilig gasförmig ist. Bei dem Medium kann es dabei um ein mit Feststoffpartikeln und/oder Tröpfchen beladenes Gas handeln.

Nach einer sechsunddreißigsten Ausgestaltung der Erfindung ist vorgesehen, daß das Medium zwei oder mehrphasig ausgebildet ist. Eine Phase des Mediums kann dabei liquid sein und/oder es kann sich bei dem Medium um eine mit Gas und/oder mit Feststoffpartikeln beladene Flüssigkeit handeln.

Nach einer siebenunddreißigsten Ausgestaltung der Erfindung ist vorgesehen, daß das Meßsystem weiters ein zumindest zeitweise mit der Meßelektronik kommunizierendes Anzeigeelement zum visuellen Signalisieren zumindest des Dichte-Meßwerts umfaßt.

Nach einer achtunddreißigsten Ausgestaltung der Erfindung ist vorgesehen, daß die Prozeßleitung zumindest abschnittsweise, insb. im Bereich zumindest der Dichte-Meßstelle und/oder im Bereich zumindest der Druck-Meßstelle, als eine zumindest unter Betriebsdruck im wesentlichen formstabile, insb. starre und/oder im Querschnitt kreisförmige, Rohrleitung ausgebildet ist.

Nach einer neununddreißigstem Ausgestaltung der Erfindung ist vorgesehen, daß die Prozeßleitung zumindest abschnittsweise, insb. im Bereich zwischen Dichte-Meßstelle und Druck-Meßstelle und/oder zwischen Dichte-Meßstelle und Temperatur-Meßstelle, als eine im wesentlichen gerade, insb. im Querschnitt kreisförmige, Rohrleitung ausgebildet ist.

Nach einer vierzigsten Ausgestaltung der Erfindung ist vorgesehen, daß die Prozeßleitung an der virtuellen Dichtemeßstelle ein Kaliber aufweist, das von einem Kaliber der Prozeßleitung an der Druck-Meßstelle verschieden ist. Diese Ausgestaltung der Erfindung weiterbildend ist ferner vorgesehen, daß das Kaliber der Prozeßleitung an der Druck-Meßstelle größer ist, als das Kaliber der Prozeßleitung an der virtuellen Dichtemeßstelle, insb. daß ein Kaliberverhältnis des Kalibers der Prozeßleitung an der Druck-Meßstelle zum Kaliber der Prozeßleitung an der virtuellen Dichtemeßstelle größer als 1.1 gehalten ist.

Nach einer einundvierzigsten Ausgestaltung der Erfindung ist vorgesehen, daß ein Kaliberverhältnis eines Kalibers der Prozeßleitung an der Druck-Meßstelle zu einem Kaliber der Prozeßleitung an der virtuellen Dichtemeßstelle kleiner als 5 gehalten ist.

Nach einer zweiundvierzigsten Ausgestaltung der Erfindung ist vorgesehen, daß ein Kaliberverhältnis eines Kalibers der Prozeßleitung an der Druck-Meßstelle zu einem Kaliber der Prozeßleitung an der virtuellen Dichtemeßstelle in einem Bereich zwischen 1.2 und 3.1 gehalten ist.

Nach einer dreiundvierzigsten Ausgestaltung der Erfindung ist vorgesehen, daß die Prozeßleitung zwischen der virtuellen Dichtemeßstelle und der Druck-Meßstelle ein Leitungssegment aufweist, das als ein, insb. trichterförmiger, Diffusor mit sich in Strömungsrichtung, insb. kontinuierlich, aufweitendem Lumen ausgebildet ist.

Nach einer vierundvierzigsten Ausgestaltung der Erfindung ist vorgesehen, daß die Prozeßleitung zwischen der virtuellen Dichtemeßstelle und der Druck-Meßstelle ein Leitungssegment aufweist, das als ein, insb. trichterförmiger, Düse mit sich in Strömungsrichtung, insb. kontinuierlich, verengendem Lumen ausgebildet ist.

Nach einer fünfundvierzigsten Ausgestaltung der Erfindung ist vorgesehen, daß die Prozeßleitung an der virtuellen Dichtemeßstelle ein Kaliber aufweist, das im wesentlichen gleich einem Kaliber der Prozeßleitung an der Druck-Meßstelle ist.

Nach einer sechsundvierzigsten Ausgestaltung der Erfindung ist vorgesehen, daß die Prozeßleitung an der virtuellen Dichtemeßstelle ein Kaliber aufweist, das von einem Kaliber der Prozeßleitung an der Temperatur-Meßstelle verschieden ist. Diese Ausgestaltung der Erfindung weiterbildend ist ferner vorgesehen, daß das Kaliber der Prozeßleitung an der Temperatur-Meßstelle größer, als das Kaliber an der virtuellen Dichtemeßstelle, insb. daß ein Kaliberverhältnis des Kalibers der Prozeßleitung an der Temperatur-Meßstelle zum Kaliber der Prozeßleitung an der virtuellen Dichtemeßstelle größer als 1.1 gehalten ist.

Nach einer siebenundvierzigsten Ausgestaltung der Erfindung ist vorgesehen, daß ein Kaliberverhältnis des Kalibers der Prozeßleitung an der Temperatur-Meßstelle zum Kaliber der Prozeßleitung an der virtuellen Dichtemeßstelle kleiner als 5 gehalten ist.

Nach einer achtundvierzigsten Ausgestaltung der Erfindung ist vorgesehen, daß ein Kaliberverhältnis des Kalibers der Prozeßleitung an der Temperatur-Meßstelle zum Kaliber der Prozeßleitung an der virtuellen Dichtemeßstelle in einem Bereich zwischen 1.2 und 3.1 gehalten ist.

Nach einer neunundvierzigsten Ausgestaltung der Erfindung ist vorgesehen, daß die Prozeßleitung zwischen der virtuellen Dichtemeßstelle und der Temperatur-Meßstelle ein Leitungssegment aufweist, das als ein, insb. trichterförmiger, Diffusor mit sich in Strömungsrichtung, insb. kontinuierlich, aufweitendem Lumen ausgebildet ist.

Nach einer fünfzigsten Ausgestaltung der Erfindung ist vorgesehen, daß die Prozeßleitung zwischen der virtuellen Dichtemeßstelle und der Temperatur-Meßstelle ein Leitungssegment aufweist, das als ein, insb. trichterförmiger, Düse mit sich in Strömungsrichtung, insb. kontinuierlich, verengendem Lumen ausgebildet ist.

Nach einer einundfünfzigsten Ausgestaltung der Erfindung ist vorgesehen, daß die Prozeßleitung an der virtuellen Dichtemeßstelle ein Kaliber aufweist, das im wesentlichen gleich einem Kaliber der Prozeßleitung an der Temperatur-Meßstelle ist.

Nach einer zweiundfünfzigsten Ausgestaltung der Erfindung ist vorgesehen, daß die virtuelle Dichte-Meßstelle stromaufwärts der Temperatur-Meßstelle und/oder stromaufwärts der Druck-Meßstelle festgelegt ist.

Nach einer dreiundfünfzigsten Ausgestaltung der Erfindung ist vorgesehen, daß die Druck-Meßstelle stromabwärts der Temperatur-Meßstelle angeordnet ist.

Nach einer vierundfünfzigsten Ausgestaltung der Erfindung ist vorgesehen, daß ein Abstand der Druckmeßstelle von der virtuellen Dichtemeßstelle verschieden ist von einem Abstand der Temperaturmeßstelle von der virtuellen Dichtemeßstelle.

Nach einer fünfundfünfzigsten Ausgestaltung der Erfindung ist vorgesehen, daß ein Abstand der Druckmeßstelle von der virtuellen Dichtemeßstelle größer ist als ein Abstand der Temperaturmeßstelle von der virtuellen Dichtemeßstelle.

Nach einer sechsundfünfzigsten Ausgestaltung der Erfindung ist vorgesehen, daß ein Abstand der Druckmeßstelle von der virtuellen Dichtemeßstelle größer ist als ein Kaliber der Prozeßleitung an der Druck-Meßstelle und/oder wobei ein Abstand der Druckmeßstelle von der Temperaturmeßstelle größer ist als ein Kaliber der Prozeßleitung an der Druck-Meßstelle. Diese Ausgestaltung der Erfindung weiterbildend ist ferner vorgesehen, daß ein Abstand der Druckmeßstelle von der virtuellen Dichtemeßstelle wenigstens einem 3-fachen, insb. mehr als einem 5-fachen, eines Kalibers der Prozeßleitung an der Druck-Meßstelle entspricht und/oder daß ein Abstand der Druckmeßstelle von der Temperaturmeßstelle wenigstens einem 3-fachen, insb. mehr als einem 5-fachen, eines Kalibers der Prozeßleitung an der Druck-Meßstelle entspricht.

Nach einer siebenundfünfzigsten Ausgestaltung der Erfindung ist vorgesehen, daß die Meßelektronik einen Mikrocomputer aufweist. Diese Ausgestaltung der Erfindung weiterbildend ist ferner vorgesehen, daß die Meßelektronik zumindest den Dichte-Meßwert mittels des Mikrocomputers erzeugt.

Nach einer achtundfünfigsten Ausgestaltung der Erfindung ist vorgesehen, daß das Meßsystem weiters wenigstens ein, insb. explosions- und/oder druck- und/oder schlag- und/oder wetterfestes, Elektronik-Gehäuse umfaßt, in dem die Meßelektronik zumindest anteilig untergebracht ist. Nach einer Weiterbildung dieser Ausgestaltung ist ferner vorgesehen, daß das wenigstens eine, insb. metallische, Elektronik-Gehäuse an der Prozeßleitung gehaltert und/oder in unmittelbarer Nähe der virtuellen Dichte-Meßstelle plaziert ist.

Ein Grundgedanke der Erfindung besteht darin, die Meßgenauigkeit von Meßsystemen der beschriebenen Art dadurch zu verbessern, daß die in zahlreichen Anwendungen der industriellen Meßtechnik mit strömenden Medien als eine zentrale Meßgröße dienende, oftmals aber gezwungener Maßen von zwar real, jedoch räumlich verteilt gemessener Zustandsgrößen abgeleitete Dichte unter Berücksichtigung allfälliger räumlichen Varianzen, insb. auch deren Ausmaß, von Reynoldszahl und/oder thermodynamischem Zustand des strömenden Mediums mit verbesserter Genauigkeit zu ermitteln. Dies erfolgt bei dem erfindungsgemäßen Meßsystem in der Weise, daß die Dichte verläßlich, auf einen für das jeweilige Meßsystem zuvor definierte, als ortsfester gedachter Meßpunkt dienenden Referenzpunkt bezogen berechnet und insoweit virtuell gemessen wird. Diesen Grundgedanken weiterführend kann die Meßgenauigkeit, mit der das Meßsystem die lokale Dichte ermittelt, dadurch noch erheblich verbessert werden, daß das Meßsystem besagte Dichte auch unter Berücksichtigung einer gleichsam lokal gemessenen aktuellen Strömungsgeschwindigkeit ermittelt und somit eine weitere Kompensation des mit den erwähnten Varianzen von Reynoldszahl und/oder thermodynamischem Zustand des strömenden Mediums einhergenden Fehlers erreicht werden kann.

Die Erfindung basiert dabei auf der überraschenden Erkenntnis, daß räumliche Varianzen in der Reynoldszahl und/oder im thermodynamischem Zustand und die damit einhergehenden Meßfehler für konkrete Meßsysteme auf eine einzige, in Strömungsrichtung liegende und/oder mit der Strömungsachse des Meßsystems koinzidierende Dimension projiziert und somit in einen entsprechend vereinfachten Satz Meßsystemparameter abgebildet werden können, der zumindest überwiegend vorab - experimentell und/oder computergestützt ermittelt werden kann, beispielsweise im Zuge einer Kalibrierung des Meßsystem während der Fertigstellung und/oder während der Inbetriebnahme desselben. Besagte räumliche Varianzen bzw. deren Ausmaß und insoweit auch der Satz Geräteparameter mögen zwar für jedes konkrete Meßsystem und jedes konkrete Medium spezifisch und insoweit individuell zu kalibrieren sein, gleichwohl können sie aber bei dann unverändert belassenem Meßsystem mit hinsichtlich seiner chemischen Zusammensetzung im wesentlichen gleichbleibendem Medium selbst als invariant gegenüber im Betrieb allfällig auftretenden Änderungen von Reynoldszahl und/oder thermodynamischem Zustand angesehen werden. Anders gesagt, können für ein gegebenes verteiltes Meßsystem das Ausmaß von entlang der Strömungsachse auftretenden Änderungen des thermodynamischen Zustands vorherbestimmt und somit deren Einfluß mit für die Messungen ausreichenden Genauigkeit kalibrierte und insoweit auch kompensiert werden, wobei es sich überraschenderweise gezeigt hat, daß das Ausmaß der Änderung für ein gegebenes Meßsystem mit gleichbleibendem Medium weitgehend konstant ist somit in einen Satz zwar spezifischer, gleichwohl aber konstanter Geräteparameter abgebildet werden kann.

Ein Vorteil der Erfindung ist zudem auch darin zusehen, daß das zugrunde liegende Verfahren nachträglich auch in zahlreiche bereits installierte Meßsysteme ohne weiteres implementiert werden kann, jedenfalls insofern als die Meßgerät-Elektronik eine Änderung der entsprechenden Verarbeitungssoftware zuläßt.

Die Erfindung sowie weitere vorteilhafte Ausgestaltungen werden nachfolgend anhand Ausführungsbeispiels erläutert, gegebenenfalls auch unter Verweis auf die Figuren, wobei

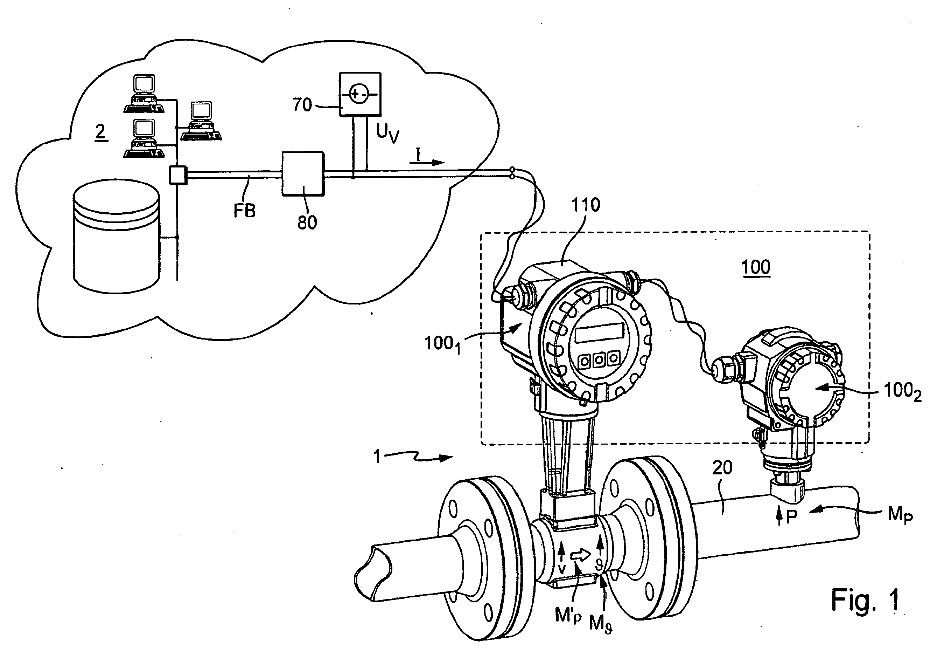

Fig. 1 perspektivisch in einer Seitenansicht ein Meßsystem zum Messen einer lokalen Dichte, die ein in einer Prozeßleitung strömendes Medium an einer Dichtemeßstelle aufweist, mittels eines an einer Druckmeßstelle angeordneten Drucksensors und eines an einer Temperaturmeßstelle angeordneten Temperatursensors zeigt,

Fig. 1 das Meßsystem gemäß Fig. 1 nach Art eines Blockschaltbildes nochmals zeigt,

Fign. 3a, 3b perspektivisch und teilweise geschnitten in verschiedenen Ansichten einen für die Verwendung in einem Meßsystem gemäß Fig. 1 geeigneten, nach dem Vortex-Prinzip arbeitenden Wirbel-Durchflußaufnehmer zeigen, und

Fign. 4a schematisch im Schnitt verschiedene Varianten zur

bis 4h, 5 Ausgestaltung der Prozeßleitung und zur realtiven Anordnung der einzelnen Meßstellen gemäß Fig. 1 zeigen.

In der Fig. 1 ist ein - gegebenenfalls modular aufgebautes - Meßsystem 1 schematisch dargestellt, das dafür geeignet und dafür vorgesehen ist, zumindest zeitweise eine Dichte eines in einer Prozeßleitung 20 strömenden, gegebenenfalls auch zwei- oder mehrphasigen Mediums, wie z.B. einem Gas, einer gegebenenfalls auch mit Gas und/oder Feststoffpartikeln beladenen Flüssigkeit, ein mit Feststoffpartikeln und/oder Tröpfchen beladenen Gas, einem gegebenenfalls auch gesättigtem Dampf oder dergleichen, sehr präzise und gleichermaßen sehr robust zu ermitteln und, gegebenenfalls auch in Echtzeit, in einen entsprechend verläßlichen, beispielsweise auch digitalen, Dichte-Meßwert $X_\rho$ abzubilden. Als Medium kommt dabei beispielsweise Wasserstoff, Stickstoff, Chlor, Sauerstoff, Helium oder daraus gebildete Verbindungen und/oder Gemische wie z.B. Kohlendioxid, Wasser, Phosgen, Luft, Erdgas oder andere Kohlenwasserstoffgemische in Frage.

Im besonderen dient das Meßsystem dazu, die Dichte des strömenden Mediums auch für den Fall sehr genau zu messen, bei dem dieses entlang einer Strömungsachse des Meßsystems hinsichtlich eines thermodynamischen Zustandes veränderlich ist, wie dies beispielsweise bei innerhalb der Prozeßleitung reagierenden Medien, bei abschnittsweise gekühlten Medien oder abschnittsweise erhitzten Medien, bei kompressiblen Medien und/oder bei Prozeßleitungen mit entlang der Strömungsachse variierendem Querschnitt auftreten kann. Das Meßsystem ist weiters dafür vorgesehen, die Dichte für strömende Medien mit einer Reynoldszahl, $Re$, die größer als 1000 ist, und/oder für kompressible Medien mit einer Kompressibilität, $\kappa$, von mehr als $10^{-6}$ bar$^{-1}$ präzise zu ermitteln.

Das Meßsystem umfaßt dafür wenigstens einen an einer Temperaturmeßstelle $M\vartheta$ plazierten, primär auf eine lokale Temperatur, $\vartheta$, von vorbei strömendem Medium reagierenden Temperatursensor, der wenigstens ein von der lokalen Temperatur des zu messenden Mediums beeinflußtes Temperaturmeßsignal $x\vartheta$ liefert, sowie wenigstens einen an einer Druckmeßstelle $M_p$ plazierten, primär auf einen lokalen, z.B. statischen und/oder absoluten, Druck von vorbei strömendem Medium reagierenden Drucksensor, der wenigstens ein vom lokalen Druck, $p$, im zu messenden Medium beeinflußtes Druckmeßsignal $x_p$ liefert. Obwohl die Druck-Meßstelle im hier gezeigten Ausführungsbeispiel stromabwärts der Temperatur-Meßstelle angeordnet ist, kann sie, falls erforderlich, selbstverständlich auch stromaufwärts der Temperatur-Meßstelle angeordnet sein.

Zusätzlich zum Temperatursensor und Drucksensor weist das Meßsystem ferner wenigstens eine mit dem Temperatursensor sowie dem Drucksensor jeweils zumindest zeitweise kommunizierende - also drahtgebunden und/oder drahtlos die gegebenenfalls entsprechend konvertierten Meßsignale $x\vartheta$, $x_p$ vom Temperatursensor bzw. vom Drucksensor empfangende - Meßelektronik 100 auf.

Als Temperatursensor kann beispielsweise ein industrieller Temperatursensor, wie z.B. ein Thermoelement oder ein Widerstandsthermometer vom Typ Pt100 oder Pt 1000, dienen, während als Drucksensor beispielsweise ein industrieller, insb. absolut und/oder relativ messender, Drucksensor, z.B. mit kapazitiver Druckmeßzelle, verwendet werden kann. Selbstverständlich können, falls erforderlich, aber auch andere die vom Medium erfaßten und übertragenen Drücke in entsprechende Meßsignale umwandelnde Druckmeßzellen für die Drucksensoren bzw. andere geeignete Temperatursensoren verwendet werden. Der Temperatursensor kann des weiteren beispielsweise als Komponente eines eigenständigen, industrietauglichen Temperatur-Meßgeräts mit eigener Meßgerät-Elektronik sein. Solche dem Fachmann an und für sich bekannten Temperatur-Meßgeräte sind seit langem in der industriellen Prozeßmeßtechnik etabliert und werden beispielsweise auch von der Firma Endress+Hauser Wetzer GmbH+Co. KG unter der Bezeichnung "Easytemp TSM" oder "Omnigrad T" angeboten. Alternativ oder in Ergänzung dazu kann der Temperatursensor, wie weiter unten näher erläutert, auch als ein integraler Bestandteil eines komplexen, gegebenenfalls auch mehre Meßgrößen vom strömenden Medium erfassenden In-Line-Meßgeräts ausgebildet sein. Gleichermaßen kann auch der Drucksensor integraler Bestandteil eines solchen komplexen In-Line-Meßgeräts bzw. Komponente eines eigenständigen, industrietauglichen Druck-Meßgeräts mit eigner Meßgerät-Elektronik sein. Solche dem Fachmann ebenfall bekannten Druck-Meßgeräte sind seit langem in der industriellen Prozeßmeßtechnik etabliert und werden beispielsweise auch von der Firma Endress+Hauser GmbH+Co. KG unter der Bezeichnung "Cerabar S", "Cerabar M" oder "Cerabar T" angeboten. Wei Im übrigen können der Drucksensor und der Temperatursensor aber auch durch ein einziges Meßgerät für Druck und Temperatur-Messung bereitgestellt sein, beispielsweise gemäß dem in der WO-A 97/48970 vorgeschlagenen industriellen Kombinationsmeßgerät.

Wie in der Fig. 1 schematisch dargestellt, kann die Meßelektronik zumindest anteilig in einem, insb. explosions- und/oder druck- und/oder schlag- und/oder wetterfesten, Elektronik-Gehäuse 110 untergebracht sein. Das, beispielsweise metallische, Elektronik-Gehäuse 110 kann dabei, wie auch in Fig. 1 dargestellt, gegebenenfalls an der Prozeßleitung gehaltert sein.

Zur meßsysteminternen Weiterverarbeitung des Druck- und des Tempratur-Meßsignals ist gemäß einer Ausgestaltung der Erfindung in der Meßelektronik ferner ein Microcomputer $\mu C$ vorgesehen, der im besonderen auch dazu dient, den Dichte-Meßwert $X\rho$ zu erzeugen, und der beispielsweise mittels wenigstens eines Mikroprozessors und/oder mittels wenigstens eines Signalprozessors gebildet sein kann. Alternativ oder in Ergänzung können zur Realsierung des Mikrocomputers $\mu C$ auch anwendungsspezifische integrierten ASIC-Schaltungen und/oder programmierbare logische Bauelemente oder Systeme verwendet werden, wie z.B. sogenannte FPGA (field programmable gate array und/oder, wie u.a. auch in der WO-A 03/098154 vorgeschlagen, sogenannte SOPC (system on programmable chip). Des weiteren weist die Meßelektronik nach einer anderen Ausgestaltung der Erfindung wenigstens ein, beispielsweise in unmittelbarer Nähe der Meßelektronik plazierte, zumindest zeitweise mit der Meßelektronik, insb. mit dem darin gegebenenfalls vorgesehen Mikrocomputer, kommunizierendes Anzeigeelement HMI zum visuellen Signalisieren zumindest des Dichte-Meßwerts. Das Anzeigeelement HMI kann hierbei beispielsweise auch inform eines kombinierten Anzeige- und Bedienelements ausgebildet sein, daß neben der Visualisierung von Meßwerten auch der Eingabe von die Meßelektronik parametrierenden und/oder steuernden Bedienkommandos seitens des Anwenders erlauben.

Nach einer weiteren Ausgestaltung der Erfindung ist ferner vorgesehen, daß die Meßelektronik basierend auf dem Temperaturmeßsignal, beispielsweise auch unter Verwendung des gegebenenfalls vorgesehenen Mikrocomputers, wiederkehrend einen, insb. digitalen, Temperatur-Meßwert $X\vartheta$ generiert, der eine lokale Temperatur des Mediums, insb. die Temperatur des Mediums an der Temperaturmeßstelle, momentan repräsentiert und/oder daß die Meßelektronik basierend auf dem Druckrmeßsignal $x_p$, beispielsweise wiederum unter Verwendung des gegebenenfalls vorgesehenen Mikrocomputers, wiederkehrend einen, insb. digitalen, Druck-Meßwert $X_p$ generiert, der einen im Medium, insb. an der Druckmeßstelle, herrschenden Druck momentan repräsentiert.

Zumindest für den vorbeschrieben Fall, daß das Meßsystem mittels zweier oder auch mehrerer eigenständiger Meßgeräte gebildet ist, kann beim erfindungsgemäßen Meßsystem auch die Meßelektronik selbst durch entsprechende Zusammenschaltung - drahtgebunden und/oder drahtlos - von einzelnen, insoweit Teil-Elektroniken der Meßelektronik bildende Meßgerät-Elektroniken realisiert und insoweit auch modular aufgebaut sein. Dabei kann die Meßelektronik beispielsweise mittels eines, insb. seriellen, Feldbusses und/oder drahtlos per Funk mit dem Temperatursensor und/oder mit dem Drucksensor kommunizieren. Alternativ zu einem verteilten Aufbau der Meßelektronik kann diese aber auch, falls erforderlich, als ein einziges Elektronikmodul ausgebildet sein, in das die von Druck- und/oder Temperatursensor erzeugten Meßsignale direkt eingespeist werden.

Die gegebenenfalls im Meßsystem vorgesehen wenigstens zwei Meßgerät- oder auch Teil-Elektroniken $100_1$, $100_2$ sind in der dem Fachmann bekannten Weise so miteinander zu koppeln daß im Betrieb von wenigstens einer der beiden Meßgerät-Elektroniken $100_1$, $100_2$ entsprechend erzeugte Meßdaten zumindest unidirektional zur anderen, insoweit als Master-Elektronik fungierenden übertragen werden können. Dies kann in der dem Fachmann bekannten Weise inform von in ihrer Spannung, ihrem Strom und/oder ihrere Frequenz codierten Meßsignalen und/oder inform von in digital codierte Telegramme gekapselten Meßwerte, z.B. im HART®-MULTIDROP-Verfahren oder im Burst-Mode-Verfahren, erfolgen. Selbstverständlich können statt dessen aber auch bidirektional zwischen den beiden Meßgerät-Elektronik $100_1$, $100_2$ kommunizierende Datenverbindungen zur Übertragung der lokal ermittelten Meßgrößen zur jeweils anderen Meßgerät-Elektronik $100_1$ bzw. $100_2$ verwendet werden, beispielsweise via externem Feldbus. Zur Realisierung der erforderlichen Kommunikationsverbindung zwischen den beiden Meßgerät-Elektronik $100_1$, $100_2$ können in vorteil-hafter Weise in der industriellen Meß- und Automatisierungstechnik entsprechend etablierte Standardschnittstellen Verwendung finden, wie z.B. leitungsgeführte 4-20 mA-Stromschleifen, ggf. auch in Verbindung mit HART®- oder anderen einschlägigen Feldbus-Protokollen, und/oder geeignete Funkverbindungen.

Gemäß einer weiteren vorteilhaften Ausgestaltung der Erfindung ist die wenigstens eine Meß-Elektronik $100_1$, $100_2$ ferner so ausgelegt, daß sie im Betrieb das Meßsystem, wie in Fig. 1 schematisiert angedeutet, mit einem diesem übergeordneten Datenverarbeitungssystem zumindest zeitweise kommuniziert, und zwar in der Weise, daß zumindest im normalen Meßbetrieb seitens des Meßsystems wiederkeherend ermittelte Meßwert-gegebenenfalls auch inform eines digital codierten Telegramms - möglichst zeitnah und/oder in Echtzeit zum Datenverarbeitungssystem hin transferiert werden. Zum Erfassen von von der Meßelektronik übermittelten Meßwerten ist Datenverarbeitungssystem 2 ferner wenigstens eine zumindest zeitweise mit dieser geeignet kommunizierende Auswerte-Schaltung 80 vorgesehen. Das übergeordnete Datenverarbeitungssystem 1 kann beispielsweise Teil einer prozeßnahen automatisierten Steuerung oder auch eines weitreichenden Prozeßleitsystems sein, das eine Vielzahl von Prozeßleitrechnern und/oder digitalen Speicherprogrammierbaren Steuerungen aufweist, die innerhalb einer industriellen Anlage räumlich verteilt angeordnet und über ein entsprechendes, insb. auch mittels digitaler Feldbusse gebildetes, Datenübertragungsnetzwerk miteinander gekoppelt sind. Gleichermaßen kann das Datenverarbeitungssystem mit weiteren Meßgeräten und/oder mit in den Prozeß eingreifenden Stellgeräten, wie z.B. Ventilen oder Pumpen, verbunden sein. Gemäß einer Weiterbildung der Erfindung umfaßt das Datenverarbeitungssystem weiters wenigstens einen dem Übertragen digitaler Meß- und/oder Betriebsdaten dienenden, insb. seriellen, Feldbus FB. Bei dem wenigstens einen Feldbus FB kann es sich beispielsweise um einen solchen gemäß einem der in der industriellen Prozeßautomation etablierten Standards, wie z.B. FOUNDATION

EP 2 162 706 B1

FIELDBUS, PROFIBUS, CANBUS, MODBUS, RACKBUS-RS 485 oder dergleichen, handeln. In einer vorteilhaften Weiterbildung ist dabei ferner vorgesehen, daß die vorgenannte Auswerte-Schaltung 80, insb. zur Weiterleitung der vom Meßsystem inform digitaler Meßdaten empfangenen Meßwerte, an den wenigstens einen Feldbus gekoppelt ist. Je nach Ausführung von Feldbus und Meßelektronik kann letztere entweder direkt oder mittels eines Adapters, der das Meßwert tragende Signal passend konvertiert, an das Datenverarbeitungssystem 2 angeschlossen sein.

Die Meßelektronik und das von dieser räumlich, gegebenenfalls beträchtlich, entfernte Datenverarbeitungssystem 2 sind gemäß einer Weiterbildung der Erfindung mittels wenigstens eines im Betrieb zumindest zeitweise von einem, insb. veränderlichen, Strom I durchflossen Leitungspaares 2L miteinander elektrisch verbunden. Der Strom kann beispielsweise von einer im übergeordneten Datenverarbeitungssystem vorgesehenen externen elektrischen Energieversorgung 70 eingespeist sein, die im Betrieb wenigstens eine den im Leitungspaar 2L fließenden Strom I treibende, insb. uni-polare, Versorgungsspannung $U_V$ bereit stellt. Als Energiequelle kann dabei z. B. eine Batterie und/oder eine über ein anlageninternes Versorgungsnetz gespeiste Gleich- oder Wechselspannungsquellenschaltung dienen. Zum, insb. wieder lösbaren, Anschließen des wenigstens einen Leitungspaares 2L an die Meßelektronik 100 und insoweit das Meßsystem 1 als solches weist diese weiters wenigstens ein nach außen geführtes Klemmenpaar auf.

Für den vorbeschriebenen Fall der modular der mittels separater Teil-Elektroniken aufgebauten Meßelektronik kann beispielsweise jede der verwendeten Teil-Elektroniken $100_1$, $100_2$ separat an die externe Energieversorgung angeschlossen sein, beispielsweise auch mittels der vorgenannten 4-20 mA-Stromschleife. Alternativ oder in Ergänzung kann aber auch eine der Teil-Elektroniken $100_1$, $100_2$ so an die andere angeschlossen sein, daß sie diese zumindest zeitweise mit elektrischer Energie versorgen kann.

Die Meßelektronik ist gemäß einer weiteren Ausgestaltung ferner so ausgebildet, daß die Meßsystem intern generierten Meßwerte - seien es nun Meßwerte von einer einzigen erfaßten Meßgrößen oder Meßwerte von diversen erfaßten Meßgrößen, wie z.B. die ermittelte Dichte und ein ermittelter Massendurchfluß - zumindest teilweise über das wenigstens eine Leitungspaar 2L an das übergeordnete Datenverarbeitungssystem 2 übermittelt. Das Paar elektrischer Leitungen 2L kann dabei beispielsweise als Teil einer sogenannten, in der industriellen Meßtechnik äußerst bewährten Zweileiter-Stromschleife ausgebildet sein. Für diesen Fall würden dann einerseits die zumindest zeitweise erzeugten Meßwerte über dieses einzige Leitungspaar 2L an das übergeordnete Datenverarbeitungssystem inform eines lastmodulierten, insb. getakteten oder kontinuierlich veränderlichen, Schleifenstromes gesendet werden und andererseits die Meßelektronik und insoweit das Meßsystem zumindest zeitweise und/oder zumindest anteilig über das Leitungspaar 2L mit elektrischer Energie versorgt werden.

Die Meßelektronik 100 ist gemäß einer weiteren Ausgestaltung der Erfindung ferner dafür ausgelegt, im Betrieb eine Vielzahl von zumindest anteilig die wenigstens eine Meßgröße repräsentierenden, insb. digitalen, Meßwerten zu generieren, und diese zumindest teilweise via Klemmen-und daran entsprechend angeschlossenes Leitungspaar 2L an das angeschlossene Datenverarbeitungssystem 2 auf dieses abgestimmt zu übermitteln. Falls erforderlich, kann das Meßsystem ferner dahingehend weitergebildet sein, daß Meßelektronik 100 und Datenverarbeitungssystem 2 auch mittels wenigstens eines zusätzlichen - hier nicht gezeigten - zweiten Leitungspaares miteinander verbunden sind, das im Betrieb zumindest zeitweise entsprechend von einem Strom durchflossen ist. Für diesen Fall kann das Meßsystem ferner die intern generierten Meßwerte zumindest teilweise auch über das zusätzliche Leitungspaar an das Datenverarbeitungssystem übermitteln. Alternativ oder in Ergänzung dazu können Meßsystem und Datenverarbeitungssystem auch drahtlos, beispielsweise mittels Funkwellen, miteinander kommunizieren. Besonders für letzteren Fall, kann es auch von Vorteil sein, das Meßsystem, insb. auch ausschließlich, mittels einer internen und/oder externe, insb. austauschbaren und/oder wiederaufladbaren, Batterie und/oder Brennstoffzelle mit elektrischer Energie zu versorgen. Darüberhinaus kann das Meßsystem zudem auch - anteilige oder ausschließlich- mittels regenerative Energiequellen nutzenden, unmittelbar am Feldmeßgerät und/oder von diesem entfernt plazierten, Leistungskonvertern gespeist sein, wie. z.B. Thermogeneratoren, Solarzellen, Windgeneratoren oder dergleichen.

Nach einer weiteren Ausgestaltung der Erfindung ist vorgesehen, daß das Meßsystem via Meßelektronik zumindest zeitweise mit einer externen Bedien- und Kontroll-Einheit, beispielsweise einem Handbediengerät oder einer im übergeordneten Datenverarbeitungssystem vorgesehenen Programmiergerät, gerätespezifische Daten, wie z.B. Meßgerät interne Einstell-Parameter für die Meßelektronik selbst und/oder Meßsystem interne Diagnose-Parameter, austauschen kann. Dafür ist in der Meßelektronik 100 ferner wenigstens eine Kommunikationsschaltung COM vorgesehen, die die Kommunikation über das wenigstens eine Leitungspaar 2L entsprechend kontrolliert und steuert. Im besonderen dient die Kommunikationsschaltung dazu, die zu sendenden meßsystemspezifische Daten in Signale umzuwandeln, die über das Paar 2L elektrische Leitungen übertragbar sind, und diese dann darin einzukoppeln. Alternativ oder in Ergänzung dazu kann die Kommunikationsschaltung COM aber auch dafür ausgelegt sein, von extern über das jeweilig Paar elektrische Leitungen gesendete meßsystemspezifische Daten, beispielsweise einen Satz von zu ändernden Einstell-Parameter für die Meßelektronik, entsprechend zu empfangen. Als Kommunikationsschaltung kann, z. B. eine gemäß dem HART@-Feld-Kommunikations-Protokoll (HART Communication Foundation, Austin TX) arbeitende Schnittstellenschaltung dienen, die also höher frequente, FSK-codierte (frequency shift keying) Wechselspannungen als Signalträger verwendet, oder aber auch gemäß dem PROFIBUS-Standard ausgelegte Schnittstellenschaltung. Falls erforderlich, können ferner auch extern, beispielsweise in einer Laufzeitumgebung des übergeordneten Datenverarbeitungssystems, ablaufende, mit der Meßelektronik 100 kommunizierenden Daten ver- und/oder bearbeitende Prozesse auf die Meßelektronik direkten Zugriff haben.

Beim erfindungsgemäßen Meßsystem ist ferner vorgesehen, daß die Meßelektronik im Betrieb den Dichte-Meßwert $X_\rho$ unter Verwendung zumindest des Temperaturmeßsignals $x_\vartheta$ sowie des Druckmeßsignals $x_p$ in der Weise erzeugt, daß er eine lokale Dichte momentan repräsentiert, die das strömende Medium an einer innerhalb der Prozeßleitung 20 örtlich definierten - gegebenenfalls auch von der realen Druckmeßstelle und/oder der realen Temperaturmeßstelle entlang der Strömungsachse vorgebbar beabstandeten - gedachten Referenzpunkt tatsächlich aufweist, der in Ermanglung eines entsprechenden Dichtesensors daselbst und zur Unterscheidung von den mittels des Temperatursensors bzw. Drucksensors jeweils tatsächlich gebildeten und insoweit realen Meßstellen als virtuelle Dichtemeßstelle M'p bezeichnet ist. Die virtuelle Dichtemeßstelle M'p kann dabei sowohl auf einen im Betrieb aus einer Vielzahl vorgegebener Referenzpunkte ausgewählten Referenzpunkt bezogen und insoweit in definierter Weise ortsveränderlich sein als auch ortsfest gehalten. Zumindest für letzteren Fall ist gemäß einer weiteren Ausgestaltung der Erfindung vorgesehen, das Elektronik-Gehäuse 110 mit darin befindlicher Meßelektronik in unmittelbarer Nähe der virtuellen Dichte-Meßstelle M'p zu plazieren. Die Definition der virtuellen Dichte-Meßstelle M'p erfolgt dabei durch entsprechende Konfiguration der Meßelektronik, insb. der darin zum Zwecke der Dichte-Messung ausgeführten Berechnungsverfahren, unter Berücksichtigung von Position und geometrischer Ausprägung der realen Meßstellen $M_p$, $M_\vartheta$. Dabei ist gemäße einer weiteren Ausgestaltung der Erfindung vorgesehen, daß die virtuelle Dichte-Meßstelle M'p stromaufwärts der Temperatur-Meßstelle $M_\vartheta$ und/oder stromaufwärts der Druck-Meßstelle $M_p$ festgelegt ist. Ferner kann es für die Ermittlung der Dicht von Vorteil sein, die Dichte-Meßstelle entweder mit Temperatur-Meßstelle oder mit Druck-Meßstelle konizidieren zu lassen.

Beim in Rede stehenden Meßsystem ist dabei unterstellt, daß das strömende Medium wenigstens eine Zustandsgröße, beispielsweise eine Temperatur und/oder ein Druck und/oder einer Dichte, und/oder eine Reynoldszahl *Re* aufzeigt, die - einzeln oder zusammen - an der virtuellen Dichtemeßstelle M'p zumindest zeitweise, insb. in dem für die Erzeugung des Dichte-Meßwerts relevanten Zeitraum und/oder wiederkehrend, einen zumindest im Sinne einer für die Dichtemessung erwünschten Meßgenauigkeit signifikant anderen Betrag annehmen, als an wenigstens einer der tatsächliche Meßsignale liefernden realen Meßstellen, also der Temperatur-Meßstelle und/oder der Druckmeßstelle. Anders gesagt wird davon ausgegangen, daß sich das Medium an der virtuellen Dichtemeßstelle zumindest zeitweise in einem thermodynamischen Zustand und/oder in einem Strömungszustand befindet, der sich hinsichtlich wenigstens einer lokalen thermodynamischen Zustandsgröße -Temperatur, Druck, Dichte etc. - von einem thermodynamischen Zustand des Mediums an der Temperaturmeßstelle und/oder von einem thermodynamischen Zustand des Mediums an der Druckmeßstelle signifikant, insb. in einem für eine angestrebte Meßgenauigkeit des Meßsystems erheblichen Maße, unterscheidet. Diese räumlich Varianz von thermodynamischen Zustand und/oder Strömungszustand im strömenden Medium kann, wie bereits erwähnt, z.B. bei einem kompressiblen Medium, einem in der Prozeßleitung reagierenden Medium, einem zusätzlich gekühlten Medium oder einem zusätzlich erhitzten Medium auftreten. Darüber hinaus kann eine solche Varianz thermodynamischen Zustand und/oder Strömungszustand auch dadurch hervorgerufen sein, daß das Medium durch eine Prozeßleitung strömen gelassen ist, die sich entlang der Strömungsachse abschnittsweise verengt und/oder abschnittsweise aufweitet, wie dies beispielsweise bei der Verwendung von Düsen bzw. Diffusoren in der Prozeßleitung gegeben ist, und damit einhergehend beschleunigt bzw. verlangsamt wird, gegebenenfalls einhergehend mit einer Komprimierung oder Expandierung desselben.

Gemäß einer Ausgestaltung der Erfindung ist daher des weiteren vorgesehen, daß die Meßelektronik basierend auf dem Druckmeßsignal sowie dem Temperaturmeßsignal zunächst einen provisorischen Dichte-Meßwert $X'_\rho$, beispielsweise gemäß einem der erwähnten Industrie-Standards AGA 8, AGA NX-19, SGERG-88 IAWPS-IF97, ISO 12213:2006, ermittelt, der eine Dichte repräsentiert, die das strömende Medium an der virtuellen Dichtemeßstelle - infolge der vorläufigen Vernachlässigung der in Rede stehenden räumlichen Varianzen des thermodynamischen Zustands und/oder des Strömungszustands - lediglich scheinbar aufweist.

Die Ermittlung des provisorischen Dichte-Meßwerts $X'_\rho$ kann dabei zumindest zeitweise, insb. auch für zumindest anteilig gasförmige Medien wie Erdgas, Luft, Methan, Phosgen etc., basierend auf der Vorschrift:

$$X'_\rho = \frac{n}{z \cdot R_M} \cdot \frac{X_p}{X_\vartheta} \quad (1)$$

erfolgen, worin n einer molaren Masse, z einem, beispielsweise gemäß einem der Industrie-Standards AGA 8, AGA NX-19, SGERG-88 IAWPS-IF97, ISO 12213:2006 und/oder unter Verwendung des Temperaturmeßsignals und/oder des Druckmeßsignals, ermittelten, Realgasfaktor des Mediums, und $R_M$ der relativen Gaskonstante des zu messenden Mediums entsprechen, die mit der auf die molare Masse n des Mediums normierten absoluten Gaskonstante R / n mit R= 8.3143 J / (K mol) korrespondieren.

Alternativ oder in Ergänzung dazu, kann die Meßelektronik den provisorischen Dichte-Meßwert X'$_\rho$, insb. bei zumindest anteilig wasserdampfhaltigem Medium, zumindest zeitweise auch basierend auf der Vorschrift:

$$X'_\rho = \pi_{IAWPS-IF97} \cdot \gamma_{IAWPS-IF97} = \frac{X_p}{P^*_{IAWPS-IF97}} \cdot \frac{g_{IAWPS-IF97}}{R_M \cdot X_\vartheta} \quad (2)$$

ermitteln, mit $\pi_{IAWPS-IF97} = X_p / P^*_{IAWPS-IF97}$ und $\gamma_{IAWPS-IF97} = g_{IAWPS-IF97}/(R_M * X\vartheta)$, wobei P* einem Medium spezifischen kritischen Druck gemäß dem Industrie-Standard IAWPS-IF97, insb. 16,53 MPa für den Fall, daß es sich bei dem zu messenden Medium um Wasser handelt, oberhalb dessen das jeweils zu messende Medium jedenfalls nicht flüssig sein kann, und g$_{IAWPS-IF97}$ einer Medium spezifischen freien Enthalpie (Gibbs'sche freie Energie) gemäß dem Industrie-Standard IAWPS-IF97 entsprechen.

Die Auswahl der aktuell tatsächlich geeigneten Berechnungsvorschrift für den provisorische Dichte-Meßwert X'$_\rho$ und insoweit letztlich auch für den eigentlichen Dichte-Meßwert X$_\rho$ kann dabei automatisch und/oder im Dialog mit dem Anwender vor Ort bzw. via übergeordnetes Datenverarbeitungssystem halbautomatisch erfolgen - gegebenenfalls auch unter Berücksichtigung des aktuell gemessenen Drucks und der aktuell gemessenen Temperatur und/oder gemäß dem in der eingangs erwähnten WO-A 2004/023081 vorgeschlagenen Auswahlverfahren

Gemäß einer weiteren Ausgestaltung der Erfindung ist ferner vorgesehen, daß die Meßelektronik den Dichte-Meßwert auch unter Verwendung wenigstens eines, beispielsweise digital gespeicherten, numerischen Kompensationsfaktors K erzeugt, der mit einer entlang der Strömungsachse des Meßsystems auftretenden, meßsystem- und mediumspezifischen Ortsveränderlichkeit wenigstens einer thermodynamischen Zustandsgröße des Mediums, insb. der Temperatur, dem Druck oder der Dichte selbst, und/oder der mit einer entlang der Strömungsachse des Meßsystems auftretenden meßsystem- und mediumspezifischen Ortsveränderlichkeit der Reynoldszahl des strömenden Mediums korrespondiert.

Die vorgenannten Ortsveränderlichkeiten und insoweit der Kompensationsfaktor K können dabei zumindest für Meßsysteme mit gleichbleibenden Bedingungen vorab und/oder im Betrieb ermittelt werden, beispielsweise unter Berücksichtigung des tatsächlich zu messenden Mediums, insb. dessen chemische Zusammensetzung und/oder dessen thermodynamischen Eigenschaften. Die Ermittlung des Kompensationsfaktors K kann z.B. während einer Kalibrierung des Meßsystems mit bekanntem Referenzmedium und/oder während der Inbetriebnahme des Meßsystems vor Ort erfolgen. Für bestimmte Anwendungen, insb. mit Medien mit gleichbleibender chemischer Zusammensetzung und gleichbleibenden thermodynamischen Eigenschaften, kann es durchaus ausreichend sein den wenigstens einen Kompensationsfaktor K lediglich während der Inbetriebnahme des Meßsystems zumindest einmal zu ermitteln. Bei sich im Betrieb des Meßsystems hinsichtlich der Zusammensetzung und/oder den thermodynamischen Eigenschaften erheblich ändernden Medien, gegebenenfalls auch Zuge einer Auswechselung desselben, kann es aber durchaus von Vorteil sein, wenn die Meßelektronik den Kompensationsfaktor K auch nach der Inbetriebnahme während des Betriebs des Meßsystems wiederkehrend ermittelt. Die Ermittlung des wenigsten einen Kompensationsfaktors K kann dabei beispielsweise anhand einer vorgegebenen, gegebenenfalls im Dialog mit dem Anwender - vor Ort oder entfernt - und/oder extern der Meßelektronik ermittelten, spezifischen Wärmekapazität, $c_p$, des aktuellen Mediums durchgeführt werden. Beispielsweise kann die Wärmekapazität, $c_p$, öder auch andere für die Spezifizierung des aktuell zu messenden Mediums vom übergeordneten Datenverarbeitungssystem an die Meßelektronik gesendet und insoweit an das Meßsystem übermittelt werden.

Nach einer anderen Weiterbildung der Erfindung weist die Meßelektronik, insb. zur Vereinfachung der Ermittlung des Kompensationsfaktors K, wenigstens einen, insb. nicht-flüchtigen, Datenspeicher 16 zum Speichern von Meßsystemparametern auf, die für den Betrieb des Meßsystems, insb. zur Definition von dessen Meß- und Übertragungsfunktionalitäten, erforderlich sind. Im besonderen ist hierbei ferner vorgesehen, daß der, beispielsweise als Tabellenspeicher ausgebildete und/oder nicht-flüchtige, Datenspeicher den wenigstens einen Kompensationsfaktor K zumindest zeitweise vorhält, falls erforderlich auch bei abgeschalteter Meßelektronik. Beispielsweise kann der Datenspeicher hiefür auch eine Vielzahl von vorab für verschiedene Medien und/oder für verschiedene Einbausituationen ermittelten Kompensationsfaktoren vorhalten, so daß die Meßelektronik den wenigstens einen aktuell tatsächlich Kompensationsfaktor K unter Berücksichtigung des aktuellen Mediums sowie der aktuellen Einbausituation aus der Vielzahl von im Datenspeicher vorgehaltenen Kompensationsfaktoren auswählen kann.

Insbesondere auch zur Ermittlung des Kompensationsfaktor K ist gemäß einer weiteren Ausgestaltung der Erfindung ferner vorgesehen, daß der Datenspeicher wenigstens einen lediglich das aktuell zu messenden Medium spezifizierenden Meßsystemparameter SP$_M$ erster Art zumindest zeitweise vorhält und daß die Meßelektronik den Dichte-Meßwert X$_\rho$ unter Verwendung zumindest des wenigstens einen Meßsystemparameters SP$_M$ erster Art ermittelt. Bei dem Meßsystemparameter SP$_M$ erster Art kann es sich beispielsweise um eine spezifische Wärmekapazität, $c_p$,

des aktuell zu messenden Mediums, eine molare Masse, *n,* des Mediums und/oder die durch den molekularen Aufbau des Mediums bestimmte Anzahl, f, von Schwingungsfreiheitsgraden der Atome bzw. Moleküle des Mediums und/oder daraus abgeleitete Parameter, wie z.B. den, gegebenenfalls auch gemäß einem der Industrie-Standards AGA 8, AGA NX-19, SGERG-88 IAWPS-IF97, ISO 12213:2006 ermittelten Realgas- oder auch (Super-) Kompressibilitätsfaktor handeln. Insoweit ist es ohne weiteres einsichtig, daß im Datenspeicher dementsprechend auch zwei oder mehr solcher, das aktuell zu messenden Medium gleichsam spezifizierender Meßsystemparameter $SP_M$ erster Art von verschiedener Dimension und/der Maßeinheit vorgehalten sein können.

Gemäß einer weiteren Ausgestaltung der Erfindung ist des weiteren vorgesehen, daß der Datenspeicher wenigstens einen sowohl das aktuell zu messenden Medium als auch eine momentane Einbausituation des Meßsystems spezifizierenden Meßsystemparameter $SP_{ME}$ zweiter Art zumindest zeitweise vorhält, und daß die Meßelektronik den Dichte-Meßwert $X\rho$ unter Verwendung zumindest des Meßsystemparameters $SP_{ME}$ zweiter Art ermittelt, insb. aber auch unter Verwendung des Meßsystemparameters $SP_M$ erster Art. Die Einbausituation ist dabei - zumindest in einem für die Ermittlung des Dichte-Meßwerts erheblichen Maße - durch die Anordnung von Druck-, Temperatur- und Dichtemeßstelle relativ zueinander sowie jeweils durch Form und Größe der Prozeßleitung im Bereich der Druck-, Dichte- und/oder Temperaturmeßstelle bestimmt. Daher kann der Meßsystemparameter $SP_{ME}$ zweiter Art beispielsweise ein Teil eines die Meßstellen hinsichtlich ihrer tatsächlichen Position und tasächliche Ausprägung der Prozeßleitung im Bereich der Meßstellen sowie auch die thermodynamischen Eigenschaften des aktuell zu messenden Mediums reflektierenden Parametersatzes oder auch der numerische Wert eines selbige Einflüsse entsprechend berücksichtigenden, beispielsweise experimentell und/oder empirisch, gegebenenfalls auch unter Verwendung Meßsystemparameters $SP_M$ erster Art erst im Betrieb des Meßsystems definitiv ermittelten, Komplexparameters sein.

Nach einer weiteren Ausgestaltung der Erfindung ist ferner vorgesehen, daß die Meßelektronik zumindest zeitweise, insb. vom übergeordneten Datenverarbeitungssystem telegraphierte und/oder zeitnah ermittelte, numerische Parameterwerte für wenigstens einen zu messendes Medium und/oder eine momentane Einbausituation des Meßsystems spezifizierenden Meßsystemparameter $SP_M$, $SP_{ME}$ empfängt, beispielsweise also die Wärmekapazität, $c_P$, für aktuell und/oder künftig zu messendes Medium. Die Wärmekapazität, $c_P$, oder auch ein gleichermaßen übertragener anderer Systemparameter $S_M$ erster Art kann dabei durch eine entsprechende, beispielsweise von der Dichte-Meßstelle und/oder auch extern des Meßsystems durchgeführte, Messung und/oder eine anwenderseitige Eingabe vorab ermittelt werden, gegebenenfalls auch unter Verwendung des übergeordneten Datenverarbeitungssystem. Ferner ist daher beim erfindungsgemäßen Meßsystem vorgesehen, daß die zumindest zeitweise - leitungsgebunden und/oder per Funk - mit dem übergeordneten elektronischen Datenverarbeitungssystem kommunizierende Meßelektronik den Dichte-Meßwert an das Datenverarbeitungssystem sendet und/oder daß die Meßelektronik zumindest zeitweise numerische, insb. inform eines standardisierten Telegramms, Parameterwerte für das zu aktuell messende Medium, beispielsweise also dessen thermodynamischen Eigenschaften und/oder dessen chemische Zusammensetzung, spezifizierende Meßsystemparameter $SP_M$ erster Art vom Datenverarbeitungssystem empfängt. Falls erforderlich kann ist es ferner auch möglich, Meßsystemparameter $SP_{ME}$ zweiter Art mittels des Datenverarbeitungssystem zu ermitteln und inform numerischer Parameterwerte direkt an die Meßelektronik zu senden.

Für den vorbeschriebenen Fall, daß die Meßelektronik im Betrieb anhand von Systemparametern $S_M$ erster Art zumindest zeitweise die spezifische Wärmekapazität, $c_p$, des aktuell zu messenden Mediums selbsttätig ermitteln soll, kann dies beispielsweise basierend auf der Vorschrift:

$$c_P = \left(1 + \frac{f}{2}\right) \cdot \frac{R}{n} \, , \, (3)$$

erfolgen, worin *n* dem Meßsystemparameter der molaren Masse, *R* der absoluten Gaskonstante mit R= 8.3143 J / (K · mol) und *f* dem Meßsystemparameter Anzahl von Schwingungsfreiheitsgraden der Atome bzw. Moleküle des aktuell zu messenden Mediums entsprechen.

Gemäß einer weiteren Ausgestaltung der Erfindung ist vorgesehen, den Kompensationsfaktor so zu bestimmen, daß er lediglich durch das aktuell zu messende Medium, insb. dessen chemische Zusammensetzung sowie den davon unmittelbar abgeleiteten physikalischen Eigenschaften, sowie die konkrete Ausführung des Meßsystems hinsichtlich der Einbaumaße und -positionen der einzelnen Meßstellen sowie Größe und Form der Prozeßleitung im Bereich der Meßstellen bestimmt ist, so daß er letztlich weitgehend unabhängig vom real gemessenen Meßgrößen Druck und Temperatur ist.

Dem Rechnung tragend und in Anbetracht dessen, daß die in Rede stehend räumliche Varianz des thermodynamischen Zustand bzw. des Strömungszustands des strömenden Medium und damit einhergehnd die Meßgenauigkeit solcher Meßsysteme durchaus auch von der tatsächlichen Strömungsgeschwindigkeit des Mediums selbst mitbestimmt sein kann, ist gemäß einer weiteren Ausgestaltung der Erfindung ferner vorgesehen, daß die Meßelektronik

den Dichte-Meßwert $X\rho$ unter Verwendung wenigstens eines sowohl von einer Strömungsgeschwindigkeit des Mediums als auch von der an der Temperaturmeßstelle herrschenden lokalen Temperatur abhängigen, zur Laufzeit ermittelten Dichte-Korrekturwerts $X_K$ ermittelt. Dieser Dichte-Korrekturwert $X_K$ ist dabei so ausgebildet, daß er mit einer, insb. durch das aktuell zu messende Medium sowie eine momentane Einbausituation bedingten und/oder entlang der Strömungsachse des Meßsystems auftretenden, momentanen Ortsveränderlichkeit wenigstens einer thermodynamischen Zustandsgröße des Mediums und/oder der mit einer, insb. durch das Medium und/oder die Bauart des Meßsystems bedingten und/oder entlang der Strömungsachse des Meßsystems auftretenden, momentanen Ortsveränderlichkeit der Reynoldszahl des strömenden Mediums korrespondiert.

Dafür ist gemäß einer weiteren Ausgestaltung der Erfindung vorgesehen, daß in der Meßelektronik zumindest zeitweise ein entsprechender Geschwindigkeits-Meßwert $X_v$ verfügbar ist, der eine möglichst aktuelle Strömungsgeschwindigkeit des im Meßsystem strömenden Mediums momentan repräsentiert.

Unter Verwendung des Geschwindigkeits-Meßwert $X_v$ und des Temperaturmeßwerts $X\vartheta$ sowie des bereits erwähnten Kompensationsfaktors K kann dann der Dichte-Korrekturwert $X_K$ mittels der Meßelektronik basierend auf der Vorschrift:

$$X_K = \frac{1}{\left(1 + K \cdot \dfrac{X_v^2}{X_\vartheta}\right)} \quad (4)$$

sehr einfach ermittelt werden. Zumindest für den oben beschriebenen Fall, daß die Meßelektronik 100 den provisorischen Dichte-Meßwert $X'\rho$ mittels eines auf der Berechnungsvorschrift (1) und/oder auf der Berechnungsvorschrift (2) basierenden Rechenalgorithmus ermittelt, kann der Dichte-Meßwert $X\rho$ für die virtuell gemessene Dichte unter Verwendung sowohl des provisorische Dichte-Meßwerts $X'\rho$ als auch des Dichte-Korrekturwerts $X_K$ weiterführend auf der Vorschrift:

$$X_\rho = X'_\rho \cdot X_K \quad (5)$$

sehr einfach und schnell ermittelt.

Dementsprechend ist gemäß einer weiteren Ausgestaltung der Erfindung die Meßelektronik so konfiguriert, daß sie den Dichte-Meßwert $X\rho$ unter Anwendung der vorgenannten Berechnungsvorschriften (4), (5) sowie (1) bzw. (2) zumindest zeitweise basierend auf der Vorschrift:

$$X_\rho = \frac{n \cdot X_P}{z \cdot R_M \cdot \left(X_\vartheta + K \cdot X_v^2\right)} = \frac{n \cdot X_P}{z \cdot R_M \cdot X_\vartheta} \cdot \frac{1}{\left(1 + K \cdot \dfrac{X_v^2}{X_\vartheta}\right)} \quad (6)$$

und/oder zumindest zeitweise basierend auf der Vorschrift:

$$X_\rho = \pi_{IAWPS-IF97} \cdot \dot{\gamma}_{IAWPS-IF97} \cdot \frac{1}{\left(1 + K \cdot \dfrac{X_v^2}{X_\vartheta}\right)} = \frac{X_p}{P^*_{IAWPS-IF97}} \cdot \frac{g_{IAWPS-IF97}}{R_M \cdot X_\vartheta} \cdot \frac{1}{\left(1 + K \cdot \dfrac{X_v^2}{X_\vartheta}\right)}$$

$$(7)$$

ermittelt.

Zur Prüfung der Plausibilität des momentan ermittelten Dichte-Meßwert, beispielsweise im Zuge einer Selbstvalidierung des Meßsystems, vergleicht die Meßelektronik gemäß einer weiteren vorteilhaften Ausgestaltung der Erfindung den Dichte-Korrekturwert $X_K$ im Betrieb wiederkehrend mit wenigstens einem vorgegebenenmeßsystemspezifischen Referenzwert. Weiterführend ist hierbei vorgesehen, daß die Meßelektronik basierend auf dem Vergleich von Dichte-Korrekturwert $X_K$ und Referenzwert eine momentane Abweichung der Dichte-Korrekturwerts $X_K$ vom Referenzwert quantitativ signalisiert und/oder zeitweise einen Alarm generiert, der eine unerwünschte, insb. unzulässig hohe, Diskrepanz zwischen Dichte-Korrekturwerts $X_K$ und zugehörigem Referenzwert signalisiert. Alternativ oder in Ergänzung dazu ist die Meßelektronik ferner so ausgebildet, daß sie im Betrieb wiederkehrend einen Dichtefehler ermittelt, der mit einer, insb. relativen, Abweichung von, insb. im obigen Sinne standardgemäß ermitteltem, provisorischem Dichte-Meßwert $X'\rho$ und Dichte-Meßwert $X\rho$ korrespondiert, auch inform eines numerischen Dichtefehler-Werts ausgibt. Eine unzulässige hohe Diskrepanz zwischen provisorischem Dichte-Meßwert $X'\rho$ und Dichte-Meßwert $X\rho$ bzw. zwischen Dichte-Korrekturwert $X_K$ und zugehörigem Referenzwert kann beispielsweise auf eine fehlerhaft parametrierte Meßelektronik bzw. einen unerwartete Veränderung des zu messenden Mediums und/oder eine Störung einer die Prozeßleitung umfassenden Anlage zurückzuführen sein. Dem Rechnung tragend ist gemäß einer Ausgestaltung der Erfindung vorgesehen, daß die Meßelektronik den Dichte-Korrekturwert $X_K$ bei der Generierung des Dichte-Meßwerts $X\rho$ lediglich dann verwendet, wenn er mindest eins beträgt, insb. in einem Bereich zwischen 1 und 1,2 liegt. Gemäß einer dazu alternativen Ausgestaltung, ist die Meßelektronik so konfiguriert, daß sie den Dichte-Korrekturwert $X_K$ bei der Generierung des Dichte-Meßwerts $X\rho$ lediglich dann verwendet, wenn er höchstens eins beträgt, insb. in einem Bereich zwischen 0,8 und 1 liegt. Zu dem kann es für den Anwender zu dem von Vorteil sein, wenn die Meßelektronik den momentanen Dichtefehler inform eines numerischen Dichtefehler-Werts ausgibt und/oder mit wenigstens einem vorgegebenen Referenzwert vergleicht und basierend auf diesem Vergleich zeitweise einen Alarm generiert, der eine unerwünschte, insb. unzulässig hohe, Diskrepanz zwischen provisorischem Dichte-Meßwert $X'\rho$ und Dichte-Meßwert $X\rho$ signalisiert, beispielsweise vor Ort mittels des Anzeigeelements HMI.

Nach einer Weiterbildung der Erfindung ist das Meßsystem ferner, insb. auch zum Zwecke der selbsttätigen und zeitnahen Ermittlung des Dichte-Korrekturwerts $X_K$, mit wenigstens einem an einer Geschwindigkeitsmeßstelle $M_v$ plazierten Strömungssensor ausgerüstet, der - primär auf eine lokale, insb. über einen Querschnitt der Prozeßleitung gemittelte, Strömungsgeschwindigkeit des zu messenden Mediums, insb. auch Änderungen derselben, reagierend - wenigstens ein von der lokalen Strömungsgeschwindigkeit beeinflußtes Strömungsmeßsignal $X_v$ liefert. Im Betrieb kommunizieren Meßelektronik 100 und Strömungssensor daher zumindest zeitweise miteinander, zumindest derart, daß die Meßelektronik das vom Strömungssensor generierte Strömungsmeßsignal $x_v$ zumindest zeitweise zur Verfügung steht. Im besonderen ist hierbei ferner vorgesehen, daß die Meßelektronik den Dichte-Meßwert $X\rho$ auch unter Verwendung auch des Strömungsmeßsignals ermittelt. Zumindest dafür kommuniziert die Meßelektronik zumindest zeitweise auch mit dem Strömungssensor, z.B. auch via externem Feldbus und/oder drahtlos per Funk. Des weiteren ist vorgesehen den Dichte-Meßwert mittels der Meßgerät-Elektronik in der Weise zu generieren, daß er eine örtliche Dichte des Mediums im Bereich des Strömungssensors repräsentiert.

Im hier gezeigten Ausführungsbeispiel ist zumindest der Strömungssensor, insb. aber auch eines der Elektronikmodule der Meßelektronik, mittels eines, beispielsweise als Kompaktgerät ausgebildeten, industrietauglichen In-Line-Meßgeräts für strömende Medien bereitgestellt. Das In-Line-Meßgerät umfaßt wenigstens ein im Betrieb vom zu messenden Medium durchströmtes, insb. unmittelbar in den Verlauf der Prozeßleitung eingesetztes und insoweit ein Leitungssegment derselben bildendes, im wesentlichen starres und ausreichend druckfestes Trägerrohr, an und/oder in dem der eigentliche Strömungssensor entsprechend angebracht ist. Je nach Anwendungsfall kann das Trägerrohr beispielsweise aus Metall, Kunststoff und/oder Keramik bestehen.

Bei dem hier exemplarisch gezeigten Ausführungsbeispiel wird der Strömungssensor von einem in den Verlauf der Prozeßleitung eingesetzten, als Wirbeldurchflußmesser ausgebildeten, kompakten In-Line-Meßgerät bereit gestellt. Solche Wirbeldurchflußmesser dienen herkömmlicherweise dazu, eine Strömungsgeschwindgkeit und/oder einen Volumendurchfluß von strömenden Medien, insb. von hoher Temperatur und/oder hohem Druck, als primäre physikalische Meßgröße hochgenau zu erfassen.

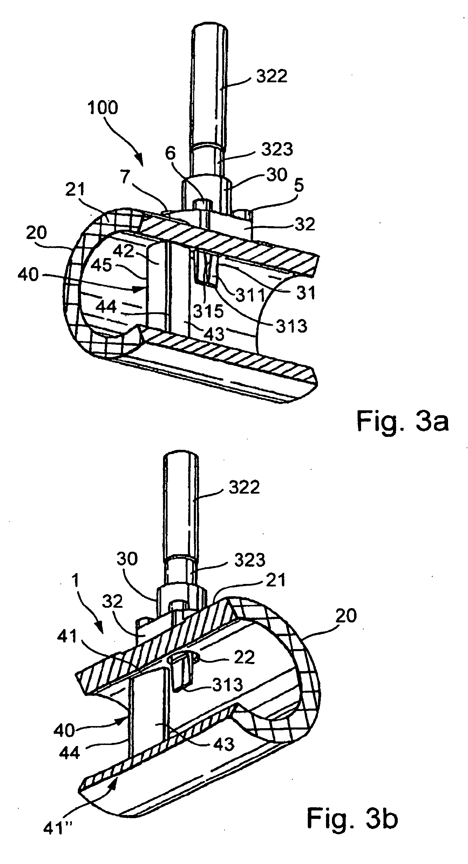

Die in den Fig. 3a und 3b gewählten Ansichten zeigen den Wirbeldurchflußmesser - einerseits in Strömungsrichtung gesehen (Fig. 3a) und andererseits gegen die Strömungsrichtung gesehen (Fig. 3b) - perspektivisch im Schnitt. Der Wirbeldurchflußmesser weist einen an einer Rohrwand 21 eines faktisch ein Leitungssegment der Prozeßleitung bildenden Trägerrohrs 20 fixierten und durch eine darin eingebrachte Bohrung 22 hindurch ragenden Wirbelsensor 30 auf, der im obigen Sinne als Strömungssensor dient. Dieser kann beispielsweise ein dynamisch kompensierter Wirbelsensor mit einem an ein in das Medium eintauchenden Paddel und einem dessen Deformationen erfassenden kapazitiven Geberelement sein, wie er u.a. auch in der US-A 60 03 384 beschrieben ist.

Im Innerem des Trägerrohrs 20, das selbst beispielsweise mittels entsprechender Flanschverbindung in die Rohrleitung eingesetzt ist, ist entlang eines von dessen Durchmessern ferner ein Staukörper 40 angeordnet, der mit dem Trägerrohr 20 unter Bildung einander diametral gegenüberliegenden Fixierstellen 41, 41* fest verbunden ist. Das Zentrum der Bohrung 22 und das Zentrum der Fixierstelle 41 liegen auf einer Mantellinie des Trägerrohrs 20. Der Staukörper 40 hat eine Prallfläche 42, gegen die im Betrieb zu messendes Medium anströmt. Der Staukörper 40 hat ferner zwei Seitenflächen, von denen lediglich eine (vordere) Seitenfläche 43 in den Fig. 3a und 3b zu sehen ist. Von der Prallfläche 42 und den Seitenflächen werden zwei Abrisskanten gebildet, von denen lediglich eine (vordere) Abrisskante 44 vollständig und eine (hintere) Abrisskante 45 andeutungsweise in Fig. 3a zu sehen sind. Der Staukörper 40 der Fig. 3a und 3b hat hier im wesentlichen die Form einer geraden Dreieck-Säule, also einer Säule mit einem dreieckigen Querschnitt. Falls erforderlich können selbstverständlich auch anders geformte Staukörper zur Realisierung des erfindungsgemäßen Meßsystems verwendet werden.

Durch das Anströmen des Mediums gegen die Prallfläche 42 bildet sich stromabwärts vom Staukörper 40 in der bekannten Weise eine Karman'sche Wirbelstraße aus, indem an jeder Abrißkante abwechselnd Wirbel abreißen, die dann im strömenden Medium mitschwimmen. Diese von der Strömung mitgenommenen Wirbel erzeugen wiederum lokale Druckschwankungen im strömenden Medium, deren zeitbezogene Abriß-Häufigkeit, also deren sogenannte Wirbelfrequenz, ein Maß für die Strömungsgeschwindigkeit und/oder den Volumendurchfluß des Mediums ist. Die von den mitschwimmenden Wirbeln ausgelösten Druckschwankungen werden mittels des - hier mittels Paddels - gebildeten, stromabwärts des Staukörpers plazierten Wirbelsensors 30 in ein mit der mit der lokale Strömungsgeschwindigkeit korrespondierendes, als elektrisches Strömungsmeßsignal $x_v$ dienendes Wirbelsignal entsprechend umgeformt.

Das Geberelement 36 erzeugt das oben erwähnte Meßsignal, dessen Frequenz proportional zum Volumendurchfluß des strömenden Mediums ist.

Der Wirbelsensor 30 ist stromabwärts vom Staukörper 40 in die Bohrung 22 der Rohrwand 21 des Trägerohrs 20 eingesetzt und dichtet die Bohrung 22 zur Mantelfläche des Trägerrohrs 20 hin ab, wozu der Wirbelsensor 30 mit der Rohrwand 21 verschraubt ist. Hierzu dienen z. B. vier Schrauben, von denen in den Fig. 3a und 3b die Schrauben 5, 6, 7 zu sehen sind. Vom Wirbelsensor 30 ist eine in den Fig. 3a und 3b in das Innere des Trägerrohrs 20 durch die Bohrung 22 der Rohrwand 21 hindurch ragende keilförmige Sensorfahne 31 und eine Gehäusekappe 32 zu sehen. Die Gehäusekappe 32 läuft unter Einfügung eines dünnwandigen Zwischenstücks 323 in eine Verlängerung 322 aus, vgl. hierzu auch die bereits erwähnte US-A 60 03 384. Die Sensorfahne 31 hat Hauptflächen, von denen in den Fig. 3a und 3b nur die Hauptfläche 311 zu sehen ist. Die Hauptflächen fluchten mit der erwähnten Mantellinie des Trägerohrs 20 und bilden eine Frontkante 313. Die Sensorfahne 31 kann auch andere geeignete Raumformen haben; so kann sie z. B. zwei parallele Hauptflächen aufweisen, die zwei parallele Frontkanten bilden. Die Sensorfahne 31 ist kürzer als der Durchmesser des Trägerrohrs 20; sie ist ferner biegesteif und kann beispielsweise ein Sackloch aufweisen, in dem ein die Temperatur des Mediums detektierendes, gegebenenfalls der Generierung des Temperatur-Meßsignal und insoweit auch der Realisierung der Temperatur-Meßstelle selbst dienendes, als Thermoelement oder Widerstandsthermometer ausgebildetes, Geberelement eingebracht sein kann, vgl. hierzu auch die bereit erwähnten US-B 69 88 418 oder der US-B 69 10 387. Damit das Sackloch 314 einen ausreichenden Durchmesser hat, treten aus den Hauptflächen Wandteile hervor, von denen in Fig. 3a der Wandteil 315 angedeutet ist. Das Sackloch 314 reicht bis in die Nähe der Frontkante 313 und hat dort einen Boden.

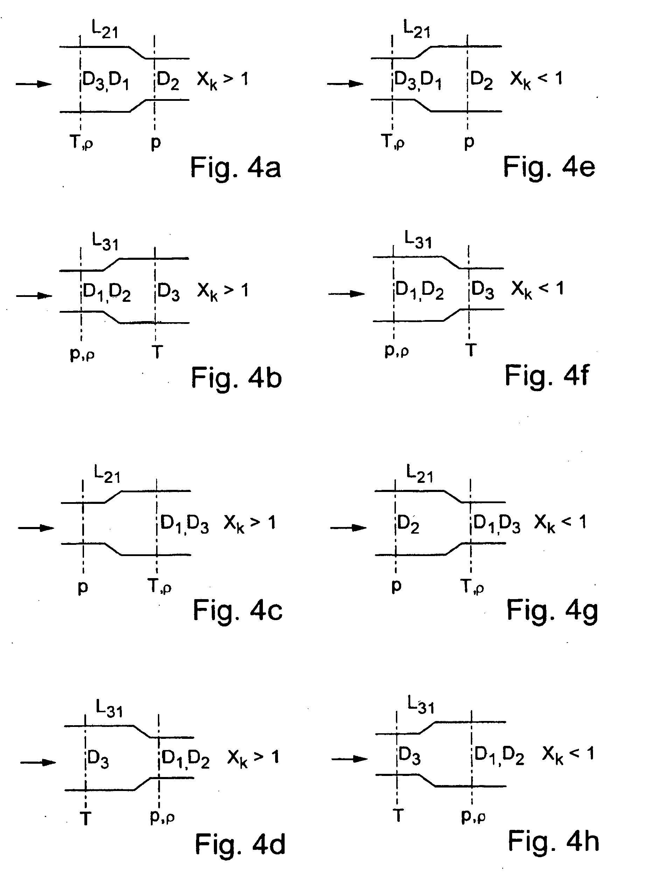

Zum Wirbelsensor 30 gehört ferner eine die Bohrung 22 überdeckende Membran 33 mit einer dem Medium zugewandten ersten Oberfläche 331 und einer vom Medium abgewandten zweiten Oberfläche 332, siehe die Fig. 3 und 4. An der Oberfläche 331 ist die Sensorfahne 31 fixiert und an der Oberfläche 332 ein auf deren Verbiegungen bzw. Bewegungen reagierend physikalisch-elektrisches Geberelement 36. Sensorfahne 31, Membran 33 sowie deren ringförmiger Rand 333 können aus einem einzigen Materialstück, z. B. Metall, insb. Edelstahl, hergestellt sein.

Es sei an dieser Stelle erwähnt, daß anstelle des hier exemplarisch gezeigten Wirbeldurchflußmessers mit wenigstens einem in ein Lumen der Prozeßleitung hineinragenden, in das Medium eintauchenden Staukörper und wenigstens einem, insb. zumindest anteilig in ein Lumen der Prozeßleitung hineinragende, stromabwärts des wenigstens einen Staukörpers angeordneten Strömungssensor selbstverständlich auch andere, in der Prozeßautomatisierungstechnik gleichsam etablierte In-Line-Meßgeräte zur Bereitstellung des wenigstens einen besagtes Strömungsmeßsignal liefernden Strömungssensors und insofern zur Bildung der Strömungsmeßstelle als solche verwendet werden können, wie z.B. magnetisch-induktive Durchflußmesser, thermische Durchflußmesser, Differenzdruck-Durchflußmesser, Ultraschall-Durchflußmeßgeräte oder dergleichen. Der Strömungssensor selbst kann dabei, wie bei derartigen Meßgräten auch üblich und abhängig vom realisierten Meßprinzip, mittels wenigstens eines elektrischen, insb. zumindest zeitweise von einem Heizstrom durchflossenen, Widerstandselements, mittels wenigstens einer, insb. strömendes Medium berührend, elektrische Potentiale abgreifenden Meßelektrode, mittels wenigstens eines auf Veränderungen des Strömungsparameters reagierenden Meßkondensators und/oder mittels wenigstens eines piezoelektrischen und/oder mittels wenigstens eines piezoresistiven Elements gebildet sein. Bei dem Strömungssensor kann es sich, insb. bei Verwendung eines Meßkondensators und/oder eines piezoelektrischen bzw. piezoresistiven Elements zur Bildung des Strömungssensors, um einen solchen handeln, der zur Generierung des Meßsignals im Betrieb unter Einwirkung des im Meßsystem strömenden Mediums wiederholt mechanischen Verformungen unterworfen ist und/oder der im Betrieb unter Einwirkung des im Meßrohr strömenden Mediums wiederholt relativ zu einer statischen Ruhelage bewegt ist, wie dies neben vorgenannten den Strömungsparameter anhand von in der Strömung unter Bildung einer Karmánsche-Wirbelstraße mitschwimmenden Wirbeln messenden In-Line-Meßgeräten z.B. auch bei solchen In-Line-Meßgeräten üblicherweise der Falls ist, die Strömungsparameter der in rede stehenden Art anhand von Druckdifferenzen messen. Für letzteren Fall kann der wenigstens eine Strömungssensor beispielsweise mittels wenigstens eines einen Querschnitt der Prozeßleitung verengenden Strömungshindernisses, insb. einer Blende oder einer Düse, sowie mittels wenigstens eines Differenzdrucksensors gebildet ist, der eine über dem Strömungshindernis auftretende Druckdifferenz erfaßt und ein diese repräsentierendes Druckdifferenzmeßsignal liefert. Der wenigstens eine Differenzdrucksensor kann dabei z.B. anteilig mittels des an der Druckmeßstelle plazierten Drucksensors gebildet ist. Alternativ zu den vorgenannten Sensor- bzw.

Meßgerättypen kann der wenigstens eine Strömungssensor darüber hinaus im Zusammenspiel mit einem Leitungssegment der Prozeßleitung auch gebildet sein, indem- mittels eines entsprechenden Schwingungserregers aktiv von außen und/oder passiv vom Medium selbst angeregte - Vibrationen selbigen Leitungssegments mittels wenigstens eines mechanische Schwingungen, beispielsweise elektrodynamisch oder opto-elektronisch, erfassenden Geberelements detektiert und in ein entsprechendes Schwingungssignal gewandelt werden, wie dies beispielsweise auch bei Coriolis-Massedurchflußmessern bekanntlich der Fall ist. Marktgängige Coriolis-Massedurchflußmesser sind üblicherweise als Kompakt-Meßgerät angebotene In-Line-Meßgeräten, bei denen wenigstens ein mittels Flanschen in den Verlauf der Prozeßleitung eingesetztes, außen mit Schwingungserregern und -sensoren bestücktes, Meßrohrs das im Betrieb zumindest zeitweise vibrierenden Leitungssegment bildet.

Die Verwendung von Meßsystem mit einem In-Line-Meßgerät der vorgenanten Art ermöglicht es somit zusätzlich zur virtuell gemessenen Dichte weitere Meßgröße, insb. eines Massedurchflusses, eines Volumendurchflusses, einer Strömungsgeschwindigkeit, einer Viskosität, eines Drucks, einer Temperatur und/oder dergleichen, des in der Prozeßleitung strömenden Mediums gleichermaßen hoch genau zu ermitteln, gegebenenfalls auch in Echtzeit.

Zumindest bei der Verwendung auch eines Meßsystem internen Strömungssensors kann darüber hinaus auch der oben erwähnte Kompensationsfaktor K ohne weiteres vorab ermittelt, insb. auch naß kalibriert werden. Beispielsweise Kompensationsfaktor K sehr einfach so gewählt sein, daß die Vorschrift:

$$K = \Delta X\rho \cdot \frac{X_{\vartheta}}{X_{\backslash}^{2}} \quad (8)$$

erfüllt. Darin entspricht $\Delta X\rho$ einer vorab, insb. im Zuge einer Kalibrierung desselben und/oder eines im wesentlichen typgleichen Meßsystems mit bekanntem Referenzmedium und/oder im Zuge der Inbetriebnahme des Meßsystems vor Ort, ermittelten, z.B. errechneten und/oder gemessenen, Meßsystem spezifischen Abweichung, die der provisorische Dichte-Meßwert X'ρ, ermittelt für ein zumindest hinsichtlich seiner tatsächlichen Dichte, $\rho_{Ref}$, definiertes Referenzmedium, von selbiger Dichte, $\rho_{Ref}$, des Referenzmediums aufweist. Insoweit kann $\Delta X\rho$ praktisch auch als dem Meßsystem innewohnender Meßfehler angesehen werden, mit dem der mittels des Meßsystems selbst ermittelte provisorische Dichte-Meßwert X'ρ im Vergleich zur tatsächlichen Dichte an der virtuellen Meßstelle behaftet ist. In Kenntnis des provisorischen Dichte-Meßwert X'ρ wie auch der tatsächlichen Dichte, $\rho_{Ref}$, des Referenzmediums kann dieser Meßfehler wie folgt quantifiziert werden:

$$\Delta X\rho = \left( \frac{X'_{\rho}}{\rho_{Ref}} - 1 \right), \quad (9)$$

so daß der Kompensationsfaktor K folglich so zu wählen ist, daß er die Vorschrift:

$$K = \Delta X\rho \cdot \frac{X_{\vartheta}}{X_{v}^{2}} = \left( \frac{X'_{\rho}}{\rho_{Ref}} - 1 \right) \cdot \frac{X_{\vartheta}}{X_{v}^{2}} \quad (10)$$

möglichst exakt erfüllt. Alternativ oder in Ergänzung dazu ist zumindest bei Verwendung eines Meßsystem internen Strömungssensors ist aber durchaus auch möglich, den Kompensationsfaktor K experimentell mittels eines Referenz-Meßsystem und entsprechenden Referenzmedien und/oder rechnerbasiert zu ermitteln und basierend darauf weitere numerischen Werte für den Kompensationsfaktor K für andere zum Referenz-Meßsystem ähnliche Meßsysteme und/oder andere Medien zu extrapolieren.

Nach einer weiteren Ausgestaltung der Erfindung ist zudem vorgesehen, daß die Meßelektronik unter Verwendung zumindest des Strömungsmeßsignals ferner auch einen, insb. digitalen, Geschwindigkeits-Meßwert $X_v$, der die Strömungsgeschwindigkeit des strömenden Mediums momentan repräsentiert, und/oder daß die Meßelektronik unter Verwendung zumindest des Strömungsmeßsignals auch einen, beispielsweise digitalen, Volumendurchfluß-Meßwert $X_v$, der eine Volumendurchflußrate des strömenden Mediums momentan repräsentiert, ermittelt. Alternativ oder in Ergänzung dazu kann die Meßelektronik unter Verwendung zumindest des Temperatur-Meßsignals und des Druck-Meßsignals bzw. des daraus abgeleiten Dichte-Meßwerts sowie des Strömungsmeßsignals bzw. des daraus abgeleiteten Volumendurchfluß-Meßwerts im Betrieb ferner einen, beispielsweise digitalen, Massedurchfluß-Meßwert $X_m$, der eine Massendurchflußrate des strömenden Mediums oder einen totalisierten Massendurchfluß momentan repräsentiert, ermitteln.

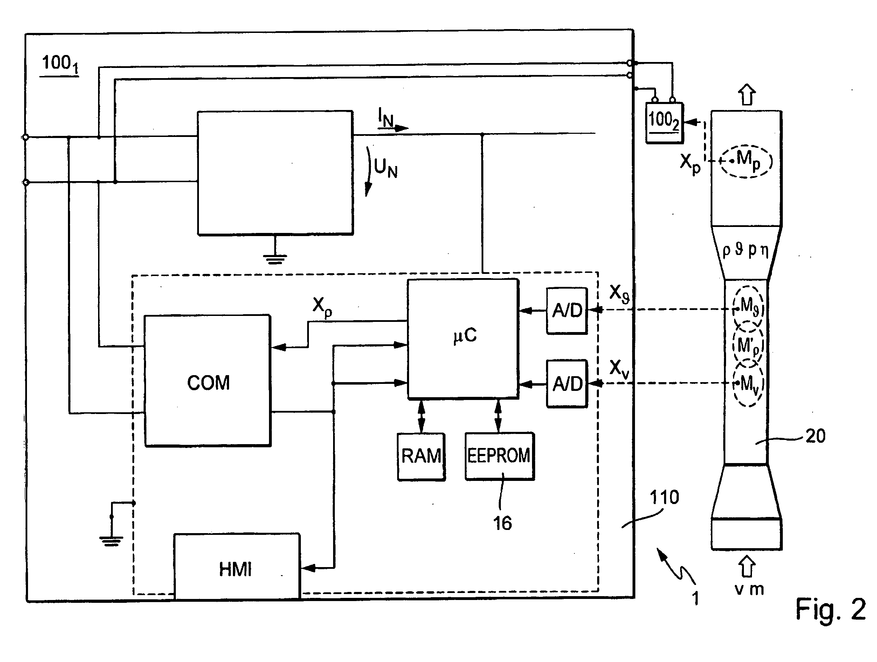

Zur Vereinfachung des Aufbaus des Meßsystems und damit einhergehend zur weiteren Verbesserung der Genauigkeit des Dichte-Meßwert kann der Strömungssensor in vorteilhafter Weise so plazierte werden, daß, wie beispielsweise auch in der US-B 69 88 418 oder der US-B 69 10 387 vorgeschlagen, zumindest die Strömungsmeßstelle und die Temperaturmeßstelle oder daß, wie beispielsweise auch in der US-B 70 07 556 vorgeschlagen, zumindest die Strömungsmeßstelle und die Druckmeßstelle einander zumindest teilweise überlappen, insb. koinzident sind. Alternativ oder in Ergänzung dazu kann die Strömungsmeßstelle aber auch, wie auch in den Fig. 1 und 2 schematisiert dargestellt, von der Temperaturmeßstelle und/oder der Druckmeßstelle entfernt angeordnet sein, beispielsweise stromaufwärts der Temperaturmeßstelle und/oder stromaufwärts der Druckmeßstelle.

Gemäß einer Weiterbildung der Erfindung ist ferner vorgesehen, den Temperatursensor des Meßsystems und/oder den Drucksensor, wie beispielsweise auch in der US-B 69 88 418, der US-B 69 10 387 oder US-B 66 51 512 vorgeschlagen, ebenfalls mittels des, beispielsweise als Kompakt-Meßgerät ausgebildeten, den Strömungssensor vorhaltenden In-Line-Meßgeräts bereitzustellen.

Nach einer weiteren Ausgestaltung der Erfindung sind die virtuelle Dichte-Meßstelle und die Strömungsmeßstelle so gewählt, daß das Medium an der virtuellen Dichtemeßstelle einen thermodynamischen Zustand aufweist, der einem thermodynamischen Zustand des Mediums an der Geschwindigkeitsmeßstelle entspricht und/oder daß das Medium an der virtuellen Dichtemeßstelle und Geschwindigkeitsmeßstelle im wesentlichen gleiche Reynoldszahlen aufweist. Dies kann beispielsweise dadurch erreicht werden, daß die die virtuelle Dichtemeßstelle so definiert ist, daß sie und die Strömungsmeßstelle einander zumindest teilweise überlappen, insb. koinzident sind. Anders gesagt soll also der Dichte-Meßwert derart ermittelt werden, daß er eine örtliche Dichte des Mediums im Bereich des Strömungssensors und somit auch die lokale Dichte des Mediums an der Geschwindigkeitsmeßstelle genau repräsentiert.

Zur weiteren Vereinfachung der Messung ist gemäß einer weiteren Ausgestaltung des Meßsystems ist vorgesehen, daß die Prozeßleitung zumindest abschnittsweise, insb. im Bereich zwischen Dichte-Meßstelle und Druck-Meßstelle und/oder zwischen Dichte-Meßstelle und Temperatur-Meßstelle, als eine, insb. im Querschnitt auch kreisförmige, im wesentlichen gerade - also keine Krümmer oder Bogen aufweisende-Rohrleitung ausgebildet ist. Darüberhinaus sollte die Prozeßleitung zumindest abschnittsweise, insb. im Bereich der Temperatur-Meßstelle und/oder im Bereich der Druck-Meßstelle, als eine zumindest unter Betriebsdruck im wesentlichen formstabile, insb. starre und/oder im Querschnitt kreisförmige, Rohrleitung ausgebildet sein.

Gemäß einer weiteren Ausgestaltung der Erfindung wir die vorgenannte Varianz im Betrieb in weitegehend definierter Weise dadurch erzeugt, daß die Prozeßleitung zumindest an der virtuellen Dichtemeßstelle ferner ein Kaliber D1 aufweist, das von einem Kaliber D2 der Prozeßleitung an der Druck-Meßstelle verschieden ist. Alternativ oder in Ergänzung dazu ist nach einer anderen Ausgestaltung der Erfindung ferner vorgesehen, daß die Prozeßleitung an der virtuellen Dichtemeßstelle ein Kaliber D1 aufweist, das von einem Kaliber D3 der Prozeßleitung an der Temperatur-Meßstelle verschieden ist, und/oder daß das Kaliber D2 der Prozeßleitung an der Druck-Meßstelle vom Kaliber D3 der Prozeßleitung an der Temperatur-Meßstelle verschieden ist. Im Einzelnen ergeben sich somit zahlreiche Kombinationsmöglichkeiten hinsichtlich der Anordnung der einzelnen Meßstellen relativ zueinander wie auch der Wahl des Kalibers der Prozeßleitung an der jeweiligen Meßstelle. Eine Auswahl besonders geeigneter Ausgestaltungsvarianten hierfür ist zudem auch in den Fig. 4a, 4b, 4c, 4d, 4e, 4f und 4h schematisiert dargestellt.

Wie darin gezeigt kann es von Vorteil sein, das Meßsystem so auszubilden, daß das Kaliber D2 der Prozeßleitung an der Druck-Meßstelle größer ist, als das Kaliber D3 der Prozeßleitung an der Temperatur-Meßstelle oder aber auch so, daß das Kaliber D3 der Prozeßleitung an der Temperatur-Meßstelle größer ist, als das Kaliber D2 der Prozeßleitung an der Druck-Meßstelle. Alternativ oder in Ergänzung dazu kann das Kaliber D2 der Prozeßleitung an der Druck-Meßstelle auch so gewählt sein, daß es größer ist, als das Kaliber D1 der Prozeßleitung an der virtuellen Dichtemeßstelle und/oder kann das Kaliber D3 der Prozeßleitung an der Temperatur-Meßstelle so gewählt sein, daß es größer, als das Kaliber D1 an der virtuellen Dichtemeßstelle ist.

Im besondern ist ferner vorgesehen, daß ein Kaliberverhältnis D3/D1 des Kalibers D3 der Prozeßleitung an der Temperatur-Meßstelle zum Kaliber D1 der Prozeßleitung an der virtuellen Dichtemeßstelle größer als 1.1 und/oder kleiner als 5 gehalten ist, beispielsweise also in einem Bereich zwischen 1.2 und 3.1 liegt. Ferner ist es zumindest für diesen Fall von Vorteil, wenn die Prozeßleitung an der virtuellen Dichtemeßstelle ein Kaliber D1 aufweist, das im wesentlichen gleich einem Kaliber D2 der Prozeßleitung an der Druck-Meßstelle ist. Nach einer andern Ausgestaltung der Erfindung ist vorgesehen, daß ein Kaliberverhältnis D2/D1 des Kalibers D2 der Prozeßleitung an der Druck-Meßstelle zum Kaliber D1 der Prozeßleitung an der virtuellen Dichtemeßstelle größer als 1.1 und/oder kleiner als 5 gehalten ist, beispielsweise also in einem Bereich zwischen 1.2 und 3.1 liegt. Für diesen Fall wiederum ist von Vorteil, wenn die Prozeßleitung an der virtuellen Dichtemeßstelle ein Kaliber D1 aufweist, das im wesentlichen gleich einem Kaliber D3 der Prozeßleitung an der Temperatur-Meßstelle ist.

Die Unterschiede zwischen den Kalibern D1, D2 bzw. D3 können je nach erwünschter Konfiguration u.a. dadurch realisiert werden, daß die Prozeßleitung zwischen zumindest zwei der vorgenannten Meßstellen - beispielsweise also zwischen der virtuellen Dichtemeßstelle und der Temperatur-Meßstelle und/oder der Druck-Meßstelle oder auch zwischen der Temperatur-Meßstelle und der Druck-Meßstelle - ein Leitungssegment aufweist, das als ein, insb. trichterförmiger, Diffusor mit sich in Strömungsrichtung, insb. kontinuierlich, aufweitendem Lumen ausgebildet ist, bzw. ein Leitungssegment aufweist, das als ein, insb. trichterförmiger, Düse mit sich in Strömungsrichtung, insb. kontinuierlich, verengendem Lumen ausgebildet ist.

Experimentelle Untersuchungen haben ferner gezeigt, daß die Meßstellen in vorteilhafter Wiese so plaziert bzw. definiert sein sollten, daß ein Abstand $L_{21}$ der Druckmeßstelle von der virtuellen Dichtemeßstelle verschieden ist von einem Abstand $L_{31}$ der Temperaturmeßstelle von der virtuellen Dichtemeßstelle. Beispielsweise kann es für die Messung durchaus von Vorteil sein, wenn der Abstand L21 der Druckmeßstelle von der virtuellen Dichtemeßstelle größer ist als der Abstand L31 der Temperaturmeßstelle von der virtuellen Dichtemeßstelle und/oder wenn der Abstand L21 der Druckmeßstelle von der virtuellen Dichtemeßstelle und/oder ein Abstand L23 der Druckmeßstelle von der Temperaturmeßstelle größer sind als das Kaliber D2 der Prozeßleitung an der Druck-Meßstelle. Als für die Messung durchaus geeignet haben sich dabei ein Abstand L21 und/oder eine Abstand L23 von wenigstens einem 3-fachen, insb. mehr als einem 5-fachen, des Kalibers D2 gezeigt.

Für weiterführende Informationen zur Auslegung und Dimensionierung der Prozeßleitung des Meßsystems hinsichtlich vorgenannter Einbaulängen und/oder Kaliberverhältnisse bei Verwendung eines Reducers und/oder eines Diffusors wie auch weitere Ausgestaltungen der Prozeßleitung stromaufwärts des Strömungssensors und/oder stromabwärts des Strömungssensors sei an dieser Stelle ergänzend auf die eigenen, nicht vorveröffentlichten Anmeldungen DE 102006034296.8 und 102006047815.0 bzw. die damit jeweils korrespondierenden Nachanmeldungen explizit hingewiesen, deren jeweilige Offenbarung insoweit als der vorliegenden Anmeldung zugehörige erachtet wird.

Weiterführende Untersuchungen an Meßsystemen gemäß der Erfindung, haben zudem für die in den Figuren 4a, 4b, 4c, 4d gezeigten Anordnungen von Temperatur- Druck- und Dichte-Meßstelle relativ zueinander sowie mit Bezug zu den vorgenannten Kaliberverhältnissen ergeben, daß dafür zumindest der gemäß Vorschrift (4) ermittelte und für die Ermittlung des Dichte-Meßwerts gemäß der Vorschrift (1) bzw. (2) verwendete Dichte-Korrekturwert stets größer als eins sein sollte; anderenfalls wäre, wie bereits erwähnt, von einem fehlerhaften Meßsystem bzw. von einer Störung der Anlage auszugehen. Gleichermaßen sollte für die in den Figuren 4e, 4f, 4g, 4h gezeigten Konstellationen sollte der Dichte-Korrekturwert, die Anwendung der gleichen Berechnungsvorschriften unterstellt, stets kleiner als eins sein.

Darüberhinaus sind nachfolgender Tabelle 1 ausgewählte, als für ein Meßsystem mit einem Strömungssensor gemäß dem Ausführungsbeispiel von Fig. 2 und 3 besonders geeignet ermittelte Konstellationen hinsichtlich der Kaliber D1, D2, D3 jeweils in der Einheit mm und ausgewählter Gasen als Medium sowie jeweils zugeordnet ein entsprechend geeigneter Kompensationsfaktor K in der Einheit $K \cdot s^2 \cdot m^{-2}$.

**Tabelle 1:**

**Tabelle 1**

| GAS | D1, D3 | D2 | K |
|---|---|---|---|
| $CH_4$ (n = 16 g · mol$^{-1}$, f = 6) | | | |
| | 13,9 | 24,3 | 27851,08558 |
| | 13,9 | 26,7 | 26084,12357 |
| | 13,9 | 27,2 | 25671,22129 |
| | 13,9 | 28,5 | 24567,65186 |
| | 13,9 | 38,1 | 17069,51792 |
| | 13,9 | 40,9 | 15350,28348 |
| | 13,9 | 41,2 | 15178,90947 |
| | 13,9 | 43,1 | 14147,85441 |
| | 24,3 | 38,1 | 3086,763684 |
| | 24,3 | 40,9 | 3035,482335 |
| | 24,3 | 41,2 | 3026,384008 |
| | 24,3 | 43,1 | 2957,410639 |
| | 24,3 | 49,2 | 2662,97974 |

(fortgesetzt)

| GAS | D1, D3 | D2 | K |
|---|---|---|---|
| $CH_4$ (n = 16 g · mol$^{-1}$, f = 6) | | | |
| | 24,3 | 52,6 | 2484,170531 |
| | 24,3 | 52,7 | 2478,934254 |
| | 24,3 | 54,5 | 2385,462689 |
| | 38,1 | 49,2 | 448,2000215 |
| | 38,1 | 52,6 | 487,9209744 |
| | 38,1 | 54,5 | 500,3838513 |
| | 38,1 | 73,7 | 459,369374 |
| | 38,1 | 78 | 435,8925863 |
| | 38,1 | 78,1 | 435,337907 |
| | 38,1 | 82,5 | 410,9043438 |
| | 49,2 | 73,7 | 183,0929623 |
| | 49,2 | 78 | 183,4977725 |
| | 49,2 | 78,1 | 183,4687956 |
| | 49,2 | 82,5 | 180,8940523 |
| | 49,2 | 97 | 162,4571647 |
| | 49,2 | 102,3 | 154,3167919 |
| | 49,2 | 102,4 | 154,1619225 |
| | 49,2 | 107,1 | 146,8997624 |
| | 73,7 | 97 | 32,98911974 |
| | 73,7 | 102,4 | 35,0370316 |
| | 73,7 | 107,1 | 36,01526944 |
| | 73,7 | 146 | 32,12475476 |
| | 73,7 | 151 | 31,10798557 |
| | 73,7 | 154,2 | 30,45138942 |
| | 73,7 | 159,3 | 29,40598339 |
| | 97 | 146 | 12,12975471 |
| | 97 | 151 | 12,16106709 |
| | 97 | 154,2 | 12,14098846 |
| | 97 | 159,3 | 12,05687371 |
| | 97 | 199,9 | 10,30674712 |
| | 97 | 202,7 | 10,16121596 |
| | 97 | 206,5 | 9,963705636 |
| | 97 | 207,3 | 9,922187549 |
| | 146 | 199,9 | 2,245529752 |
| | 146 | 202,7 | 2,273600656 |
| | 146 | 206,5 | 2,304852917 |
| | 146 | 207,3 | 2,310502276 |

(fortgesetzt)

(fortgesetzt)

| GAS | D1, D3 | D2 | K |
|---|---|---|---|
| CH$_4$ (n = 16 g · mol$^{-1}$, f = 6) | | | |
| | 146 | 248,8 | 2,317268815 |
| | 146 | 254,5 | 2,291734778 |
| | 146 | 258,8 | 2,2702775 |
| | 146 | 260,4 | 2,261877863 |
| | | | |
| Erdgas (n = 16....40 g · mol$^{-1}$ je nach Zusammensetzung, f=6) | | | |
| | 13,9 | 24,3 | 31170,01324 |
| | 13,9 | 26,7 | 29190,34938 |
| | 13,9 | 27,2 | 28727,93943 |
| | 13,9 | 28,5 | 27492,24479 |
| | 13,9 | 38,1 | 19099,80535 |
| | 13,9 | 40,9 | 17175,91318 |
| | 13,9 | 41,2 | 16984,14311 |
| | 13,9 | 43,1 | 15830,39114 |
| | 24,3 | 38,1 | 3455,020015 |
| | 24,3 | 40,9 | 3397,337203 |
| | 24,3 | 41,2 | 3387,128821 |
| | 24,3 | 43,1 | 3309,793458 |
| | 24,3 | 49,2 | 2980,007098 |
| | 24,3 | 52,6 | 2779,822049 |
| | 24,3 | 52,7 | 2773,96038 |
| | 24,3 | 54,5 | 2669,329455 |
| | 38,1 | 49,2 | 501,8495813 |
| | 38,1 | 52,6 | 546,2444885 |
| | 38,1 | 54,5 | 560,159696 |
| | 38,1 | 73,7 | 514,0710105 |
| | 38,1 | 78 | 487,7826811 |
| | 38,1 | 78,1 | 487,1616486 |
| | 38,1 | 82,5 | 459,8077209 |
| | 49,2 | 73,7 | 204,9496071 |
| | 49,2 | 78 | 205,3864268 |
| | 49,2 | 78,1 | 205,3536589 |
| | 49,2 | 82,5 | 202,458931 |
| | 49,2 | 97 | 181,8004079 |
| | 49,2 | 102,3 | 172,6858252 |
| | 49,2 | 102,4 | 172,5124389 |
| | 49,2 | 107,1 | 164,3825333 |

(fortgesetzt)

| GAS | D1, D3 | D2 | K |
|---|---|---|---|
| CH$_4$ (n = 16 g · mol$^{-1}$, f = 6) | | | |
| | 73,7 | 97 | 36,93625048 |
| | 73,7 | 102,4 | 39,22468158 |
| | 73,7 | 107,1 | 40,31654938 |
| | 73,7 | 146 | 35,94964274 |
| | 73,7 | 151 | 34,81116896 |
| | 73,7 | 154,2 | 34,07605503 |
| | 73,7 | 159,3 | 32,90573249 |
| | 97 | 146 | 13,57764009 |
| | 97 | 151 | 13,61203427 |
| | 97 | 154,2 | 13,58918743 |
| | 97 | 159,3 | 13,49451405 |
| | 97 | 199,9 | 11,53365739 |
| | 97 | 202,7 | 11,37072445 |
| | 97 | 206,5 | 11,14960825 |
| | 97 | 207,3 | 11,10312955 |
| | 146 | 199,9 | 2,5139906 |
| | 146 | 202,7 | 2,545346756 |
| | 146 | 206,5 | 2,580243371 |
| | 146 | 207,3 | 2,586549405 |
| | 146 | 248,8 | 2,593473866 |
| | 146 | 254,5 | 2,564840534 |
| | 146 | 258,8 | 2,540788021 |
| | 146 | 260,4 | 2,531374101 |
| H$_2$O (n = 18 g · mol$^{-1}$, f=6) | | | |
| | 13,9 | 24,3 | 31256,24144 |
| | 13,9 | 26,7 | 29271,0454 |
| | 13,9 | 27,2 | 28807,34836 |
| | 13,9 | 28,5 | 27568,21927 |
| | 13,9 | 38,1 | 19152,54293 |
| | 13,9 | 40,9 | 17223,33422 |
| | 13,9 | 41,2 | 17031,03432 |
| | 13,9 | 43,1 | 15874,09507 |
| | 24,3 | 38,1 | 3464,588763 |
| | 24,3 | 40,9 | 3406,738816 |
| | 24,3 | 41,2 | 3396,501521 |
| | 24,3 | 43,1 | 3318,948505 |
| | 24,3 | 49,2 | 2988,242826 |

(fortgesetzt)

| GAS | D1, D3 | D2 | K |
|---|---|---|---|
| $CH_4$ (n = 16 g · mol$^{-1}$, f = 6) | | | |
| | 24,3 | 52,6 | 2787,502227 |
| | 24,3 | 52,7 | 2781,624305 |
| | 24,3 | 54,5 | 2676,703394 |
| | 38,1 | 49,2 | 503,2441144 |
| | 38,1 | 52,6 | 547,7602846 |
| | 38,1 | 54,5 | 561,7131315 |
| | 38,1 | 73,7 | 515,492087 |
| | 38,1 | 78 | 489,1306726 |
| | 38,1 | 78,1 | 488,5079154 |
| | 38,1 | 82,5 | 461,07809 |
| | 49,2 | 73,7 | 205,5175663 |
| | 49,2 | 78 | 205,9551717 |
| | 49,2 | 78,1 | 205,9223044 |
| | 49,2 | 82,5 | 203,0192259 |
| | 49,2 | 97 | 182,3029139 |
| | 49,2 | 102,3 | 173,1630088 |
| | 49,2 | 102,4 | 172,9891412 |
| | 49,2 | 107,1 | 164,8366844 |
| | 73,7 | 97 | 37,03884498 |
| | 73,7 | 102,4 | 39,33351491 |
| | 73,7 | 107,1 | 40,42832654 |
| | 73,7 | 146 | 36,04900682 |
| | 73,7 | 151 | 34,90736955 |
| | 73,7 | 154,2 | 34,1702149 |
| | 73,7 | 159,3 | 32,99664598 |
| | 97 | 146 | 13,61526406 |
| | 97 | 151 | 13,64973647 |
| | 97 | 154,2 | 13,62681665 |
| | 97 | 159,3 | 13,53186744 |
| | 97 | 199,9 | 11,56552973 |
| | 97 | 202,7 | 11,40214452 |
| | 97 | 206,5 | 11,18041482 |
| | 97 | 207,3 | 11,1338072 |
| | 146 | 199,9 | 2,52096787 |
| | 146 | 202,7 | 2,552409208 |
| | 146 | 206,5 | 2,587400279 |
| | 146 | 207,3 | 2,593723327 |

(fortgesetzt)

| GAS | D1, D3 | D2 | K |
|---|---|---|---|
| CH$_4$ (n = 16 g · mol$^{-1}$, f = 6) | | | |
| | 146 | 248,8 | 2,600650057 |
| | 146 | 254,5 | 2,571936044 |
| | 146 | 258,8 | 2,547815996 |
| | 146 | 260,4 | 2,538375687 |
| Luft (n = 29 g · mol$^{-1}$, f = 5) | | | |
| | 13,9 | 24,3 | 50338,90921 |
| | 13,9 | 26,7 | 47124,38089 |
| | 13,9 | 27,2 | 46375,14885 |
| | 13,9 | 28,5 | 44374,58191 |
| | 13,9 | 38,1 | 30815,23069 |
| | 13,9 | 40,9 | 27710,05332 |
| | 13,9 | 41,2 | 27400,56851 |
| | 13,9 | 43,1 | 25538,71377 |
| | 24,3 | 38,1 | 5583,208016 |
| | 24,3 | 41,2 | 5470,96068 |
| | 24,3 | 43,1 | 5344,897321 |
| | 24,3 | 49,2 | 4810,117614 |
| | 24,3 | 52,6 | 4486,285526 |
| | 24,3 | 52,7 | 4476,808075 |
| | 24,3 | 54,5 | 4307,671069 |
| | 38,1 | 49,2 | 812,4565419 |
| | 38,1 | 52,6 | 883,65719 |
| | 38,1 | 54,5 | 905,8569033 |
| | 38,1 | 73,7 | 829,8882553 |
| | 38,1 | 78 | 787,3215533 |
| | 38,1 | 78,1 | 786,316573 |
| | 38,1 | 82,5 | 742,0716954 |
| | 49,2 | 73,7 | 331,3026455 |
| | 49,2 | 78 | 331,8738927 |
| | 49,2 | 78,1 | 331,8181848 |
| | 49,2 | 82,5 | 327,0348906 |
| | 49,2 | 97 | 293,4714706 |
| | 49,2 | 102,3 | 278,7184046 |
| | 49,2 | 102,4 | 278,437899 |
| | 49,2 | 107,1 | 265,289832 |
| | 73,7 | 97 | 59,78309893 |
| | 73,7 | 102,4 | 63,449488 |

(fortgesetzt)

| GAS | D1, D3 | D2 | K |
|---|---|---|---|
| CH$_4$ (n = 16 g · mol$^{-1}$, f = 6) | | | |
| | 73,7 | 107,1 | 65,18836646 |
| | 73,7 | 146 | 58,03092489 |
| | 73,7 | 151 | 56,18799037 |
| | 73,7 | 154,2 | 54,9986214 |
| | 73,7 | 159,3 | 53,10590103 |
| | 97 | 146 | 21,94754221 |
| | 97 | 151 | 21,99771435 |
| | 97 | 154,2 | 21,95771667 |
| | 97 | 159,3 | 21,80041304 |
| | 97 | 199,9 | 18,61596382 |
| | 97 | 202,7 | 18,35235887 |
| | 97 | 206,5 | 17,99471318 |
| | 97 | 207,3 | 17,91954828 |
| | 146 | 199,9 | 4,067220274 |
| | 146 | 202,7 | 4,117361285 |
| | 146 | 206,5 | 4,173054129 |
| | 146 | 207,3 | 4,183100739 |
| | 146 | 248,8 | 4,188923875 |
| | 146 | 254,5 | 4,142218763 |
| | 146 | 258,8 | 4,103061713 |
| | 146 | 260,4 | 4,087749585 |

**Patentansprüche**

1. Meßsystem zum Messen einer Dichte eines in einer Prozeßleitung strömenden, entlang einer gedachten Strömungsachse des Meßsystems hinsichtlich eines thermodynamischen Zustandes veränderlichen, insb. zumindest anteilig kompressiblen, Mediums, insb. Wasserstoff, Stickstoff, Chlor, Sauerstoff, Helium oder daraus gebildete Verbindungen und/oder Gemische wie z.B. Kohlendioxid, Wasser, Phosgen, Erdgas oder Luft, welches Meßsystem umfaßt:

- wenigstens einen an einer Temperaturmeßstelle (M$_\vartheta$) plazierten, primär auf eine lokale Temperatur, $\vartheta$, von vorbei strömendem Medium reagierenden Temperatursensor, der ausgestaltet ist, wenigstens ein von der lokalen Temperatur des zu messenden Mediums beeinflußtes Temperaturmeßsignal (x$_\vartheta$) zu liefern,
- wenigstens einen an einer Druckmeßstelle (M$_p$) plazierten, primär auf einen lokalen, insb. statischen, Druck, p, von vorbei strömendem Medium reagierenden Drucksensor, der ausgestaltet ist, wenigstens ein vom lokalen Druck, p, im zu messenden Medium beeinflußtes Druckmeßsignal (x$_p$) zu liefern,
- wenigstens einen an einer Strömungsmeßstelle plazierten, primär auf einen lokalen, insb. über einen Querschnitt der Prozeßleitung gemittelten, Strömungsparameter, insb. eine Strömungsgeschwindigkeit, eine Volumendurchfluß oder einen Massendurchfluß, des zu messenden Mediums, insb. auch Änderungen desselben, reagierenden Strömungssensor, der ausgestaltet ist, wenigstens ein von dem lokalen Strömungsparameter beeinflußtes Strömungsmeßsignal zu liefern, sowie
- eine mit wenigstens dem Temperatursensor, dem Drucksensor sowie dem Strömungssensor jeweils zumindest zeitweise kommunizierende Meßelektronik (100), die ausgestaltet ist, unter Verwendung sowohl des Temperaturmeßsignals als auch des Druckmeßsignals wie auch des Strömungsmeßsignals zumindest zeitweise wenigstens einen, insb. digitalen, Dichte-Meßwert ($X_\rho$) zu erzeugen, der eine lokale Dichte, p, die das strömende Medium an einer, insb. von der Druckmeßstelle ($M_p$) und/oder der Temperaturmeßstelle ($M_\vartheta$) entlang der Strömungsachse vorgebbar beabstandeten, virtuellen Dichtemeßstelle ($M'_\rho$) aufweist, momentan repräsentiert,

-- wobei die Meßelektronik (100) ausgestaltet ist, basierend auf dem Druckmeßsignal sowie dem Temperaturmeßsignal einen provisorischen Dichte-Meßwert ($X'_\rho$), insb. gemäß einem der Industrie-Standards AGA 8, AGA NX-19, SGERG-88 IAWPS-IF97, ISO 12213:2006, zu ermitteln, der eine Dichte repräsentiert, die das strömende Medium an der virtuellen Dichtemeßstelle lediglich scheinbar aufweist; und
-- wobei die Meßelektronik (100) ausgestaltet ist, den Dichte-Meßwert ($X_\rho$) unter Verwendung sowohl des provisorische Dichte-Meßwerts ($X'_\rho$) als auch eines sowohl von einer Strömungsgeschwindigkeit des Mediums als auch von der an der Temperaturmeßstelle herrschenden lokalen Temperatur abhängigen, zur Laufzeit ermittelten Dichte-Korrekturwerts ($X_K$) zu ermitteln, der mit einer, insb. durch das aktuell zu messende Medium sowie eine momentane Einbausituation bedingten und/oder entlang der Strömungsachse des Meßsystems auftretenden, momentanen Ortsveränderlichkeit wenigstens einer thermodynamischen Zustandesgröße des Mediums und/oder der mit einer, insb. durch das Medium und/oder die Bauart des Meßsystems bedingten und/oder entlang der Strömungsachse des Meßsystems auftretenden, momentanen Ortsveränderlichkeit der Reynoldszahl des strömenden Mediums korrespondiert.

2. Meßsystem nach Anspruch 1, wobei die Meßelektronik den Dichte-Korrekturwert ($X_K$) bei der Generierung des Dichte-Meßwerts ($X_\rho$) lediglich dann verwendet, wenn er mindest eins beträgt, insb. in einem Bereich zwischen 1 und 1,2 liegt.

3. Meßsystem nach Anspruch 1, wobei die Meßelektronik den Dichte-Korrekturwert ($X_K$) bei der Generierung des Dichte-Meßwerts ($X_\rho$) lediglich dann verwendet, wenn er höchstens eins beträgt, insb. in einem Bereich zwischen 0,8 und 1 liegt.

4. Meßsystem nach einem der vorherigen Ansprüche, wobei die Meßelektronik zumindest zeitweise mit dem Strömungssensor kommuniziert und wobei die Meßelektronik unter Verwendung zumindest des Strömungsmeßsignals einen, insb. digitalen, Volumendurchfluß-Meßwert ($X_v$) ermittelt, der eine Volumendurchflußrate des strömenden Mediums momentan repräsentiert.

5. Meßsystem nach einem der vorherigen Ansprüche, wobei die Meßelektronik basierenden auf dem Temperaturmeßsignal wiederkehrend einen, insb. digitalen, Temperatur-Meßwert ($X_\vartheta$) generiert, der eine lokale Temperatur des Mediums, insb. die Temperatur des Mediums an der Temperaturmeßstelle, momentan repräsentiert.

6. Meßsystem nach Anspruch 4 und 5,

- wobei die Meßelektronik den Dichte-Korrekturwert ($X_K$) unter Verwendung des Geschwindigkeits-Meßwert ($X_v$) sowie des Temperaturmeßwerts ($X_\vartheta$) ermittelt; und/oder
- wobei die Meßelektronik den Dichte-Meßwert ($X_\rho$) zumindest zeitweise basierend auf der Vorschrift:

$$X_\rho = \pi_{\text{IAWPS-IF97}} \cdot \gamma_{\text{IAWPS-IF97}} \cdot \frac{1}{\left(1 + K \cdot \dfrac{X_v^{\,2}}{X_\vartheta}\right)} = \frac{X_p}{P^*{}_{\text{IAWPS-IF97}}} \cdot \frac{g_{\text{IAWPS-IF97}}}{R_M \cdot X_\vartheta} \cdot \frac{1}{\left(1 + K \cdot \dfrac{X_v^{\,2}}{X_\vartheta}\right)} \cdot$$

worin P*
einem mediumsspezifischen kritischen Druck gemäß dem Industrie-Standard IAWPS-IF97, insb. 16,53 MPa für den Fall, daß es sich bei dem zu messenden Medium um Wasser handelt, oberhalb dessen das jeweils zu messende Medium jedenfalls nicht flüssig sein kann, und g einer Medium spezifischen freien Enthalpie (*Gibbs'sche* freie Energie) gemäß dem Industrie-Standard IAWPS-IF97 entsprechen, ermittelt; und/oder
- wobei die Meßelektronik den Dichte-Meßwert ($X_\rho$) zumindest zeitweise basierend auf der

$$\text{Vorschrift:} \quad X_\rho = \frac{n \cdot X_p}{z \cdot R_M \cdot \left(X_\vartheta + K \cdot X_v^2\right)} = \frac{n \cdot X_p}{z \cdot R_M \cdot X_\vartheta} \cdot \frac{1}{\left(1 + K \cdot \dfrac{X_v^2}{X_\vartheta}\right)},$$

worin n einer molaren Masse, z einem, insb. gemäß einem der Industrie-Standards AGA 8, AGA NX-19, SGERG-88 IAWPS-IF97, ISO 12213:2006 und/oder unter Verwendung des Temperaturmeßsignals und/oder des Druckmeßsignals, ermittelten, Realgasfaktor des Mediums, und $R_M$ der relativen Gaskonstante des zu messenden Mediums entsprechen, die mit der auf die molare Masse n des Mediums normierten absoluten Gaskonstante R / n mit R= 8.3143 J / (K mol) korrespondiert, ermittelt; und/oder
- wobei die Meßelektronik unter Verwendung zumindest des Dichte-Meßwerts und des Volumendurchfluß-Meßwerts einen, insb. digitalen, Massedurchfluß-Meßwert ($X_m$) ermittelt, der eine Massendurchflußrate des strömenden Mediums momentan repräsentiert.

7.  Meßsystem nach einem der vorherigen Ansprüche, wobei die Meßelektronik basierenden auf dem Druckrmeßsignal wiederkehrend einen, insb. digitalen, Druck-Meßwert ($X_\rho$) generiert, der einen im Medium, insb. an der Druckmeßstelle, herrschenden Druck momentan repräsentiert.

8.  Meßsystem nach Anspruch 5 und 7,

    - wobei die Meßelektronik den provisorischen Dichte-Meßwert ($X'_\rho$) zumindest zeitweise basierend auf der

    Vorschrift: $X'_\rho = \dfrac{n}{z \cdot R_M} \cdot \dfrac{X_p}{X_\vartheta}$ ermittelt, worin n einer molaren Masse, z einem, insb. gemäß einem der Industrie-Standards AGA 8, AGA NX-19, SGERG-88 IAWPS-IF97, ISO 12213:2006 und/oder unter Verwendung des Temperaturmeßsignals und/oder des Druckmeßsignals, ermittelten, Realgasfaktor des Mediums, und $R_M$ der relativen Gaskonstante des zu messenden Mediums entsprechen, die mit der auf die molare Masse n des Mediums normierten absoluten Gaskonstante R / n mit R= 8.3143 J / (K mol) korrespondiert; und/oder
    - wobei die Meßelektronik den provisorischen Dichte-Meßwert ($X'_\rho$) zumindest zeitweise basierend auf der

    Vorschrift: $\quad X'_\rho = \pi_{\text{IAWPS-IF97}} \cdot \gamma_{\text{IAWPS-IF97}} = \dfrac{X_p}{P^*_{\text{IAWPS-IF97}}} \cdot \dfrac{g_{\text{IAWPS-IF97}}}{R_M \cdot X_\vartheta}$ ermittelt. $\quad$ mit

    $\pi_{\text{IAWPS-IF97}} = X_p/P^*_{\text{IAWPS-IF97}}$ und $\gamma_{\text{IAWPS-IF97}} = g_{\text{IAWPS-IF97}}/(R_M {*} X_\vartheta)$, wobei $P^*$ einem Medium spezifischen kritischen Druck gemäß dem Industrie-Standard IAWPS-IF97, insb. 16,53 MPa für den Fall, daß es sich bei dem zu messenden Medium um Wasser handelt, oberhalb dessen das jeweils zu messende Medium jedenfalls nicht flüssig sein kann, und $g_{\text{IAWPS-IF97}}$ einer Medium spezifischen freien Enthalpie (Gibbs'sche freie Energie) gemäß dem Industrie-Standard IAWPS-IF97 entsprechen

9.  Meßsystem nach einem der vorherigen Ansprüche,

    - wobei die Meßelektronik den provisorischen Dichte-Meßwert ($X'_\rho$) zumindest zeitweise basierend auf der Vorschrift:: $X'_\rho = \pi_{\text{IAWPS-IF97}} \cdot \gamma_{\text{IAWPS-IF97}}$ ermittelt,
    mit $\pi_{\text{IAWPS-IF97}} = X_p/P^*_{\text{IAWPS-IF97}}$ und $\gamma_{\text{IAWPS-IF97}} = g_{\text{IAWPS-IF97}}/(R_M {*} X_\vartheta)$, wobei $X_\vartheta$ einer lokale Temperatur des Mediums, insb. die Temperatur des Mediums an der Temperaturmeßstelle, $X_p$ einem im Medium, insb. an der Druckmeßstelle, herrschenden Druck, $P^*$ einem Medium spezifischen kritischen Druck gemäß dem Industrie-Standard IAWPS-IF97, insb. 16,53 MPa für den Fall, daß es sich bei dem zu messenden Medium um Wasser handelt, oberhalb dessen das jeweils zu messende Medium jedenfalls nicht flüssig sein kann, und $g_{\text{IAWPS-IF97}}$ einer Medium spezifischen freien Enthalpie (Gibbs'sche freie Energie) gemäß dem Industrie-Standard IAWPS-IF97 entsprechen; und/oder
    - wobei die Meßelektronik den Dichte-Meßwert ($X_\rho$) basierend auf der Vorschrift: $X_\rho = X'_\rho \cdot X_K$ ermittelt; und/oder
    - wobei die Meßelektronik unter Verwendung zumindest des Temperatur-Meßsignals, des Druck-Meßsignals und des Strömungsmeßsignals einen, insb. digitalen, Massedurchfluß-Meßwert ermittelt, der eine Massendurchflußrate des strömenden Mediums momentan repräsentiert; und/oder

- wobei die Meßelektronik im Betrieb zumindest zeitweise eine spezifische Wärmekapazität, $c_p$, des aktuell zu messenden Mediums ermittelt, insb. basierend auf der Vorschrift: $c_P = \left(1 + \dfrac{f}{2}\right) \cdot \dfrac{R}{n}$, worin n einer molaren Masse, R der absoluten Gaskonstante mit R = 8.3143 J / (K mol) und $f$ einer durch den molekularen Aufbau des Mediums bestimmten Anzahl von Schwingungsfreiheitsgraden von dessen Atomen bzw. Molekülen entsprechen.

**10.** Meßsystem nach einem der vorherigen Ansprüche,

- wobei die Meßelektronik den Dichte-Korrekturwert ($X_K$) im Betrieb wiederkehrend mit wenigstens einem vorgegebenen Referenzwert vergleicht; und/oder
- wobei die Meßelektronik basierend auf einem Vergleich von Dichte-Korrekturwert ($X_K$) und Referenzwert eine momentane Abweichung der Dichte-Korrekturwerts ($X_K$) vom Referenzwert quantitativ signalisiert und/oder zeitweise einen Alarm generiert, der eine unerwünschte, insb. unzulässig hohe, Diskrepanz zwischen Dichte-Korrekturwerts ($X_K$) und zugehörigem Referenzwert signalisiert; und/oder
- wobei die Meßelektronik im Betrieb wiederkehrend einen Dichtefehler ermittelt, der mit einer, insb. relativen, Abweichung von provisorischem Dichte-Meßwert ($X'_\rho$) und Dichte-Meßwert ($X_\rho$) korrespondiert, insb. auch inform eines numerischen Dichtefehler-Werts ausgibt und/oder mit wenigstens einem vorgegebenen Referenzwert vergleicht und basierend auf diesem Vergleich zeitweise einen Alarm generiert, der eine unerwünschte und/oder unzulässig hohe Diskrepanz zwischen provisorischem Dichte-Meßwert ($X'_\rho$) und Dichte-Meßwert ($X_\rho$) signalisiert.

**11.** Meßsystem nach einem der vorherigen Ansprüche, wobei die Meßelektronik den Dichte-Meßwert auch unter Verwendung wenigstens eines, insb. digital gespeicherten, numerischen Kompensationsfaktors (K) erzeugt, der mit einer, insb. vorab und/oder im Betrieb ermittelten, entlang der Strömungsachse des Meßsystems auftretenden Ortsveränderlichkeit wenigstens einer thermodynamischen Zustandsgröße des Mediums, insb. einer Temperatur, einem Druck oder einer Dichte, und/oder der mit einer, insb. vorab und/oder im Betrieb ermittelten, entlang der Strömungsachse des Meßsystems auftretenden Ortsveränderlichkeit der Reynoldszahl des strömenden Mediums korrespondiert.

**12.** Meßsystem nach Anspruch 11,

- wobei die Meßelektronik den Dichte-Korrekturwert ($X_K$) auch unter Verwendung des wenigstens einen vorab ermittelten, insb. digital gespeicherten, Kompensationsfaktors (K) ermittelt, insb. basierend auf der Vorschrift:

$$X_K = \frac{1}{\left(1 + K \cdot \dfrac{X_v{}^2}{X_\vartheta}\right)};$$ und/oder

- wobei der Kompensationsfaktor (K) so gewählt ist, daß er folgende Vorschrift erfüllt:

$$K = \Delta X\rho \cdot \frac{X_\vartheta}{X_v{}^2},$$

worin $\Delta X\rho$ einer vorab, insb. im Zuge einer Kalibrierung desselben und/oder eines im wesentlichen typgleichen Meßsystems mit bekanntem Referenzmedium und/oder im Zuge der Inbetriebnahme des Meßsystems vor Ort, ermittelten, insb. errechneten und/oder gemessenen, Meßsystem spezifischen Abweichung entspricht, die der provisorische Dichte-Meßwert ($X'_\rho$), ermittelt für ein zumindest hinsichtlich seiner tatsächlichen Dichte, $\rho_{Ret}$, definiertes Referenzmedium, von selbiger Dichte, $\rho_{Ref}$, des Referenzmediums aufweist; und/oder
- wobei der wenigstens eine Kompensationsfaktor (K) unter Berücksichtigung des tatsächlich zu messenden Mediums, insb. dessen Zusammensetzung und/oder dessen thermodynamischen Eigenschaften, ermittelt wird, insb. während einer Kalibrierung des Meßsystems mit bekanntem Referenzmedium und/oder während der Inbetriebnahme des Meßsystems vor Ort; und/oder

- wobei die Meßelektronik den wenigstens einen Kompensationsfaktor (K) anhand einer vorgegebenen, insb. im Dialog mit dem Anwender und/oder extern der Meßelektronik ermittelten, spezifischen Wärmekapazität, $c_p$, des aktuellen Mediums ermittelt; und/oder

- wobei die Meßelektronik einen den wenigstens einen Kompensationsfaktor (K) vorhaltenden, insb. als Tabellenspeicher ausgebildeten und/oder nicht-flüchtigen und/oder eine Vielzahl von vorab für verschiedene Medien bzw. für verschiedene Einbausituationen ermittelten Kompensationsfaktoren vorhaltenden, Datenspeicher umfaßt.

13. Meßsystem nach einem der vorherigen Ansprüche, wobei die Prozeßleitung an der virtuellen Dichtemeßstelle ein Kaliber (D1) aufweist, das von einem Kaliber (D2) der Prozeßleitung an der Druck-Meßstelle verschieden ist; insb. derart,

- daß das Kaliber (D2) der Prozeßleitung an der Druck-Meßstelle größer ist, als das Kaliber (D1) der Prozeßleitung an der virtuellen Dichtemeßstelle; und/oder

- daß ein Kaliberverhältnis (D2/D1) des Kalibers (D2) der Prozeßleitung an der Druck-Meßstelle zum Kaliber (D1) der Prozeßleitung an der virtuellen Dichtemeßstelle größer als 1.1 gehalten ist; und/oder

- daß ein Kaliberverhältnis (D2/D1) des Kalibers (D2) der Prozeßleitung an der Druck-Meßstelle zum Kaliber (D1) der Prozeßleitung an der virtuellen Dichtemeßstelle kleiner als 5 gehalten ist; und/oder

- daß ein Kaliberverhältnis (D2/D1) des Kalibers (D2) der Prozeßleitung an der Druck-Meßstelle zum Kaliber (D1) der Prozeßleitung an der virtuellen Dichtemeßstelle in einem Bereich zwischen 1.2 und 3.1 gehalten ist; und/oder

- daß die Prozeßleitung zwischen der virtuellen Dichtemeßstelle und der Druck-Meßstelle ein Leitungssegment aufweist, das als ein, insb. trichterförmiger, Diffusor mit sich in Strömungsrichtung, insb. kontinuierlich, aufweitendem Lumen ausgebildet ist; und/oder

- daß die Prozeßleitung zwischen der virtuellen Dichtemeßstelle und der Druck-Meßstelle ein Leitungssegment aufweist, das als ein, insb. trichterförmiger, Düse mit sich in Strömungsrichtung, insb. kontinuierlich, verengendem Lumen ausgebildet ist.

14. Meßsystem nach einem der Ansprüche 1 bis 12,

- wobei die Prozeßleitung an der virtuellen Dichtemeßstelle ein Kaliber (D1) aufweist, das im wesentlichen gleich einem Kaliber (D2) der Prozeßleitung an der Druck-Meßstelle ist; und/oder

- wobei die Prozeßleitung an der virtuellen Dichtemeßstelle ein Kaliber (D1) aufweist, das im wesentlichen gleich einem Kaliber (D3) der Prozeßleitung an der Temperatur-Meßstelle ist.

15. Meßsystem nach einem der Ansprüche 1 bis 13, wobei die Prozeßleitung an der virtuellen Dichtemeßstelle ein Kaliber (D1) aufweist, das von einem Kaliber (D3) der Prozeßleitung an der Temperatur-Meßstelle verschieden ist; insb. derart,

- daß das Kaliber (D3) der Prozeßleitung an der Temperatur-Meßstelle größer, als das Kaliber (D1) an der virtuellen Dichtemeßstelle; und/oder

- daß ein Kaliberverhältnis (D3/D1) des Kalibers (D3) der Prozeßleitung an der Temperatur-Meßstelle zum Kaliber (D1) der Prozeßleitung an der virtuellen Dichtemeßstelle größer als 1.1 gehalten ist; und/oder

- daß ein Kaliberverhältnis (D3/D1) des Kalibers (D3) der Prozeßleitung an der Temperatur-Meßstelle zum Kaliber (D1) der Prozeßleitung an der virtuellen Dichtemeßstelle kleiner als 5 gehalten ist; und/oder

- daß ein Kaliberverhältnis (D3/D1) des Kalibers (D3) der Prozeßleitung an der Temperatur-Meßstelle zum Kaliber (D1) der Prozeßleitung an der virtuellen Dichtemeßstelle in einem Bereich zwischen 1.2 und 3.1 gehalten ist; und/oder

- daß die Prozeßleitung zwischen der virtuellen Dichtemeßstelle und der Temperatur-Meßstelle ein Leitungssegment aufweist, das als ein, insb. trichterförmiger, Diffusor mit sich in Strömungsrichtung, insb. kontinuierlich, aufweitendem Lumen ausgebildet ist; und/oder

- daß die Prozeßleitung zwischen der virtuellen Dichtemeßstelle und der Temperatur-Meßstelle ein Leitungssegment aufweist, das als ein, insb. trichterförmiger, Düse mit sich in Strömungsrichtung, insb. kontinuierlich, verengendem Lumen ausgebildet ist.

16. Meßsystem nach einem der vorherigen Ansprüche,

- wobei die Strömungsmeßstelle stromaufwärts der Temperaturmeßstelle und/oder stromaufwärts der Druckmeßstelle angeordnet ist; und/oder

- wobei Prozeßleitung zumindest abschnittsweise, insb. im Bereich zumindest der Dichte-Meßstelle und/oder im Bereich zumindest der Druck-Meßstelle, als eine zumindest unter Betriebsdruck im wesentlichen formstabile, insb. starre und/oder im Querschnitt kreisförmige, Rohrleitung ausgebildet ist; und/oder

- wobei Prozeßleitung zumindest abschnittsweise, insb. im Bereich zwischen Dichte-Meßstelle und Druck-Meßstelle und/oder zwischen Dichte-Meßstelle und Temperatur-Meßstelle, als eine im wesentlichen gerade, insb. im Querschnitt kreisförmige, Rohrleitung ausgebildet ist; und/oder

- wobei die virtuelle Dichte-Meßstelle stromaufwärts der Temperatur-Meßstelle und/oder stromaufwärts der Druck-Meßstelle festgelegt ist; und/oder

- wobei die Druck-Meßstelle stromabwärts der Temperatur-Meßstelle angeordnet ist; und/oder

- wobei ein Abstand (L21) der Druckmeßstelle von der virtuellen Dichtemeßstelle verschieden ist von einem Abstand (L31) der Temperaturmeßstelle von der virtuellen Dichtemeßstelle; und/oder

- wobei ein Abstand (L21) der Druckmeßstelle von der virtuellen Dichtemeßstelle größer ist als ein Abstand (L31) der Temperaturmeßstelle von der virtuellen Dichtemeßstelle; und/oder

- wobei ein Abstand (L21) der Druckmeßstelle von der virtuellen Dichtemeßstelle größer ist als ein Kaliber (D2) der Prozeßleitung an der Druck-Meßstelle und/oder wobei ein Abstand (L23) der Druckmeßstelle von der Temperaturmeßstelle größer ist als ein Kaliber (D2) der Prozeßleitung an der Druck-Meßstelle, insb. derart, daß ein Abstand (L21) der Druckmeßstelle von der virtuellen Dichtemeßstelle wenigstens einem 3-fachen, vorzugsweise mehr als einem 5-fachen, eines Kalibers (D2) der Prozeßleitung an der Druck-Meßstelle entspricht, und/oder daß ein Abstand (L23) der Druckmeßstelle von der Temperaturmeßstelle wenigstens einem 3-fachen, vorzugsweise mehr als einem 5-fachen, eines Kalibers (D2) der Prozeßleitung an der Druck-Meßstelle entspricht.

## Claims

1. Measuring system designed to measure a density of a medium, which flows through a process pipe and is changeable in relation to a thermodynamic state along an imaginary flow axis of the measuring system, said medium being at least partially compressible, being in particular hydrogen, nitrogen, chlorine, oxygen, helium or compounds and/or mixtures of same, such as carbon dioxide, water, phosgene, natural gas or air, said measuring system comprising:

- at least one temperature sensor located at a temperature measuring point ($M_\vartheta$), reacting primarily to a local temperature, $\vartheta$, of medium flowing past, said sensor being designed to deliver at least one temperature measuring signal ($X_\rho$) that is influenced by the local temperature of the medium under measurement,

- at least one pressure sensor located at a pressure measuring point ($M_p$), reacting primarily to a local pressure, p, notably a static pressure, of medium flowing past, said sensor being designed to deliver at least one pressure measuring signal ($X_\rho$) that is influenced by the local pressure, p, in the medium under measurement,

- at least one flow sensor located at a flow measuring point, reacting primarily to a local flow parameter, particularly one averaged over a cross-section of the process pipe, in particular a flow velocity, a volume flow or a mass flow of the medium under measurement, particularly also changes of same, said flow sensor being designed to deliver at least one flow measuring signal that is influenced by the local flow parameter, as well as

- a measuring electronics system (100) that communicates at least at times with at least the temperature sensor, the pressure sensor and the flow sensor, said measuring electronics system being designed in such a way that it uses the temperature measuring signal, the pressure measuring signal and the flow measuring signal to generate at least temporarily at least one, particularly digital, density measured value ($X_\rho$) that currently represents a local density, p, which the flowing medium has at a virtual density measuring point ($M'_\rho$), particularly a virtual density measuring point that is located at a predefinable distance from the pressure measuring point ($M_p$) and/or the temperature measuring point ($M_\vartheta$) along the flow axis,

- wherein said measuring electronics system (100) is designed in such a way to determine a provisional density measured value ($X'_\rho$) based on the pressure measuring signal and the temperature measuring signal, particularly in accordance with one of the industry standards AGA 8, AGA NX-19, SGERG-88 IAWPS-IF97, ISO 12213:2006, said value representing a density that the flowing medium only apparently has at the virtual density measuring point; and

- wherein the measuring electronics system (100) is designed to determine the density measured value ($X_\rho$) using both the provisional density measured value ($X'_\rho$) and a density correction value ($X_K$) that is determined during runtime and depends on both the flow velocity of the medium and on the local temperature present at the temperature measuring point, said value corresponding to a current variability of at least a thermodynamic state variable of the medium, particularly a variability that is caused by the medium currently under measurement and a current installation position and/or that occurs along the flow axis of the measuring system, and/or that corresponds to a current variability of the Reynolds number of the flowing medium particularly one caused by the medium and/or the design of the measuring system and/or one occurring along the flow axis of the measuring system.

2. Measuring system as claimed in Claim 1, wherein the measuring electronics system only uses the density correction value ($X_K$) to generate the density measured value ($X_\rho$) if the value is at least one, and is particularly in a range between 1 and 1.2.

3. Measuring system as claimed in Claim 1, wherein the measuring electronics system only uses the density correction value ($X_K$) to generate the density measured value ($X_\rho$) if the value is one at the very maximum, and is particularly in a range between 0.8 and 1.

4. Measuring system as claimed in one of the previous claims, wherein the measuring electronics system communicates at least temporarily with the flow sensor and wherein the measuring electronics system, using at least the flow measuring signal, determines a volume flow measured value ($X_v$), particularly a digital value, said measured value representing a volume flow rate of the flowing medium.

5. Measuring system as claimed in one of the previous claims, wherein - on the basis of the temperature measuring signal - the measuring electronics system repeatedly generates a temperature measured value ($x_\vartheta$), particularly a digital value, said value currently representing a local temperature of the medium, particularly the temperature of the medium at the temperature measuring point.

6. Measuring system as claimed in Claim 4 or 5,

   - wherein the measuring electronics system determines the density correction value ($X_K$) using the velocity measured value ($X_V$) as well as the temperature measured value ($x_\vartheta$); and/or
   - wherein the measuring electronics system determines the density measured value ($X_\rho$), at least temporarily based on the rule that:

$$X_\rho = \pi_{IAWPS\text{-}IF97} \cdot \gamma_{IAWPS\text{-}IF97} \cdot 1 / (1+K \cdot (X_V^2/X_\vartheta)) = X_P / P^*_{IAWPS\text{-}IF97} \cdot g_{IAWPS\text{-}IF97} / R_M \cdot X_\vartheta \cdot 1 / (1+K \cdot X_V^2/X_\vartheta),$$

   wherein P* corresponds to a medium-specific critical pressure in accordance with the industry standard IAWPS-IF97, particularly 16.53 MPa for the case that the medium under measurement is water, above said pressure the medium under measurement cannot be liquid, and wherein g corresponds to a medium-specific free enthalpy (Gibbs free energy) in accordance with industry standard IAWPS-IF97; and/or
   - wherein the measuring electronics system determines the density measured value ($X_\rho$) at least temporarily based on the rule:

   n accordance with industry standard IAWPS-IF97; and/or

   where n corresponds to a molar mass, z to a real gas factor of the medium, particularly determined in accordance with one of the industry standards AGA 8, AGA NX-19, SGERG-88 IAWPS-IF97, ISO 12213:2006 and/or determined using the temperature measuring signal and/or the pressure measuring signal, and where $R_M$ corresponds to the relative gas constant of the medium under measurement, which corresponds to the absolute gas constant R / n which is normalized to the molar mass n of the medium with R = 8.3143 J / (K mol); and/or
   - wherein the measuring electronics system determines a mass flow measured value ($X_m$), particularly a digital value, using at least the density measured value and the volume flow measured value, said value currently representing a mass flow rate of the flowing medium.

7. Measuring system as claimed in one of the previous claims, wherein, on the basis of the pressure measuring signal, the measuring electronics system repeatedly generates a pressure measured value ($X_P$), particularly a digital value, that currently represents a pressure present in the medium, particularly at the pressure measuring point.

8. Measuring system as claimed in Claims 5 and 7,

- wherein the measuring electronics system determines the provisional density measured value ($X'_\rho$) at least temporarily based on the rule: $X'_\rho = n / z \cdot R_M \cdot X_P / X_\vartheta$, where n corresponds to a molar mass, z to a real gas factor of the medium particularly determined in accordance with one of the industry standards AGA 8, AGA NX-19, SGERG-88 IAWPS-IF97, ISO 12213:2006 and/or determined using the temperature measuring signal and/or the pressure measuring signal, and where $R_M$ corresponds to the relative gas constant of the medium under measurement, which corresponds to the absolute gas constant R / n which is normalized to the molar mass n of the medium with R = 8.3143 J/(Kmol); and/or
- wherein the measuring electronics system determines the provisional density measured value ($X'_\rho$) at least temporarily based on the rule: $X'_\rho = \pi_{IAWPS-IF97} \cdot \gamma_{IAWPS-IF97} = X_P / P^*_{IAWPS-IF97} \cdot g_{IAWPS-IF97} / R_M \cdot X_\vartheta$, with $\pi_{IAWPS-IF97} = X_P/P^*_{IAWPS-IF97}$ and $\gamma_{IAWPS-IF97} = g_{IAWPS-IF97} /(R_M \cdot X_\vartheta)$, where P* corresponds to a medium-specific critical pressure in accordance with industry standard IAWPS-IF97, particularly 16.53 MPa for the case that the medium under measurement is water, above said pressure the medium under measurement cannot be liquid, and wherein $g_{IAWPS-IF97}$ corresponds to a medium-specific free enthalpy (Gibbs free energy) in accordance with industry standard IAWPS-IF97.

9. Measuring system as claimed in one of the previous claims,

- wherein the measuring electronics system determines the provisional density measured value ($X'_\rho$) at least temporarily based on the rule: $X'_\rho = \pi_{IAWPS-IF97} \cdot \gamma_{IAWPS-IF97}$, with $\pi_{IAWPS-IF97} = X_P/P^*_{IAWPS-IF97}$ and $\gamma_{IAWPS-IF97} = g_{IAWPS-IF97} / (R_M \cdot X_\vartheta)$, where $X_\vartheta$ corresponds to a local temperature of the medium, particularly the temperature of the medium at the temperature measuring point, $X_P$ corresponds to a pressure present in the medium, particularly at the pressure measuring point, P* corresponds to a medium-specific critical pressure in accordance with industry standard IAWPS-IF97, particularly 16.53 MPa for the case that the medium under measurement is water, above said pressure the medium under measurement cannot be liquid, and wherein $g_{IAWPS-IF97}$ corresponds to a medium-specific free enthalpy (Gibbs free energy) in accordance with industry standard IAWPS-IF97; and/or
- wherein the measuring electronics system determines the density measured value ($X_\rho$) based on the rule: $X_\rho = X'_\rho \cdot XK$ ; and/or
- wherein the measuring electronics system determines a mass flow measured value, particularly a digital value, using at least the temperature measuring signal, the pressure measuring signal and the flow measuring signal, said value currently representing a mass flow rate of the flowing medium; and/or
- wherein, during operation, the measuring electronics system determines at least temporarily a specific heat capacity, $c_p$, of the medium currently under measurement, particularly based on the rule: $c_p = (1 + f/2) \cdot R/n$, where n corresponds to a molar mass, R to the absolute gas constant with R = 8.3143 J / (K mol) and f to a number of vibrational degrees of freedom of the medium's atoms or molecules, which is determined by the molecular structure of the medium.

10. Measuring system as claimed in one of the previous claims

- wherein, during operation, the measuring electronics system repeatedly compares the density correction value ($X_K$) with at least one predefined reference value; and/or
- wherein, based on a comparison of the density correction value ($X_K$) with the reference value, the measuring electronics system quantatively signals a current deviation of the density correction value ($X_K$) from the reference value and/or temporarily generates an alarm that signals an undesired discrepancy, particularly an impermissibly high discrepancy, between the density correction value ($X_K$) and the associated reference value; and/or
- wherein, during operation, the measuring electronics system repeatedly determines a density error which corresponds to a deviation, particularly a relative deviation, of the provisional density measured value ($X'_\rho$) and the density measured value ($X_\rho$), and particularly outputs the error in the form of a numerical density error value and/or compares it to at least one predefined reference value and, on the basis of this comparison, intermittently generates an alarm that signals an undesired or impermissibly high discrepancy between the provisional density measured value ($X'_\rho$) and the density measured value ($X_\rho$).

11. Measuring system as claimed in one of the previous claims, wherein the measuring electronics system generates the density measured value also by using at least one numerical compensation factor (K), particularly a factor that is saved digitally, said factor corresponding to a variability of at least one thermodynamic state variable of the medium, particularly a temperature, a pressure or a density, particularly a variability determined in advance or during operation, and occurring along the flow axis of the measuring system, and/or one that corresponds to a variability of the Reynolds number of the flowing medium, occurring along the flow axis of the measuring system and in particular determined in advance and/or during operation.

**12.** Measuring system as claimed in Claim 11

- wherein the measuring electronics system also determines the density correction value ($X_K$) using the at least one compensation factor (K) which is determined in advance and, in particular, is saved digitally, in particular based on the rule:

$$X_K = 1 \,/\, 1+K \cdot X_V^2/X_\vartheta;$$

and/or
- wherein the compensation factor (K) is selected in such a way that it meets the following rule:

$$K = \Delta X\rho \cdot X_\vartheta/X_V^2,$$

- where $\Delta X\rho$ corresponds to a deviation which is specific to the measuring system, determined in advance, particularly calculated and/or measured, particularly during a calibration of said system and/or an essentially identical measuring system with a known reference medium and/or during the commissioning of the measuring system onsite, said deviation being that which the provisional density measured value ($X'_\rho$), determined for a reference medium defined at least with regard to its actual density, $\rho_{Ref}$, has in relation to the density, $\rho_{Ref}$, of the reference product; and/or
- wherein the at least one compensation factor (K) is determined taking into consideration the actual medium under measurement, particularly the medium's composition and/or its thermodynamic properties, particularly during a calibration of the measuring system with a known reference medium and/or during the onsite commissioning of the measuring system; and/or
- wherein the measuring electronics system determines the at least one compensation factor (K) using a predefined specific heat capacity, cp, of the current medium, particularly a specific heat capacity determined in dialog with the user and/or outside the measuring electronics system; and/or
- wherein the measuring electronics system comprises a data memory which provides the at least one compensation factor (K), said memory designed particularly as a table memory and/or non-volatile memory and/or providing a wide number of compensation factors determined in advance for various media and various installation situations.

**13.** Measuring system as claimed in one of the previous claims, wherein the process pipe has a caliber (D1) at the virtual density measuring point which is different from the caliber (D2) of the process pipe at the pressure measuring point, particularly in that

- the caliber (D2) of the process pipe at the pressure measuring point is larger than the caliber (D1) of the process pipe at the virtual density measuring point; and/or
- a caliber ratio (D2/D1) of the caliber (D2) of the process pipe at the pressure measuring point to the caliber (D1) of the process pipe at the virtual density measuring point is kept larger than 1.1; and/or
- a caliber ratio (D2/D1) of the caliber (D2) of the process pipe at the pressure measuring point to the caliber (D1) of the process pipe at the virtual density measuring point is kept smaller than 5; and/or
- a caliber ratio (D2/D1) of the caliber (D2) of the process pipe at the pressure measuring point to the caliber (D1) of the process pipe at the virtual density measuring point is kept in a range between 1.2 and 3.1; and/or
- the process pipe between the virtual density measuring point and the pressure measuring point has a pipe segment which is designed as a diffuser, particularly a funnel-shaped diffuser, with a cavity that expands, particularly continuously, in the flow direction; and/or
- the process pipe between the virtual density measuring point and the pressure measuring point has a pipe segment which is designed as a nozzle, particularly a funnel-shaped nozzle, with a cavity that narrows, particularly continuously, in the flow direction.

**14.** Measuring system as claimed in one of the Claims 1 to 12,

- wherein the process pipe at the virtual density measuring point has a caliber (D1) that is essentially identical to a caliber (D2) of the process pipe at the pressure measuring point; and/or
- wherein the process pipe at the virtual density measuring point has a caliber (D1) that is essentially identical to a caliber (D3) of the process pipe at the temperature measuring point.

**15.** Measuring system as claimed in one of the Claims 1 to 13, wherein the process pipe at the virtual density measuring point has a caliber (D1) that is different from a caliber (D3) of the process pipe at the temperature measuring point particularly in that

- the caliber (D3) of the process pipe at the temperature measuring point is larger than the caliber (D1) at the virtual density measuring point; and/or
- a caliber ratio (D3/D1) of the caliber (D3) of the process pipe at the temperature measuring point to the caliber (D1) of the process pipe at the virtual density measuring point is kept larger than 1.1; and/or
- a caliber ratio (D3/D1) of the caliber (D3) of the process pipe at the temperature measuring point to the caliber (D1) of the process pipe at the virtual density measuring point is kept smaller than 5; and/or
- a caliber ratio (D3/D1) of the caliber (D3) of the process pipe at the temperature measuring point to the caliber (D1) of the process pipe at the virtual density measuring point is kept in a range between 1.2 and 3.1; and/or
- the process pipe between the virtual density measuring point and the temperature measuring point has a pipe segment which is designed as a diffuser, particularly a funnel-shaped diffuser, with a cavity that expands, particularly continuously, in the flow direction; and/or
- the process pipe between the virtual density measuring point and the temperature measuring point has a pipe segment which is designed as a nozzle, particularly a funnel-shaped nozzle, with a cavity that narrows, particularly continuously, in the flow direction.

**16.** Measuring system as claimed in one of the previous claims,

- wherein the flow measuring point is arranged upstream from the temperature measuring point and/or upstream from the pressure measuring point; and/or
- wherein the process pipe is at least partially designed as a pipe that is, at least under operating pressure, essentially stable in shape, particularly rigid and/or with a circular cross-section, particularly in the area of at least the density measuring point and/or in the area of at least the pressure measuring point; and/or
- wherein the process pipe is at least partially designed as an essentially straight pipe, particularly with a circular cross-section, particularly in the area between the density measuring point and the pressure measuring point; and/or
- wherein the virtual density measuring point is defined upstream from the temperature measuring point and/or upstream from the pressure measuring point; and/or
- wherein the pressure measuring point is arranged downstream from the temperature measuring point; and/or
- wherein a distance (L21) of the pressure measuring point from the virtual density measuring point is different from a distance (L31) of the temperature measuring point from the virtual density measuring point; and/or
- wherein a distance (L21) of the pressure measuring point from the virtual density measuring point is greater than a caliber (D2) of the process pipe at the pressure measuring point and/or wherein a distance (L23) of the pressure measuring point from the temperature measuring point is greater than a caliber (D2) of the process pipe at the pressure measuring point, particularly in such a way that a distance (L21) of the pressure measuring point from the virtual density measuring point corresponds at least to 3 times, preferably to more than 5 times, a caliber (D2) of the process pipe at the pressure measuring point, and/or that a distance (L23) of the pressure measuring point from the temperature measuring point corresponds to at least 3 times, preferably more than 5 times, a caliber (D2) of the process pipe at the pressure measuring points.

**Revendications**

**1.** Système de mesure destiné à la mesure d'une densité d'un produit dont l'état thermodynamique varie, produit notamment au moins partiellement compressible, s'écoulant dans une conduite de process, le long d'un axe d'écoulement imaginaire du système de mesure, produit s'agissant notamment d'hydrogène, d'azote, de chlore, d'oxygène, d'hélium ou de combinaisons d'entre eux et/ou de mélanges tels que le dioxyde de carbone, l'eau, le phosgène, le gaz naturel ou l'air, lequel système de mesure comprend :

- au moins un capteur de température placé sur un point de mesure de température ($M_9$), réagissant de façon

primaire à une température locale, $\vartheta$, d'un produit s'écoulant à travers le point de mesure, lequel capteur est conçu de telle manière à délivrer au moins un signal de mesure de température ($X_\vartheta$) influencé par la température locale du produit à mesurer,

- au moins un capteur de pression placé sur un point de mesure de pression ($M_p$), réagissant de façon primaire à une pression locale, p, notamment statique, d'un produit s'écoulant à travers le point de mesure, lequel capteur est conçu de telle manière à délivrer au moins un signal de mesure de pression ($X_p$) influencé par la pression locale, p, du produit à mesurer,

- au moins un capteur d'écoulement placé sur un point de mesure d'écoulement, réagissant de façon primaire à un paramètre d'écoulement, notamment formant une moyenne sur une section de la conduite de process, paramètre s'agissant notamment d'une vitesse d'écoulement, d'un débit volumique ou d'un débit massique du produit à mesurer, réagissant notamment également à des changements du paramètre d'écoulement, lequel capteur est conçu de telle manière à délivrer au moins un signal de mesure d'écoulement influencé par le paramètre d'écoulement local, ainsi que

- une électronique de mesure (100) communiquant au moins temporairement respectivement avec au moins le capteur de température, le capteur de pression ainsi que le capteur d'écoulement, laquelle électronique est conçue de telle manière à générer, en utilisant à la fois le signal de mesure de température, le signal de mesure de pression et le signal de mesure d'écoulement, au minimum temporairement au moins une valeur mesurée de densité ($X_\rho$), notamment numérique, qui représente momentanément une densité locale, p, que possède le produit s'écoulant sur un point de mesure de densité virtuel ($M'_\rho$), notamment se trouvant à une distance prédéfinissable du point de mesure de pression ($M_p$) et/ou du point de mesure de température ($M_\vartheta$),

- pour lequel l'électronique de mesure (100) est conçue de telle manière à déterminer, sur la base du signal de mesure de pression ainsi que du signal de mesure de température, une valeur mesurée de densité provisoire ($X'_\rho$), notamment conformément à l'une des normes industrielles AGA 8, AGA NX-19, SGERG-88 IAWPS-IF97, ISO 12213:2006, laquelle valeur représente uniquement de façon apparente une densité, que possède le produit s'écoulant sur le point de mesure de densité virtuel ; et

- pour lequel l'électronique de mesure (100) est conçue de telle sorte à déterminer la valeur mesurée de densité ($X_\rho$) en utilisant à la fois la valeur mesurée de densité provisoire ($X'_\rho$) et une valeur de correction de densité ($X_K$) dépendant d'une température locale régnant sur le point de mesure de température, déterminée pendant la durée de marche, laquelle valeur correspond à une mobilité momentanée d'au moins une grandeur d'état thermodynamique du produit, notamment due au produit actuellement à mesurer ainsi qu'à une situation de montage momentanée et/ou survenant le long de l'axe d'écoulement du système de mesure, et/ou qui correspond à une mobilité momentanée du nombre de Reynolds du produit s'écoulant, notamment due au produit actuellement à mesurer ainsi qu'à une situation de montage momentanée et/ou survenant le long de l'axe d'écoulement du système de mesure.

2. Système de mesure selon la revendication 1, pour lequel l'électronique de mesure utilise, lors de la génération de la valeur mesurée de densité ($X_\rho$) la valeur de correction de densité ($X_K$) uniquement lorsqu'elle est au moins égale à un, notamment lorsqu'elle se situe dans une plage comprise entre 1 et 1,2.

3. Système de mesure selon la revendication 1, pour lequel l'électronique de mesure utilise, lors de la génération de la valeur mesurée de densité ($X_\rho$) la valeur de correction de densité ($X_K$) uniquement lorsqu'elle est au plus égale à un, notamment lorsqu'elle se situe dans une plage comprise entre 0,8 et 1.

4. Système de mesure selon l'une des revendications précédentes, pour lequel l'électronique de mesure communique au moins temporairement avec le capteur d'écoulement et pour lequel l'électronique de mesure détermine, en utilisant au moins le signal de mesure d'écoulement, une valeur mesurée du débit volumique ($X_v$), notamment numérique, qui représente momentanément un débit volumique du produit s'écoulant.

5. Système de mesure selon l'une des revendications précédentes, pour lequel l'électronique de mesure génère de façon récurrente, en se basant sur le signal de mesure d'écoulement, une valeur mesurée de température ($x_\vartheta$), notamment numérique, qui représente momentanément une température locale du produit, notamment la température du produit sur le point de mesure de température.

6. Système de mesure selon la revendication 4 ou 5,

- pour lequel l'électronique de mesure détermine la valeur de correction de densité ($X_K$) en utilisant la valeur mesurée de vitesse ($X_v$) ainsi que la valeur mesurée de température ($x_\vartheta$) ; et/ou
- pour lequel l'électronique de mesure détermine la valeur mesurée de densité ($X_\rho$), au moins temporairement

sur la base de la prescription :

$$X_\rho = \pi_{IAWPS\text{-}IF97} \cdot \gamma_{IAWPS\text{-}IF97} \cdot 1 / (1+K \cdot (X_V^2/X_\vartheta)) = X_P / P^*_{IAWPS\text{-}IF97} \cdot g_{IAWPS\text{-}IF97} / (R_M \cdot X_\vartheta) \cdot 1 / (1+K \cdot (X_V^2/X_\vartheta)), \text{ où } P^*$$

correspond à une pression critique, spécifique au produit, conformément à la norme industrielle IAWPS-IF97, notamment 16,53 MPa pour le cas où il s'agit d'eau concernant le produit à mesurer, pression au-delà de laquelle le produit à mesurer ne peut en tout cas être liquide, et où g correspond à une enthalpie libre spécifique au produit (énergie libre de Gibbs) conformément à la norme industrielle IAWPS-IF97 ; et/ou
- pour lequel l'électronique de mesure détermine, au moins temporairement sur la base de la prescription :

$$X_\rho = (n \cdot X_{P)} / (z \cdot R_M \cdot X_\vartheta + K \cdot X_V^2)) = n \cdot X_P / (z \cdot R_M \cdot X_\vartheta) \cdot 1 / (1 + K \cdot (X_V^2 / X_\vartheta)),$$

où n correspond à une masse molaire, z à un facteur de gaz réel du produit, notamment conforme à l'une des normes industrielles AGA 8, AGA NX-19, SGERG-88 IAWPS-IF97, ISO 12213:2006 et/ou déterminé en utilisant le signal de mesure de température et/ou le signal de mesure de pression, et $R_M$ à la constante de gaz relative du produit à mesurer, qui correspond à la constante de gaz absolue normalisée par rapport à la masse molaire n du produit, à savoir R / n, avec R = 8,3143 J / (K mol) ; et/ou
- pour lequel l'électronique de mesure détermine une valeur mesurée de débit massique ($X_m$), notamment numérique, en utilisant au moins la valeur mesurée de densité et la valeur mesurée de débit volumique, laquelle valeur mesurée de débit massique représente momentanément un débit massique du produit s'écoulant.

7. Système de mesure selon l'une des revendications précédentes, pour lequel l'électronique de mesure génère de façon récurrente une valeur mesurée de pression ($X_P$), notamment numérique, sur la base du signal de mesure de pression, valeur qui représente momentanément une pression régnant dans le produit, notamment sur le point de mesure de pression.

8. Système de mesure selon la revendication 5 et 7,

- pour lequel l'électronique de mesure détermine la valeur mesurée de densité provisoire ($X'_\rho$) au moins temporairement sur la base de la prescription : $X'_\rho = n / (z \cdot R_M) (Xp / X_\vartheta)$, où n correspond à une masse molaire, z à un facteur de gaz réel du produit, notamment conforme à l'une des normes industrielles AGA 8, AGA NX-19, SGERG-88 IAWPS-IF97, ISO 12213:2006 et/ou déterminé en utilisant le signal de mesure de température et/ou le signal de mesure de pression, et $R_M$ à la constante de gaz relative du produit à mesurer, qui correspond à la constante de gaz absolue normalisée par rapport à la masse molaire n du produit, à savoir R / n, avec R = 8,3143 J / (K mol) ; et/ou
- pour lequel l'électronique de mesure détermine la valeur mesurée de densité provisoire ($X'_\rho$) au moins temporairement sur la base de la prescription $X'_\rho = \pi_{IAWPS\text{-}IF97} \gamma_{IAWPS\text{-}IF97} = X_P / P^*_{IAWPS\text{-}IF97} \cdot g_{IAWPS\text{-}IF97} / (R_M \cdot X_\vartheta)$, avec $\pi_{IAWPS\text{-}IF97} = X_P/P^*_{IAWPS\text{-}IF97}$ et $\gamma_{IAWPS\text{-}IF97} = g_{IAWPS\text{-}IF97} / (R_M \cdot X_\vartheta)$, où P* est une pression critique, spécifique au produit, conformément à la norme industrielle IAWPS-IF97, notamment 16,53 MPa pour le cas où il s'agit d'eau concernant le produit à mesurer, pression au-delà de laquelle le produit à mesurer ne peut en tout cas être liquide, et où $g_{IAWPS\text{-}IF97}$ correspond à une enthalpie libre spécifique au produit (énergie libre de Gibbs) conformément à la norme industrielle IAWPS-IF97.

9. Système de mesure selon l'une des revendications précédentes,

- pour lequel l'électronique de mesure détermine la valeur mesurée de densité provisoire ($X'_\rho$) au moins temporairement sur la base de la prescription : $X'_\rho = \pi_{IAWPS\text{-}IF97} \cdot \gamma_{IAWPS\text{-}IF97}$, avec $\pi_{IAWPS\text{-}IF97} = X_P/P^*_{IAWPS\text{-}IF97}$ et $\gamma_{IAWPS\text{-}IF97} = g_{IAWPS\text{-}IF97} / (R_M \cdot X_\vartheta)$, où $X_\vartheta$ correspond à une température locale du produit, notamment à la température du produit régnant sur le point de mesure de température, $X_P$ à une pression régnant dans le produit, notamment sur le point de mesure de pression, P* à une pression critique, spécifique au produit, conformément à la norme industrielle IAWPS-IF97, notamment 16,53 MPa pour le cas où il s'agit d'eau concernant le produit à mesurer, pression au-delà de laquelle le produit à mesurer ne peut en tout cas être liquide, et $g_{IAWPS\text{-}IF97}$ à une enthalpie libre spécifique au produit (énergie libre de Gibbs) conformément à la norme industrielle IAWPS-IF97 ; et/ou

- pour lequel l'électronique de mesure détermine la valeur mesurée de densité ($X_\rho$) sur la base de la prescription : $X_\rho = X'_\rho \cdot X_K$ ; et/ou
- pour lequel l'électronique de mesure détermine, en utilisant au moins le signal de mesure de température, le signal de mesure de pression et le signal de mesure d'écoulement, une valeur mesurée de débit massique, notamment numérique, qui représente momentanément un débit massique du produit s'écoulant ; et/ou
- pour lequel l'électronique de mesure détermine, en fonctionnement, au moins temporairement une capacité de chaleur spécifique, $c_p$, du produit actuellement à mesurer, notamment sur la base de la prescription : $c_p = (1 + (f/2)) \cdot R/n$, où n correspond à une masse molaire, R à la constante de gaz absolue avec R = 8,3143 J / (K mol) et f à un nombre de degrés de liberté d'oscillation de ses atomes ou molécules, déterminé par la structure moléculaire du produit.

10. Système de mesure selon l'une des revendications précédentes

- pour lequel l'électronique de mesure compare, en fonctionnement et de façon récurrente, la valeur de correction de densité ($X_K$) avec au moins une valeur de référence prédéfinie ; et/ou
- pour lequel l'électronique de mesure signale quantitativement, sur la base d'une comparaison entre la valeur de correction de densité ($X_K$) et une valeur de référence, un écart momentané de la valeur de correction de densité ($X_K$) par rapport à la valeur de référence et/ou génère temporairement une alarme, qui signale une divergence indésirable, notamment d'une importance non admissible, entre la valeur de correction de densité ($X_K$) et la valeur de référence correspondante ; et/ou
- pour lequel l'électronique de mesure détermine, en fonctionnement et de façon récurrente, une erreur de densité, qui correspond à un écart, notamment relatif, entre la valeur mesurée de densité provisoire ($X'_\rho$) et la valeur mesurée de densité ($X_\rho$), émet cette erreur notamment également sous la forme d'une valeur d'erreur de densité numérique et/ou la compare avec une valeur de référence prédéfinie et, sur la base de cette comparaison, génère temporairement une alarme, qui signale une divergence indésirable et/ou d'une importance non admissible entre la valeur mesurée de densité provisoire ($X'_\rho$) et la valeur mesurée de densité ($X_\rho$).

11. Système de mesure selon l'une des revendications précédentes, pour lequel l'électronique de mesure génère la valeur mesurée de densité également en utilisant au moins un facteur de compensation (K), notamment numérique et enregistré par voie numérique, qui correspond à une mobilité survenant le long de l'axe d'écoulement du système de mesure, notamment déterminée au préalable et/ou en fonctionnement, d'au moins une grandeur d'état thermodynamique du produit, notamment une température, une pression ou une densité, et/ou qui correspond à une mobilité survenant le long de l'axe d'écoulement du système de mesure, notamment déterminée au préalable et/ou en fonctionnement, du nombre de Reynolds du produit s'écoulant.

12. Système de mesure selon la revendication 11

- pour lequel l'électronique de mesure détermine la valeur de correction de densité ($X_K$) également en utilisant l'au moins un facteur de compensation déterminé au préalable, notamment enregistré par voie numérique, notamment basé sur la prescription :

$$X_K = 1 / (1+K \cdot (X_V^2/X_\vartheta)) ;$$

et/ou
- pour lequel le facteur de compensation (K) est sélectionné de telle manière à satisfaire la prescription suivante :

$$K = \Delta X\rho \cdot (X_\vartheta/X_V^2),$$

où $\Delta X\rho$ correspond à un écart spécifique du système de mesure, notamment calculé et/ou mesuré, déterminé au préalable, notamment au cours d'un étalonnage du même système de mesure et/ou d'un système de mesure pour l'essentiel de type identique avec un produit de référence connu, et/ou au cours de la mise en service sur site du système de mesure, écart que présente la valeur mesurée de densité provisoire ($X'_\rho$) déterminée pour un produit de référence défini au moins concernant sa densité effective, $\rho_{Ref}$, de densité identique, $\rho_{Ref}$, du produit de référence ; et/ou
- pour lequel l'au moins un facteur de compensation (K) est déterminé en tenant compte du produit effectivement à mesurer, notamment de sa composition et/ou de ses propriétés thermodynamiques, notamment pendant un étalonnage du système de mesure avec un produit de référence connu et/ou pendant la mise en service sur site du système de mesure ; et/ou

- pour lequel l'électronique de mesure détermine l'au moins un facteur de compensation (K) sur la base d'une capacité de chaleur spécifique, $c_P$, du produit actuel, déterminée en dialogue avec l'utilisateur et/ou à l'extérieur de l'électronique de mesure ; et/ou

- pour lequel l'électronique de mesure comprend une mémoire de données, laquelle met à disposition l'au moins un facteur de compensation (K), mémoire notamment conçue en tant que mémoire tabellaire et/ou non volatile et/ou mettant à disposition un grand nombre de facteurs de compensation déterminés au préalable pour différents produits ou pour différentes situations de montage.

13. Système de mesure selon l'une des revendications précédentes, pour lequel la conduite de process comprend sur le point de mesure de densité virtuel un calibre (D1), qui est différent d'un calibre (D2) de la conduite de process sur le point de mesure de pression ; notamment en ce sens

- que le calibre (D2) de la conduite de process sur le point de mesure de pression est supérieur au calibre (D1) de la conduite de process sur le point de mesure de densité virtuel ; et/ou

- qu'un rapport de calibres (D2/D1) du calibre (D2) de la conduite de process sur le point de mesure de pression est maintenu supérieur à 1,1 par rapport au calibre (D1) de la conduite de process sur le point de mesure de densité virtuel ; et/ou

- qu'un rapport de calibres (D2/D1) du calibre (D2) de la conduite de process sur le point de mesure de pression est maintenu inférieur à 5 par rapport au calibre (D1) de la conduite de process sur le point de mesure de densité virtuel ; et/ou

- qu'un rapport de calibres (D2/D1) du calibre (D2) de la conduite de process sur le point de mesure de pression par rapport au calibre (D1) de la conduite de process sur le point de mesure de densité virtuel est maintenu dans une plage comprise entre 1,2 et 3,1 ; et/ou

- que la conduite de process entre le point de mesure de densité virtuel et le point de mesure de pression présente un segment de conduite, qui est conçu en tant que diffuseur, notamment en forme d'entonnoir, avec un canal intérieur s'élargissant, notamment de façon continue, en direction de l'écoulement ; et/ou

- que la conduite de process entre le point de mesure de densité virtuel et le point de mesure de pression présente un segment de conduite, qui est conçu en tant que buse, notamment en forme d'entonnoir, avec un canal intérieur se rétrécissant, notamment de façon continue, en direction de l'écoulement.

14. Système de mesure selon l'une des revendications 1 à 12,

- pour lequel la conduite de process sur le point de mesure de densité virtuel présente un calibre (D1), qui est pour l'essentiel identique à un calibre (D2) de la conduite de process sur le point de mesure de pression ; et/ou

- pour lequel la conduite de process sur le point de mesure de densité virtuel présente un calibre (D1), qui est pour l'essentiel identique à un calibre (D3) de la conduite de process sur le point de mesure de température.

15. Système de mesure selon l'une des revendications 1 à 13, pour lequel la conduite de process sur le point de mesure de densité virtuel présente un calibre (D1), qui est différent d'un calibre (D3) de la conduite de processus sur le point de mesure de température ; notamment en ce sens

- que le calibre (D3) de la conduite de processus sur le point de mesure de température est supérieur au calibre (D1) sur le point de mesure de densité virtuel ; et/ou

- qu'un rapport de calibres (D3/D1) du calibre (D3) de la conduite de process sur le point de mesure de température est maintenu supérieur à 1,1 par rapport au calibre (D1) de la conduite de process sur le point de mesure de densité virtuel ; et/ou

- qu'un rapport de calibres (D3/D1) du calibre (D3) de la conduite de process sur le point de mesure de température est maintenu inférieur à 5 par rapport au calibre (D1) de la conduite de process sur le point de mesure de densité virtuel ; et/ou

- qu'un rapport de calibres (D3/D1) du calibre (D3) de la conduite de process sur le point de mesure de température par rapport au calibre (D1) de la conduite de process sur le point de mesure de densité virtuel est maintenu dans une plage comprise entre 1,2 et 3,1 ; et/ou

- que la conduite de process entre le point de mesure de densité virtuel et le point de mesure de température présente un segment de conduite, qui est conçu en tant que diffuseur, notamment en forme d'entonnoir, avec un canal intérieur s'élargissant, notamment de façon continue, en direction de l'écoulement ; et/ou

EP 2 162 706 B1

- que la conduite de process entre le point de mesure de densité virtuel et le point de mesure de température présente un segment de conduite, qui est conçu en tant que buse, notamment en forme d'entonnoir, avec un canal intérieur se rétrécissant, notamment de façon continue, en direction de l'écoulement.

**16.** Système de mesure selon l'une des revendications précédentes,

- pour lequel le point de mesure d'écoulement est disposé en amont du point de mesure de température et/ou en amont du point de mesure de pression ; et/ou
- pour lequel la conduite de process est conçue au moins partiellement, notamment au moins dans la zone du point de mesure de densité et/ou au moins dans la zone du point de mesure de pression, en tant que conduite pour l'essentiel indéformable au moins sous la pression de service, notamment rigide et/ou de section circulaire : et/ou
- pour lequel la conduite de process est conçue au moins partiellement, notamment au moins dans la zone du point de mesure de densité et/ou au moins dans la zone du point de mesure de pression, en tant que conduite pour l'essentiel droite, notamment de section circulaire ; et/ou
- pour lequel le point de mesure de densité est défini en amont du point de mesure de température et/ou en amont du point de mesure de pression ; et/ou
- pour lequel le point de mesure de pression est disposé en aval du point de mesure de température ; et/ou
- pour lequel une distance (L21) du point de mesure de pression par rapport au point de mesure de densité virtuel est différente d'une distance (L31) du point de mesure de température par rapport au point de mesure de densité virtuel ; et/ou
- pour lequel une distance (L21) du point de mesure de pression par rapport au point de mesure de densité virtuel est supérieure à une distance (L31) du point de mesure de température par rapport au point de mesure de densité virtuel ; et/ou
- pour lequel une distance (L21) du point de mesure de pression par rapport au point de mesure de densité virtuel est supérieure à un calibre (D2) de la conduite de process sur le point de mesure de pression et/ou pour lequel une distance (L23) du point de mesure de pression par rapport au point de mesure de température est supérieure à un calibre (D2) de la conduite de process sur le point de mesure de pression, notamment en ce sens qu'une distance (L21) sur le point de mesure de pression par rapport au point de mesure de densité virtuel correspond au moins au triple, de préférence à plus du quintuple, à un calibre (D2) de la conduite de process sur le point de mesure de pression, et/ou qu'une distance (L23) du point de mesure de pression par rapport au point de mesure de température correspond au moins au triple, de préférence à plus du quintuple, à un calibre (D2) de la conduite de process sur le point de mesure de pression.

Fig. 1

Fig. 2

Fig. 3a

Fig. 3b

Fig. 4a

Fig. 4e

Fig. 4b

Fig. 4f

Fig. 4c

Fig. 4g

Fig. 4d

Fig. 4h

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- EP 666468 A
- EP 1039269 A
- US 6031740 A
- US 5540103 A
- US 5351554 A
- US 4563904 A
- US 6397683 B
- US 6330831 B
- US 6293156 B
- US 6189389 B
- US 5531124 A
- US 5463905 A
- US 5131279 A
- US 4787252 A
- EP 605944 A
- EP 984248 A
- EP 1767908 A
- GB 2142725 A
- US 4308754 A
- US 4420983 A
- US 4468971 A
- US 4524610 A
- US 4716770 A
- US 4768384 A
- US 5052229 A
- US 5052230 A
- US 5231884 A
- US 5359881 A
- US 5458005 A
- US 5469748 A
- US 5687100 A
- US 5796011 A
- US 5808209 A
- US 6003384 A
- US 6053054 A
- US 6006609 A
- US 6352000 B

- US 6513393 B
- US 6644132 B
- US 6651513 B
- US 6651512 B
- US 6880410 B
- US 6910387 B
- US 6938496 B
- US 6988418 B
- US 7007556 B
- US 7010366 B
- US 20020096208 A
- US 20040255695 A
- US 20050092101 A
- US 20060266127 A
- WO 8802476 A
- WO 8802853 A
- WO 9508758 A
- WO 9516897 A
- WO 9725595 A
- WO 9746851 A
- WO 9843051 A
- WO 0036379 A
- WO 0014485 A
- WO 0102816 A
- WO 02086426 A
- WO 04023081 A
- WO 04081500 A
- WO 05095902 A
- DE 102006034296
- DE 102006047815
- US 6397683 A
- EP 903651 A
- EP 1008836 A
- US 6352000 A
- WO 9748970 A
- WO 03098154 A
- WO 2004023081 A

### In der Beschreibung aufgeführte Nicht-Patentliteratur

- IAWPS Industrial Formulation 1997 for the Thermodynamic Properties of Water and Steam. *International Association for the Properties of Water and Steam (IAWPS-IF97)*
- A.G.A. Manual for the Determination of Supercompressibility Factors for Natural Gas - PAR Research Project NX-19. AGA-NX19, Library of Congress No. 63-23358. Amercian Gas Association

- A.G.A. Compressibility Factors for Natural Gas and Other Related Hydrocarbon Gases. *Amercian Gas Association Transmission Measurement Committee Report No. 8*
- High Accuracy Compressibility Factor Calculation for Natural Gases and Similar Mixtures by Use of a Truncated Viral Equation. *GERG Technical Monograph TM2 1998 & Fortschritt-Berichte VDI,* 1998